(19) Europäisches Patentamt
European Patent Office
Office européen des brevets

(11) EP 2 626 384 A1

(12) EUROPÄISCHE PATENTANMELDUNG

(43) Veröffentlichungstag:
**14.08.2013 Patentblatt 2013/33**

(21) Anmeldenummer: **12154896.0**

(22) Anmeldetag: **10.02.2012**

(51) Int Cl.:
***C08K 5/00*** *(2006.01)*
***C08K 5/548*** *(2006.01)*
***C08L 7/00*** *(2006.01)*
***C08L 9/00*** *(2006.01)*
***B60C 1/00*** *(2006.01)*
***C08L 19/00*** *(2006.01)*
***C08L 9/06*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Lanxess Deutschland GmbH**
**51368 Leverkusen (DE)**

(72) Erfinder: **Die Erfindernennung liegt noch nicht vor**

(54) **Mikrogelhaltige Laufflächenmischung für Winterreifen**

(57) Die vorliegende Erfindung betrifft vulkanisierbare Kautschukmischungen enthaltend mindestens folgende Komponenten
I.) 100 Gew.-Teile einer ölfreien Kautschukmatrix bestehend aus
a) 15 bis 79 Gew.-Teile, vorzugsweise 20 bis 70 Gew.-Teile von mindestens einem Lösungs-SBR (L-SBR) (ölfrei) mit einer Glasübergangstemperatur ($Tg_{(L-SBR)}$) zwischen -70°C bis -10°C,
b) 20 bis 75 Gew.-Teile, vorzugsweise 25 bis 70 Gew.-Teile von mindestens einem 1,4-cis-Polybutadien (BR) (ölfrei) mit einer Glasübergangstemperatur ($Tg_{(BR)}$) zwischen -95°C bis -115°C,
c) 1 bis 37,5 Gew.-Teile, vorzugsweise 5 bis 35 Gew.-Teile Naturkautschuk (NR) (ölfrei)und/oder mindestens ein synthetisch hergestelltes Polyisopren (IR) mit einer Glasübergangstemperatur ($Tg_{(NR)}$) zwischen -50°C bis -75°C bezogen auf den ölfreien Naturkautschuk (NR) oder das ölfreie, synthetisch hergestellte Polyisopren (IR),

II.) mindestens ein hydroxylgruppenhaltiges Mikrogel auf Polybutadienbasis,
III.) mindestens einen hydroxylgruppenhaltigen, oxidischen Füllstoff,
IV.) mindestens ein polysulfidhaltiges Alkoxysilan,
V.) mindestens ein Vulkanisationsmittel,
VI.) ggf. mindestens ein Kautschukadditiv.

EP 2 626 384 A1

## Beschreibung

Die vorliegende Erfindung betrifft vulkanisierbare Kautschukmischungen und hieraus hergestellte Vulkanisate, die sich für die Herstellung von spikesfreien (studless) Laufflächen für Winterreifen eignen.

Spikes sind Stahl- oder Hartmetallstifte, die in die Lauffläche von Winterreifen einvulkanisiert werden. Sie ragen aus der Oberfläche der Lauffläche heraus und sorgen für eine bessere Reifenhaftung auf glatten oder schneebedeckten Fahrbahnen. Jedoch können sie die Fahrbahndecke bei Tauwetter oder bei schneefreien Straßen beschädigen, so dass die Benutzung derartiger Winterreifen in vielen Ländern gänzlich verboten oder nur unter bestimmten Bedingungen erlaubt ist.

Durch das Verbot von Spikes für Winterreifen in vielen Ländern Europas und auch in Japan, haben sowohl das Design von Laufflächenprofilen für Winterreifen als auch die Optimierung von Kautschukmischungen für Winterreifen an Bedeutung gewonnen. Allerdings ist trotz aller Bemühungen der heute erreichte Stand der Technik noch nicht zufriedenstellend, insbesondere da Reifenlaufflächen mit gutem Griff auf Eis und Schnee Defizite bei der Reversionsbeständigkeit der Kautschukmischungen und/oder beim Rollwiderstand und/oder bei der Abriebbeständigkeit aufweisen.

Aus dem Stand der Technik sind folgende Schutzrechte bekannt, die sich ausschließlich mit dem Design von Laufflächenprofilen für Winterreifen beschäftigen, WO 2009/077231 A1, WO 2009/059849 A1, WO 2011/0365440, WO 2010/136989 A1 und EP 1 088 685 A1.

In folgenden Anmeldungen werden Kautschukmischungen für Winterreifen behandelt. In DE 24 47 614 werden Laufflächenmischungen beschrieben, die aus Polybutadien bzw. aus Polybutadien in Kombination mit einem Synthesekautschuk und/oder mit Naturkautschuk bestehen. Als Füllstoffe werden Kieselsäure bzw. Kieselsäure und Ruß eingesetzt. Die Kieselsäure wird mit einem Bis-[alkoxysilylalkyl]-oligosulfid aktiviert. Die hierbei erhaltenen Reifenlaufflächen zeichnen sich im Vergleich mit rußgefüllten durch ein verbessertes Brems- und Beschleunigungsverhalten auf Eis aus. Jedoch wird das Verhältnis des Synthesekautschuks zu Naturkautschuk nicht spezifiziert.

In DE 10 2009 033 611 A1 werden Mischungen für Winterreifen beschrieben, die eine hohe Reversionsbeständigkeit, eine gute Bremskraft und eine hohe Steuerungsstabilität auf Eis und Schnee sowie einen hohen Abriebwiderstand aufweisen. Für die Herstellung der Kautschukmischungen werden Naturkautschuk oder Polyisoprenkautschuk in Kombination mit Polybutadien eingesetzt. Als Füllstoffe werden Mischungen von Ruß und Kieselsäure in Kombination mit handelsüblichen Silankupplern sowie Zinkoxidwhiskern in Mengen von 0,3 bis 30 Gew.-Teilen eingesetzt, wobei bestimmte Grenzen für die Nadelfaserlänge und den Nadelfaserdurchmesser der Zinkoxidwhisker eingehalten werden. Zur Erzielung der positiven Vulkanisateigenschaften ist es wichtig, die Vulkanisation mit ungewöhnlich niedrigen Schwefelmengen von 0,5 bis 0,75 Gew.-Teilen bezogen auf 100 Gew.-Teile der Kautschuke durchzuführen.

Auch die Verwendung sogenannter Mikrogele oder Kautschukgele in Kautschukmischungen, die für die Herstellung verschiedener Reifenbauteile und Reifenlaufflächen eingesetzt werden, ist bekannt.

In EP 0 575 851 A1 werden Kautschukmischungen und Vulkanisate, die ein Mikrogel auf Polybutadienbasis ohne funktionelle Gruppen enthalten, beschrieben. Die Vulkanisate zeichnen sich durch niedrige Hystereseverluste und eine hohe Abriebbeständigkeit aus. Es gibt keine Beispiele, in denen als Kautschukmatrix eine Kombination von NR/BR/SBR, Kieselsäuren und Silankupplungsmitteln eingesetzt werden. In EP 0 575 851 A1 wird zwar darauf hingewiesen, dass sich die Mischungen für die Herstellung von Reifen eignen; es fehlt aber eine konkrete Lehre für die Verwendung der Mischungen als Laufflächen für Winterreifen.

EP 1 063 259 A1 lehrt die Herstellung mikrogelhaltiger Kautschukmischungen und hieraus hergestellter Vulkanisate unter Verwendung schwefelhaltiger Organosiliciumverbindungen. Durch den Zusatz siliciumhaltiger Organosiliciumverbindungen zu den mikrogelhaltigen Kautschukmischungen wird eine Verbesserung der mechanischen Eigenschaften und des DIN-Abriebwiderstands ohne Verschlechterung der Rollwiderstands/Naßrutschfestigkeits-Relation von Laufflächencompounds erreicht. Darin wird wohl darauf hingewiesen, dass sich die Mischungen für die Herstellung von Reifen und insbesondere von Reifenlaufflächen eignen; es fehlen allerdings konkrete Hinweise für die Gestaltung der Kautschukmischungen im Hinblick auf die Herstellung von Winterreifenlaufflächen.

US 6,809,146 lehrt die Herstellung ruß- und kieselsäuregefüllter Kautschukmischungen auf der Basis von Lösungs-SBR, wobei zusätzlich zum L-SBR NR bzw. IR und BR eingesetzt werden können. Die in der Kautschukmischung eingesetzte Kieselsäure wird teilweise durch 0,1 bis 5 Gew. eines Mikrogels auf der Basis von BR-, SBR NBR etc. substituiert, wobei das Mikrogel auch funktionelle Gruppen wie Hydroxyl-, Carboxyl-, Amnino-, Diethylamino-, Vinylpyridin-, Chloromethylphenyl- oder Epoxy-Gruppen enthalten kann. Zusätzlich zur Kieselsäure wird ein Silan eingesetzt. In den Beispielen werden ausschließlich Mischungen von L-SBR und NdBR eingesetzt, wobei BR-Mikrogele ohne funktionelle Gruppen und hydroxylgruppenhaltige SBR-Mikrogele eingesetzt werden. Es fehlen allerdings auch hier konkrete Hinweise für die Gestaltung der Kautschukmischungen im Hinblick auf die Herstellung von Winterreifenlaufflächen.

Nach der Lehre von EP 2 311 907 A1 werden in kieselsäurefefüllten Mischungen doppelbindungshaltiger Kautschuke, die außerdem ein hydroxylgruppenhaltiges Mikrogel und ein polysulfidhaltiges Alkoxysilan enthalten, allergieauslösende Guanidine durch Polythiophosphorverbindungen ersetzt. Die Mischungen weisen eine hohe Verarbeitungssicherheit und eine gute Vulkanisationscharakteristik auf. Nach der Vulkanisation zeigen die Vulkanisate bei hoher Vernetzungsdichte gute mechanische und physikalische Eigenschaften. Die Mischungen werden für die Herstellung von Reifen und für verschiedene Reifenbauteile eingesetzt. In den Beispielen werden Mischungen von L-SBR und BR eingesetzt. Des Weiteren fehlt darin eine Lehre, in welchen Mengenverhältnissen BR, L-SBR und NR bzw. IR einzusetzen sind, um gute Eigenschaften als Laufflächen für Winterreifen zu erzielen.

In EP 1 935 668 A1 wird ein pneumatischer Reifen beschrieben, dessen Seitenwand aus einer Kautschukmischung aus Naturkautschuk und Polybutadienkautschuk besteht. Die Kautschukmischung enthält außerdem Kieselsäure und ein Kautschukgel, das in einer bevorzugten Ausführung aus Polybutadien besteht und gegebenenfalls funktionelle Gruppen enthält. Die Reifenseitenwände zeichnen sich aufgrund eines hohen 300% Moduls durch hohe Funktionstüchtigkeit, aufgrund einer hohen Rückprallelastizität durch niedrige Hystereseverluste und aufgrund eines verbesserten Abriebwiderstands durch hohe Haltbarkeit aus.

In EP 1 241 219 A1 werden pneumatische Reifen beschrieben, die eine Kautschukkomponente enthalten, die aus Kautschukgel, syndiotaktischem 1,2-Polybutadien und einem doppelbindungshaltigem Kautschuk bestehen. Die doppelbindungshaltigen Kautschuke werden ausgewählt aus IR bzw. NR, 3,4-Polyisopren, L-SBR, E-SBR, BR und NBR, wobei die Kautschuke alleine oder als Blend aus zwei oder mehreren doppelbindungshaltigen Kautschuken eingesetzt werden. Die Kautschukkomponente kann in Reifen für PKWs, Motorräder, Flugzeuge, Landwirtschaftsfahrzeuge, Erdbewegungsfahrzeuge, Geländefahrzeuge sowie LKW-Reifen Verwendung finden. In EP 1 241 219 A1 gibt es keinen Hinweis auf den Einsatz mikrogelhaltiger Kautschukmischungen für Winterreifen.

Es wurde bisher keine Laufflächenmischungen beschrieben, die BR-Gel, Kieselsäure, Lösungs-SBR, Hoch-cis-1,4-BR und Naturkautschuk und/oder synthetisch hergestelltes Polyisopren enthalten, die sich für die Herstellung von Winterreifen eignen und die sowohl eine hohe Reversionsbeständigkeit bei der Vulkanisation als auch im Temperaturbereich -60°C bis 0°C einen guten Griff auf Eis und Schnee, einen niedrigen Rollwiderstand sowie einen hohen Abriebwiderstand aufweisen.

Die Aufgabe bestand daher darin, eine Kautschukmischung für die Herstellung von WinterreifenLaufflächen bereitzustellen, die bei der Vulkanisation reversionsbeständig ist und im vulkanisierten Zustand im Temperaturbereich -60°C bis 0°C einen verbesserten Griff auf Eis und Schnee sowie einen hohen Abriebwiderstand und einen niedrigen Rollwiderstand aufweist.

Ein niedriger Speichermodul (E') im Bereich von -60°C bis -10°C ist ein Indiz für einen verbesserten Griff auf Eis und Schnee. Ein niedriger DIN-Abrieb ist ein Indiz für einen hohen Abriebwiderstand. Ein niedriger tan $\delta$-Wert bei 60°C weist auf einen niedrigen Rollwiderstand hin.

Es wurde überraschend gefunden, dass dieses Ziel mit vulkanisierbaren Kautschukmischungen aus enthaltend mindestens folgende Komponenten

I.) 100 Gew.-Teile einer ölfreien Kautschukmatrix bestehend aus

a) 15 bis 79 Gew.-Teile, vorzugsweise 20 bis 70 Gew.-Teile, von mindestens einem Lösungs-SBR (ölfrei) mit einer Glasübergangstemperatur ($Tg_{(L-SBR)}$) zwischen -10°C bis -70°C,

b) 20 bis 75 Gew.-Teile, vorzugsweise 25 bis 70 Gew.-Teile, von mindestens einem 1,4-cis-Polybutadien (BR) (ölfrei) mit einer Glasübergangstemperatur ($Tg_{(BR)}$) zwischen - 100°C bis -115°C,

c) 1 bis 37,5 Gew.-Teile, vorzugsweise 5 bis 35 Gew.-Teile, Naturkautschuk (NR) (ölfrei) und/oder mindestens ein synthetische hergestelltes Polyisopren (IR) mit einer Glasübergangstemperatur ($Tg_{(NR)}$) zwischen -50°C bis -75°C bezogen auf den ölfreien Naturkautschuk (NR) oder synthetisch hergestelltes Polyisopren (IR),

II.) mindestens ein hydroxylgruppenhaltiges Mikrogel auf Polybutadienbasis,

III.) mindestens einen hydroxylgruppenhaltigen, oxidischen Füllstoff,

IV.) mindestens ein polysulfidhaltiges Alkoxysilan,

V.) mindestens ein Vulkanisationsmittel,

VI.) ggf. mindestens ein Kautschukadditiv

erreicht wird.

Die Summe der Gewichtsanteile der unter Ia), Ib) und Ic) genannten Kautschuke für die Kautschukmatrix addiert sich auf 100 Gew.-Teile (ohne Öl), wobei nicht ausgeschlossen wird, dass auch ölverstreckte Kautschuke eingesetzt

werden. Sämtliche anderen Mischungsbestandteile und Zusatzstoffe werden nachfolgend auf 100 Gew.-Teile der Kautschukmatrix bezogen.

Die Glasübergangstemperatur der ölfreien Kautschukmatrix $Tg_{(Matrix)}$ wird mit folgender allgemeinen Gleichung berechnet:

$$Tg_{(Matrix)} = \Sigma\, X_{(KA\,1)} \times Tg_{(KA\,1)} + X_{(KA\,2)} \times Tg_{(KA\,2)} + X_{(KA\,n)} \times Tg_{(KA\,n)}$$

wobei:

X den Gewichtsanteil der ölfreien Kautschuke KA1, KA2 und KAn und
Tg die Glasübergangstemperatur der ölfreien Kautschuke KA1, KA2 und KAn darstellt.

Bei Verwendung der ölfreien Kautschuke Ia), Ib) und Ic) stellt sich die Gleichung folgendermaßen dar:

$$Tg_{(Matrix)} = X_{(BR)} \times Tg_{(BR)} + X_{(L\text{-}SBR)} \times Tg_{(L\text{-}SBR)} + X_{(NR)} \times Tg_{(NR)}$$

Es bedeuten:

| | |
|---|---|
| Glasübergangstemperatur der Kautschukmatrix (ölfrei) | $Tg_{(Matrix)}$ |
| Gewichtsanteil von 1,4-cis-Polybutadien (ölfrei) | $X_{(BR)}$ |
| Gewichtsanteil von L-SBR (ölfrei) | $X_{(L\text{-}SBR)}$ |
| Gewichtsanteil von NR bzw. IR (ölfrei) | $X_{(NR)}$ |
| Glasübergangstemperatur von 1,4-cis-Polybutadien (ölfrei) | $Tg_{(BR)}$ |
| Glasübergangstemperatur von L-SBR (ölfrei) | $Tg_{(L\text{-}SBR)}$ |
| Glasübergangstemperatur von NR (ölfrei) | $Tg_{(NR)}$ |

Werden mehrere Kautschuke desselben Typs, aber mit unterschiedlicher Glasübergangstemperatur verwendet z. B. unterschiedliche Lösungs-SBR-Typen oder unterschiedliche 1,4-cis-Polybutadientypen, so werden bei der Berechnung der Glasübergangstemperatur der Kautschukmatrix die Gewichtsanteile und die Glasübergangstemperaturen jeder einzelnen Kautschukkomponente entsprechend obiger Gleichung berücksichtigt. Die erfindungsgemäßen Glasübergangstemperaturen der ölfreien Kautschukmatrix liegen zwischen -70°C bis -90°C.

Die Glasübergangstemperaturen der Kautschuke werden mittels DSC (Differential Scanning Calorimetry) nach DIN EN ISO 11357-1 und DIN EN 61006 bestimmt. Die Temperaturkalibrierung erfolgt mittels der Onsettemperaturen des fest-flüssig Übergangs (Abweichungen von der Anfangsbasislinie und der ansteigenden Schmelzkurve) von Indium (156,6°C) und von Blei (328°C). Vor Beginn des 1. Aufheizzyklus wird die Probe mit flüssigem Stickstoff mit einer Abkühlgeschwindigkeit von 320K/min auf -130°C abgekühlt. Die anschließende Aufheizung erfolgt unter Spülung mit Stickstoffgas bei einer Heizrate von 20K/min bis zu einer Temperatur von 150°C. Danach wird die Probe mit flüssigem Stickstoff auf -130°C abgekühlt und mit 20K/min erwärmt. Für die Auswertung wird das Thermogramm der 2. Aufheizung herangezogen. Die Auswertung erfolgt grafisch durch Anlegen von drei Geraden (siehe Abb. 1). Die Glasübergangstemperatur Tg wird als Mittelpunktstemperatur der Schnittpunkte Y und Z erhalten.

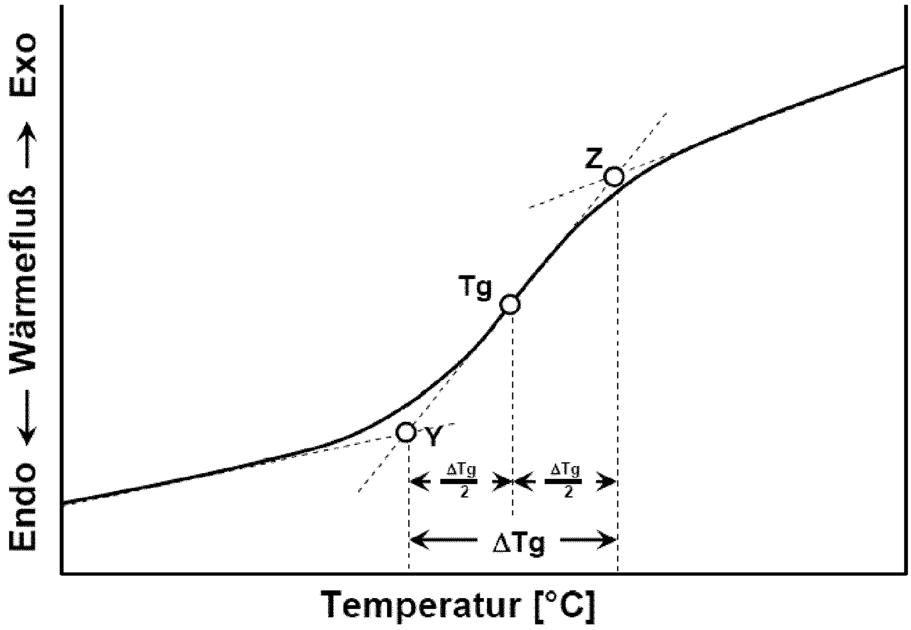


Abb. 1

Für die Bestimmung der Glasübergangstemperatur ölverstreckter Kautschuke muss das Öl aus dem Kautschuk entfernt werden. Die Ölentfernung kann durch erschöpfende Extraktion mit Methanol in einem Soxhlet-Extraktor erfolgen, wobei vor der Bestimmung der Glasübergangstemperatur das anhaftende Aceton unter Vakuum bis zur Gewichtskonstanz entfernt wird. Alternativ kann das Öl auch durch Umfällung einer toluolischen Kautschuklösung mit Hilfe von Methanol entfernt werden. Hiefür wird der ölverstreckte Kautschuk kleingeschnitten und bei Raumtemperatur unter Rühren in Toluol gelöst (1 g Kautschuk gelöst in 50 g Toluol). Danach wird die toluolische Kautschuklösung langsam in 500 g Methanol unter Rühren bei Raumtemperatur eingetropft. Der koagulierte Kautschuk wird isoliert, das anhaftende Lösungsmittel mechanisch abgepresst und anschließend im Vakuum bis zur Gewichtskonstanz getrocknet.

Unter **Lösungs-SBR Ia**) versteht man Kautschuke, die in einem Lösungsprozess auf der Basis von Vinylaromaten und Dienen, bevorzugt konjugierten Dienen hergestellt werden (H. L. Hsieh, R. P. Quirk, Marcel Dekker Inc. New York-Basel 1996, S. 447-469; Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 240-364). Geeignete vinylaromatische Monomere sind Styrol, o-, m- und p- Methylstyrol, technische Methylstyrolgemische, p-tert.-Butylstyrol, $\alpha$-Methylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat liegt bevorzugt im Bereich von 5 bis 50 Gew.-%, besonders bevorzugt im Bereich von 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen liegt im Bereich von 50 bis 95 Gew. %, bevorzugt im Bereich von 60 bis 90 Gew. %. Der Gehalt an Vinylgruppen im einpolymerisierten Dien liegt im Bereich von 10 bis 90 %, der Gehalt an 1,4-trans-ständigen Doppelbindungen liegt im Bereich von 10 bis 80 % und der Gehalt an 1,4-cis ständigen Doppelbindungen ist komplementär zur Summe aus Vinylgruppen und 1,4-trans-ständigen Doppelbindungen. Der Vinylgehalt des L-SBR beträgt vorzugsweise > 10 %.

Üblicherweise sind die polymerisierten Monomeren und die unterschiedlichen Dien-Konfigurationen statistisch im Polymeren verteilt.

Lösungs-SBR kann sowohl linear als auch verzweigt oder endgruppenmodifiziert sein. Beispielsweise sind derartige Typen in DE 2 034 989 C2 und JP-A-56-104 906 genannt. Als Verzweigungsmittel wird bevorzugt Siliciumtetrachlorid oder. Zinntetrachlorid eingesetzt.

Die Herstellung dieser Vinylaromat/Dien-Kautschuke als Kautschukkomponente Ia) für die erfindungsgemäßen Kautschukmischungen erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Dien-Kautschuke besitzen Mooneyviskositäten (ML 1+4 bei 100°C) im Bereich von 20 bis 150 Mooneyeinheiten (ME), vorzugsweise im Bereich von 30 bis 100 Mooneyeinheiten. Insbesondere die hochmolekularen L-SBR-Typen mit MooneyViskositäten von > 80 ME können Öle in Mengen von 30 bis

100 Gew.-Teile bezogen auf 100 Gew.-Teile Kautschuk enthalten. Ölfreie L-SBR-Kautschuke weisen Glasübergangstemperaturen im Bereich von -70°C bis -10° C auf, bestimmt durch Differentialthermoanalyse (DSC).

Lösungs-SBR wird besonders bevorzugt in Mengen von 25 bis 65 Gew.-Teilen bezogen auf 100 Gew.-Teile der ölfreien Kautschukmatrix eingesetzt.

**b) 1,4-cis-Polybutadien** (BR) umfasst insbesondere Polybutadientypen mit einen 1,4-cis-Gehalt von mindestens 90 Mol% auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt (Houben-Weyl, Methoden der Organischen Chemie, Thieme Verlag, Stuttgart, 1987, Band E 20, Seiten 798 bis 812; Ullmann's Encyclopedia of Industrial Chemistry, Vol A 23, Rubber 3. Synthetic, VCH Verlagsgesellschaft mbH, D-69451 Weinheim, 1993, S. 239-364). Die 1,4-cis-Polybutadiene (BR) weisen Glasübergangstemperaturen im Bereich von -95°C bis -115° C auf, bestimmt durch Differentialthermoanalyse (DSC). Die Glasübergangstemperaturen für die bevorzugten Polybutadientypen (ölfrei) betragen (bestimmt mittels DSC):

Ti-BR: -103°C

Co-BR: -107°C

Ni-BR: -107°C

Nd-BR: -109°C

Die in Lösung polymerisierten BR-Typen besitzen Mooneyviskositäten (ML1+4 bei 100°C) im Bereich 20 bis 150 Mooneyeinheiten (ME), vorzugsweise im Bereich 30 bis 100 Mooneyeinheiten. Insbesondere die hochmolekularen BR-Typen mit Mooneyviskositäten > 80 ME können Öle in Mengen von 30 bis 100 Gew.-Teilen bezogen auf 100 Gew.-Teile Kautschuk enthalten.

1,4.cis-Polybutadien wird besonders bevorzugt in Mengen von 35 bis 65 Gew.-Teilen bezogen auf 100 Gew.-Teile der ölfreien Kautschukmatrix eingesetzt.

**c) Naturkautschuk (NR) oder synthetisch hergestelltes Polyisopren (IR):**

Polyisopren (IR) hat typischerweise einen 1,4-cis-Gehalt von mindestens 70 Mol%. Unter den Begriff IR fallen sowohl synthetisch hergestelltes 1,4-cis-Polyisopren als auch Naturkautschuk (NR).

Synthetisch wird IR sowohl mittels Lithium- als auch mit Hilfe von Ziegler/Natta-Katalysatoren hergestellt, vorzugsweise mit Titan- und Neodymkatalysatoren (Houben-Weyl, Methoden der Organischen Chemie, Thieme Verlag, Stuttgart, 1987, Band E 20, Seiten 114 - 134; Ullmann's Encyclopedia of Industrial Chemistry, Vol. A 23, Rubber 3. Synthetic, VCH Verlagsgesellschaft mbH, D-69451 Weinheim, 1993, S. 239-364). Für die Herstellung von synthetisch hergestelltem Polyisopren mittels Katalysatorsystemen auf Neodymbasis wird insbesondere auf WO 02/38635 A1 und WO 02/48218 A1 hingewiesen.

Als 1,4-cis-Polyisopren wird vorzugsweise Naturkautschuk eingesetzt, wobei NR-Qualitäten wie Ribbed Smoked Sheet (RSS), Air dried sheets (ADS) und pale crepe sowie technisch standardisierte Qualitäten wie TSR 5, TSR 10, TSR 20 und TSR 50 unabhängig von der Provenienz geeignet sind. Vor dem Einsatz wird der Naturkautschuk mastiziert.

Auch CV-Qualitäten ("constant viscosity"), die ohne vorhergehende Mastikation eingesetzt werden, sind geeignet.

Ölfreier NR oder IR weist Glasübergangstemperaturen im Bereich von -50°C bis -75° C auf, bestimmt durch Differentialthermoanalyse (DSC).

Naturkautschuk oder Polyisopren wird besonders bevorzugt in Mengen von 10 bis 30 Gew.-Teilen bezogen auf 100 Gew.-Teile der ölfreien Kautschukmatrix eingesetzt.

**II.) Hydroxylgruppenhaltiges Mikrogel auf Polybutadien-Basis**

Als Komponente II.) wird mindestens ein hydroxylgruppenhaltiges Mikrogel auf Polybutadienbasis eingesetzt.

Hydroxylgruppenhaltige Mikrogele auf Polybutadienbasis im Sinne dieser Erfindung weisen Wiederholungeinheiten von mindestens einem konjugierten Dien (A), mindestens einem vernetzenden Monomer (B) und mindestens einem hydroxylgruppenhaltigen Monomer (C) auf.

Als konjugierte Diene (A) werden vorzugsweise 1,3-Butadien, Isopren und 2,3-Dimethyl-1,3-butadien verwendet. Bevorzugt sind 1,3-Butadien und Isopren.

Es werden vorzugsweise 65 bis 94,9 Gew.-%, bevorzugt 72,5 bis 94,0 Gew.-%, besonders bevorzugt 80 bis 93,5 Gew.-%, des Diens (A), jeweils bezogen auf 100 Gew.-Teile der bei der Polymerisation verwendeten Monomeren, eingesetzt.

Als vernetzende Monomere (B) werden Monomere eingesetzt, die mindestens 2 Doppelbindungen im Molekül enthalten. Hierzu gehören die (Meth)acrylate von Diolen und mit 1 bis 20 Kohlenstoffatomen wie Ethandioldi(meth) acrylat, 1,2-Propandioldi(meth)acrylat, 1,3-Propandiol (meth)acrylat, 1,2-Butandioldi(meth)acrylat, 1,3-Butandioldi(meth)acrylat, 1,4-Butandiol-di(meth)acrylat, 1,6-Hexandioldi(meth)acrylat (B1), Polyethylengykoldi(meth)acrylate und Polypropylenglykoldi(meth)acrylate sowie Diole auf der Basis von Mischpolymerisaten von Ethylenoxid und Propylenoxid mit Polymerisationsgraden von 1 bis 25 (B2), Diole auf der Basis von polymerisiertem Tetrahydrofuran mit Polymerisationsgraden von 1 bis 25 (B3), die Bis- und Tris-(meth)acrylate von dreiwertigen Alkoholen wie Trimethylolpropandi (meth)acrylat, Trimethylolpropantri(meth)acrylat, Glycerindi(meth)acrylat und Glycerintri(meth)acrylat (B4), die Bis-, Tris- und Tetra-(meth)acrylate von vierwertigen Alkoholen wie Pentaerythritdi(meth)acrylat, Pentaerythrittri(meth)acrylat und Pentaerythrittetra(meth)acrylat (B5), aromatische Polyvinylverbindungen (B6) wie Divinylbenzol, Diisopropenylbenzol, Trivinylbenzol, sowie sonstige Verbindungen mit mindestens zwei Vinylgruppen wie Triallcyanurat, Triallylisocyanurat, Crotonsäurevinylester und Crotonsäureallylester (B7). Bevorzugt sind die Ester der (Meth)acrylsäure von Ethandiol, 1,3-Propandiol, 1,4-Butandiol, 1,6-Hexandiol, Trimethylolpropan, Pentaerythrit sowie die aromatische Polyvinylverbindung Divinylbenzol.

Die vernetzenden Monomeren (B) werden in einer Menge von 0,1 Gew.-% bis 15 Gew.-%, bevorzugt 0,5 bis 12,5 Gew.-%, besonders bevorzugt 1 bis 7,5 Gew.-%, jeweils bezogen auf 100 Gew.-Teile der bei der Polymerisation verwendeten Monomeren, eingesetzt.

Neben einer Reihe anderer Parameter, wie der bei der Polymerisation üblicherweise eingesetzten Reglermenge, des Polymerisationsumsatzes und der Polymerisationstemperatur, werden der Gelgehalt und der Quellungsindex der Mikrogele vor allem durch die Menge an vernetzendem Monomer (B) beeinflusst. Außerdem wird durch das Monomer (B) die Glasübergangstemperatur von entsprechenden unvernetzten, aus dem Monomeren (A) bestehenden, Homo- und/oder Copolymeren erhöht.

Als hydroxylgruppenhaltige Monomere (C) werden im Allgemeinen Hydroxyalkyl(meth)acrylate (C1), Hydroxyalkylcrotonate (C2), Mono(meth)acrylate von Polyolen (C3), hydroxylgruppenmodifizierte ungesättigte Amide (C4), hydroxylgruppenhaltige aromatische Vinylverbindungen (C5) sowie sonstige hydroxylgruppenhaltige Monomere (C6) eingesetzt.

Hydroxyalkyl(meth)acrylate (C1) sind beispielsweise 2-Hydroxyethyl(meth)acrylat, 3-Hydroxyethyl(meth)acrylat, 2-Hydroxpropyl(meth)acrylat, 3-Hydroxpropyl(meth)acrylat, 2-Hydroxybutyl-(meth)acrylat, 3-Hydroxybutyl(meth) acrylat und 4-Hydroxybutyl(meth)acrylat. Hydroxyalkylcrotonate (C2) sind beispielsweise 2-Hydroxyethylcrotonat, 3-Hydroxyethylcrotonat, 2-Hydroxpropylcrotonat, 3-Hydroxpropylcrotonat, 2-Hydroxybutylcrotonat, 3-Hydroxybutylcrotonat und 4-Hydroxybutylcrotonat.

Mono(meth)acrylate von Polyolen (C3) leiten sich von zwei- und mehrwertigen Alkoholen wie Ethylenglykol, Propandiol, Butandiol, Hexandiol, Trimethylolpropan, Glycerin, Pentaerythrit sowie von oligomerisiertem Ethylenglykol und Propylenglykol, die 1 bis 25 der genannten Glykoleinheiten enthalten, ab.

Hydroxylgruppenmodifizierte ungesättigte Amide (C4) sind beispielsweise Monomere wie N-Hydroxymethyl (meth)acrylamid, N-(2-Hydroxyethyl(meth)acrylamid und N,N-Bis(2-Hydroxyethyl) (meth)acrylamid.

Hydroxylgruppenhaltige aromatische Vinylverbindungen (C5) sind 2-Hydroxystyrol, 3-Hydroxystyrol, 4-Hydroxystyrol, 2-Hydroxy-$\alpha$-methylstyrol, 3-Hydroxy-$\alpha$-methylstyrol, 4-Hydroxy-$\alpha$-methylstyrol und 4-Vinylbenzylakohol.

Ein weiteres hydroxylgruppenhaltiges Monomer (C6) ist beispielsweise (Meth)allylalkohol.

Die hydroxylgruppenhaltigen Monomeren (C) werden in einer Menge von vorzugsweise 0,1 bis 20 Gew.-%, bevorzugt 0,5 bis 15 Gew.-%, besonders bevorzugt 1 bis 12,5 Gew.-%, jeweils bezogen auf 100 Gew.-Teile der bei der Polymerisation verwendeten Monomeren, eingesetzt.

Durch das Verhältnis der einpolymerisierten Monomeren (A), (B) und (C) wird die Glasübergangstemperatur des Mikrogels festgelegt. Für eine Abschätzung der Glasübergangstemperatur kann man von der Glasübergangstemperatur von Polybutadien, das durch Emulsionspolymerisation hergestellt wird, ausgehen. Diese beträgt ca. -82°C. Durch die Komponenten (B) und (C) wird die Glasübergangstemperatur je nach einpolymerisierter Menge erhöht, so dass die Glasübergangstemperatur des ölfreien hydroxylgrupppenhaltigen Mikrogels auf Polybutadienbasis zwischen -82°C bis -60°C, bevorzugt -65°C bis -82°C, besonders bevorzugt - 70°C bis -80°C liegt.

Die Mikrogel-Komponente II.) wird in Mengen von 1 bis 50 Gew.-Teile, vorzugsweise 2,5 bis 30 Gew.-Teile, besonders bevorzugt 5 bis 20 Gew.-Teile mindestens eines hydroxylgruppenhaltigen Mikrogels bezogen auf 100 Gew.-Teile ölfreie Kautschukmatrix, eingesetzt.

Die Mikrogel-Komponente II.) besitzt typischerweise einen Gelgehalt von mehr als 70 Gew.-%, vorzugsweise mehr als 75 Gew.-%, besonders bevorzugt mehr als 80 Gew.-%. Sie weist darüber hinaus einen Quellungsindex (Qi) in Toluol von im Allgemeinen weniger als 30, vorzugsweise weniger als 25, besonders bevorzugt weniger als 20, auf und verfügt über einen Gehalt einpolymerisierter hydroxylhaltiger Monomerer von größer als 0,1 Gew.-%. Die Hydroxylzahl der erhaltenen Mikrogele ist im Allgemeinen größer als 0,5.

Bevorzugt sind hydroxylhaltige Mikrogele auf Polybutadienbasis (II.) auf Basis der Monomere Butadien, Trimethylolpropantrimethacrylat und Hydroxyethylmethacrylat, sowie Mikrogele auf Basis Burtadien, Ethylenglykodimethacrylat und Hydroxypropymethacrylat.

Die Herstellung der hydroxylgruppenhaltigen Mikrogele erfolgt über eine übliche Emulsionspolymerisation der entsprechenden Monomere, vorzugsweise bei einer Temperatur von 10 bis 100 °C, besonders bevorzugt 12 bis 90 °C, insbesondere 15 bis 50 °C. Es ist möglich, die Emulsionspolymerisation in isothermer, teiladiabatischer oder volladiabatischer Fahrweise durchzuführen Die auf diese Weise erhaltenen Mikrogel-Latices besitzen ferner eine gute Scher- und Lagerstabilität. Im Anschluß an die Polymerisation werden die Mikrogellatices durch Sprühtrocknung oder durch Koagulation aufgearbeitet. Zweckmäßigerweise erfolgt die Latexkoagulation im Temperaturbereich 20 bis 100°C.

Geeignete Polymerisationsinitiatoren sind Verbindungen, die in Radikale zerfallen. Hierzu gehören Verbindungen, die eine -O-O- Einheit (Peroxo-Verbindungen), eine -O-O-H Einheit (Hydroperoxiyd), sowie eine -N=N- Einheit (Azoverbindung) enthalten. Auch eine Initiierung über Redoxsysteme ist möglich. Des Weiteren kann unter Zusatz von dem Fachmann bekannten Reglersubstanzen gearbeitet werden. Die Beendigung der Emulsionspolymerisation erfolgt durch dem Fachmann ebenfalls geläufige Stopper. Es hat sich ferner bewährt, die Emulsionspolymerisation unter Einsatz mindestens eines Salzes einer modifizierten Harzsäure (I) und mindestens eines Salzes einer Fettsäure (II) durchzuführen.

Modifizierte Harzsäuren sind dabei Verbindungen, die durch Dimerisierung, Disproportionierung und/oder Hydrierung von unmodifizierten Harzsäuren erhalten werden -Als unmodifizierte Harzsäuren sind beispielsweise Pimarsäure, Neoabietinsäure, Abietinsäure, Lävopimarsäure und Palustrinsäure geeignet. Bevorzugt ist die modifizierte Harzsäure eine disproportionierte Harzsäure (Ullmann's Encyclopedia of Industrial Chemistry, 6. Auflage, Band 31, S. 345-355), die kommerziell erhältlich ist. Die eingesetzten Harzsäuren sind aus Wurzeln, Kiefernbalsam und Tallöl gewonnene tricyclische Diterpencarbonsäuren. Diese können z.B. zu disproportionierten Harzsäuren umgearbeitet werden, wie es in W. Bardendrecht, L.T. Lees in Ullmanns Encyclopädie der Technischen Chemie, 4. Auflage, Bd. 12, 525 - 538, Verlag Chemie, Weinheim - New-York 1976 beschrieben ist. Daneben wird mindestens ein Salz einer Fettsäure eingesetzt. Diese enthalten vorzugsweise 6 bis 22 C-Atome, besonders bevorzugt 6 bis 18 C-Atome pro Molekül. Sie können vollständig gesättigt sein oder eine oder mehrere Doppelbindungen oder Dreifachbindungen im Molekül enthalten. Beispiele für solche Fettsäuren sind Capronsäure, Laurinsäure, Myristinsäure, Palmitinsäure, Stearinsäure, Ölsäure, Linolsäure und Linolensäure. Die Carbonsäuren können in einer weiteren Ausgestaltung der vorliegenden Erfindung auch in herkunftsspezifischen Mischungen, wie beispielsweise Castoröl, Baumwollsaat, Erdnussöl, Leinsamenöl, Kokosnussfett, Palmkernöl, Olivenöl, Rapsöl, Sojabohnenöl, Fischöl und Rindertalg, vorliegen (Ullmann's Encyclopedia of Industrial Chemistry, 6. Auflage, Band 13, S. 75-108). Bevorzugte Carbonsäuren leiten sich von Rindertalg ab und sind teilhydriert. Insbesondere bevorzugt ist daher die teilhydrierte Talgfettsäure. Sowohl die Harzsäuren als auch die Fettsäuren sind kommerziell als freie Carbonsäuren, in teil- oder vollneutralisierter Form erhältlich.

Die Harz- und Fettsäuren werden als Emulgator bei der Herstellung von Mikrogelen als Einzelkomponente oder gemeinsam eingesetzt, wobei die Menge an Harz- oder Fettsäure bzw. die Summe der Harz- und Fettsäure 2,2 bis 12,5 Gew.-Teile, bevorzugt 2,5 bis 10 Gew.-Teile, besonders bevorzugt 2,8 bis 7,5 Gew.-Teile, jeweils bezogen auf 100 Gew.-Teile der Monomermischung, beträgt.

Das Gewichtsverhältnis der Salze von Harzsäure (I) und Fettsäure (II) liegt vorzugsweise zwischen 0,05 : 1 und 15 : 1, besonders bevorzugt 0,08 : 1 und 12 : 1.

Für die Ermittlung des zur Herstellung der Salze bei der Polymerisation notwendigen Alkalizusatzes werden die zum Einsatz kommenden Harz- und Fettsäuren durch acidimetrische Titration charakterisiert). Auf diese Weise werden die Gehalte an freien Carbonsäuren und an Emulgatorsalzen ermittelt, um die für die gezielte Einstellung der Neutralisationsgrade der bei der Polymerisation eingesetzten Harz/Fettsäuregemische zu berechnen.

Für die Erzielung guter Latexstabilitäten ist der Neutralisationsgrad der Harz/Fettsäuremischung von Bedeutung. Der Neutralisationsgrad der Harzsäuren (I) und der Fettsäuren (II) beträgt vorzugsweise 104 bis 165 %, vorzugsweise 106 bis 160 %, besonders bevorzugt 110 bis 155 %, wobei unter einem Neutralisationsgrad von 100 % eine vollständige Salzbildung verstanden wird und bei einem Neutralisationsgrad von mehr als 100 % ein entsprechender Basenüberschuss verstanden wird.

Für die Neutralisation der Harz- und Fettsäuren können Basen, beispielsweise LiOH, NaOH, KOH, $NH_3$ und/oder $NH_4OH$ verwendet werden. Bevorzugt sind dabei Basen, welche keine schwerlöslichen Salze mit den Säuren bilden. Besonders bevorzugt als Basen sind LiOH, NaOH, KOH und $NH_4OH$.

Für Einzelheiten zur Herstellung lagerstabiler Mikrogellatices wird auf P001 00246 (EP 2 186 651) verwiesen.

Die hydroxylgruppenhaltige Mikrogele weisen eine durchschnittliche Teilchengröße von 10 nm bis 100 nm auf.

**III.) Hydroxylgruppen-haltiger oxidischer Füllstoff**

Erfindungsgemäß können ein oder mehrere helle verstärkende Füllstoffe als Komponente III.) verwendet werden. "Hell" im Sinne der Erfindung schließt insbesondere Ruß aus. Bei dem verstärkenden hellen Füllstoff handelt es sich vorzugsweise um Kieselsäure ($SiO_2$) oder Aluminiumoxid ($Al_20_3$) oder Gemischen davon.

Wird Kieselsäure oder "Silica" (Ullmann's Encyclopedia of Industrial Chemistry, VCH Verlagsgesellschaft mbH, D-69451 Weinheim, 1993, "Silica", S.635-647) verwendet, so handelt es sich um pyrogene (ibid. S. 635-647) oder um Fällungskieselsäure (ibid. 642-647). Fällungskieselsäuren werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen. Bevorzugt sind Fällungskieselsäuren mit spezifischen Oberflächen von 5 bis 1000 $m^2$/g, vorzugsweise von 20 bis 400 $m^2$/g, jeweils bestimmt nach BET. Für die Herstellung von Reifenlaufflächen mit geringem Rollwiderstand sind hochdispergierbare Fällungskieselsäuren bevorzugt. Beispiele für bevorzugte hochdispergierbare Kieselsäuren schließen beispielsweise ein: Perkasil® KS 430 (AKZO), BV 3380 und Ultrasil®7000 (Evonik-Degussa), Zeosil® 1165, MP 1115 MP und HRS 1200 MP (Rhodia), Hi-Sil 2000 (PPG), Zeopol® 8715, 8741 oder 8745 (Huber), Vulkasil® S, N und C von Lanxess und behandelte Fällungskieselsäuren wie beispielsweise mit Aluminium "dotierte" Kieselsäuren, die in der EP-A-0 735 088 beschrieben sind. Ein oder mehrere Kieselsäuretypen können verwendet werden.

Aluminiumoxid kann ebenfalls eingesetzt werden, beispielsweise als hochdispergierbares Aluminiumoxid wie in der EP-A-0 810 258 beschrieben. Beispiele schließen ein: A125 oder CR125 (Baikowski), APA- 1OORDX (Condea), Aluminiumoxid C (Degussa) und AKP-GO 15 (Sumitomo Chemicals).

Der helle verstärkende Füllstoff kann in Form von Pulvern, Mikroperlen, Granulaten oder Kugeln vorliegen. In einer bevorzugten Ausführungsform werden Kieselsäuren und/oder Aluminiumoxide verwendet. Besonders bevorzugt sind Kieselsäuren, insbesondere Fällungskieselsäuren.

Der Gesamtgehalt an hydroxylgruppenhaltigem oxidischen Füllstoff liegt üblicherweise im Bereich von 10 bis zu 150 Gew.-Teilen, vorzugsweise im Bereich von 20 bis 120 Gew.-Teilen, und besonders bevorzugt 25 bis 100 Gew.-Teilen bezogen auf 100 Gew.-Teile ölfreier Kautschukmatrix.

**IV.) polysulfidhaltige Alkoxysilane**

Bei den erfindungsgemäß eingesetzten polysulfidhaltigen Alkoxysilanen handelt es sich um sogenannte Kupplungsmittel zur Dispergierung und Einbindung des verstärkenden Füllstoffs in die Elastomermatrix. Diese tragen, wie dem Fachmann bekannt, zwei Arten von funktionellen Gruppen, die Alkoxysilylgruppe, die an den hellen Füllstoff bindet, und die schwefelhaltige Gruppe, die an das Elastomer bindet. Erfindungsgemäß können ein oder mehrere der polysulfidhaltigen Alkoxysilane in Kombination verwendet werden.

Als polysulfidhaltige Alkoxysilane sind solche der nachfolgenden Formeln (1) und (2) besonders geeignet, ohne dass die nachfolgenden Definitionen einschränkend zu verstehen sind. Bei denjenigen der Formel (1) handelt es sich um solche, die zu beiden Seiten des zentralen Schwefels eine entsprechend substituierte Silylgruppe tragen, während dies in der Formel (2) nur an einer Seite der Fall ist.

Einsetzbar sind somit polysulfidhaltige Alkoxysilane der allgemeinen Formeln (1) oder (2)

$$Z\text{-}A\text{-}S_x\text{-}A\text{-}Z \qquad (1)$$

$$Z\text{-}A\text{-}S_y\text{-}R^3 \qquad (2)$$

worin

x eine ganze Zahl von 2 bis 8 darstellt,

y eine ganze Zahl von 1 bis 8 darstellt,

A gleich oder verschieden sind und eine zweiwertige Kohlenwasserstoffgruppe ("Spacer") darstellen

Z gleich oder verschieden sind und eine der nachfolgend angegebenen Formeln besitzen

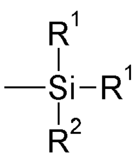
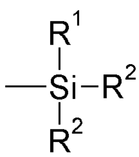
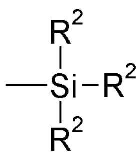

worin

$R^1$ gleich oder verschieden, substituiert oder unsubstituiert sein können und eine $C_1$-$C_{18}$ Alkylgruppe, eine $C_5$-$C_{18}$ Cycloalkylgruppe oder $C_6$-$C_{18}$ Arylgruppe darstellen und

$R^2$ gleich oder verschieden, substituiert oder unsubstituiert sein können und eine $C_1$-$C_{18}$ Alkoxygruppe, eine $C_5$-$C_{18}$ Cycloalkoxygruppe oder $C_6$-$C_{18}$ Aryloxygruppe darstellen, und

$R^3$ Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt $C_6$-$C_{20}$-Aryl und/oder einen Rest mit nachfolgenden Strukturen bedeutet

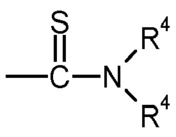 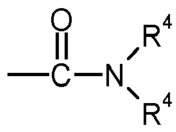 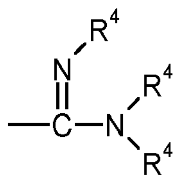

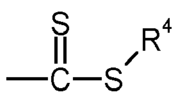 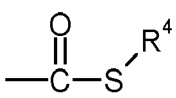 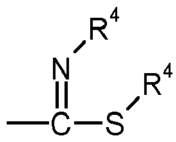

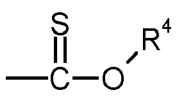 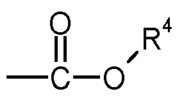 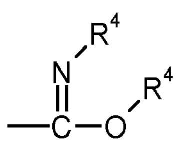

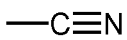 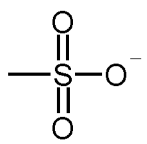 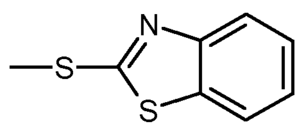

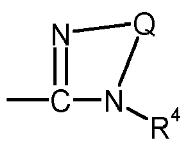 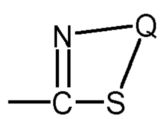 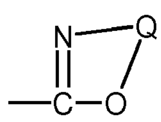

worin $R^4$ für einen aliphatischen, heteroaliphatischen, cycloaliphatischen, aromatischen oder heteroaromatischen Rest mit 1 bis 20, bevorzugt 1 bis 10, Kohlenstoffatomen und mit optional 1 bis 3 Heteroatomen, vorzugsweise Sauerstoff, Stickstoff oder Schwefel steht

In den polysulfidhaltigen Alkoxysilanen der allgemeinen Formel (1) ist die Zahl x vorzugsweise eine ganze Zahl von 2 bis 5. Im Falle eines Gemisches von polysulfidhaltigen Alkoxysilanen der oben angegebenen Formel (1), und insbesondere im Falle von üblichen, im Handel erhältlichen Gemischen, "x" ein Mittelwert, der vorzugsweise im Bereich von 2 bis 5 liegt und insbesondere in der Nähe von 2 oder 4. Die Erfindung kann vorteilhaft mit Alkoxysilansulfiden mit x=2 und x=4 durchgeführt werden.

In den polysulfidhaltigen Alkoxysilanen der allgemeinen Formeln (1) und (2) sind die substituierten oder unsubstituierten Gruppen A gleich oder verschieden und stehen vorzugsweise für eine zweiwertige aliphatische, heteroaliphatische, aromatische oder heteroaromatische Kohlenwasserstoffgruppe, die gesättigt oder ein- oder mehrfach ungesättigt ist und 1 bis 20, bevorzugt 1 bis 18 Kohlenstoffatome sowie optional 1 bis 3 Heteroatome, insbesondere Sauerstoff, Schwefel oder Stickstoff, aufweist. Als Gruppe A sind insbesondere $C_1$-$C_{18}$ Alkylengruppen oder $C_6$-$C_{12}$

Arylengruppen geeignet, besonders bevorzugt sind $C_1$-$C_{10}$ Alkylengruppen, insbesondere $C_2$-$C_4$ Alkylengruppen und ganz besonders bevorzugt Propylen.

In den polysulfidhaltigen Alkoxysilanen der allgemeinen Formeln (1) und (2) sind $R^1$ gleich oder verschieden und bedeuten vorzugsweise $C_1$-$C_6$ Alkyl, Cyclohexyl oder Phenyl, besonders bevorzugt $C_1$-$C_4$ Alkyl und insbesondere Methyl und/oder Ethyl.

In den polysulfidhaltigen Alkoxysilanen der allgemeinen Formeln (1) und (2) sind $R^2$ gleich oder verschieden und bedeuten vorzugsweise $C_1$-$C_{10}$-Alkoxy, besonders bevorzugt $C_1$-$C_8$-Alkoxy, insbesondere Methoxy und/oder Ethoxy, $C_5$-$C_8$ Cycloalkoxy, besonders bevorzugt Cyclohexyloxy, oder $C_6$-$C_{14}$ Aryloxy, besonders bevorzugt Phenoxy.

Diese sogenannten "symmetrischen" polysulfidhaltigen Alkoxysilane sowie verschiedene Verfahren zu ihrer Herstellung sind z.B. in US-A-5,684,171 und US-A-5,684,172 beschrieben, die für x im Bereich von 2 bis 8 eine detaillierte Liste von bekannten Verbindungen angeben.

Das erfindungsgemäß verwendete polysulfidhaltige Alkoxysilan ist vorzugweise ein Polysulfid, insbesondere ein Disulfid oder ein Tetrasulfid von Bis($C_1$-$C_4$)trialkoxysilylpropyl, noch bevorzugter Bis($C_1$-$C_4$)trialkoxysilylpropyl und insbesondere Bis(2-ethoxysilylpropyl) oder Bis(3-trimethoxysilylpropyl) oder Bis(triethoxysilylpropyl). Das Disulfid von Bis(triethoxysilylpropyl) oder TESPD der Formel $[(C_2H_5O)_3Si(CH_2)_3S]_2$ ist z.B. von Evonik Degussa unter den Bezeichnungen Si266 oder Si75 (im zweiten Fall in Form eines Gemisches von Disulfid und Polysulfid) oder auch von der Firma Witco unter der Bezeichnung Silquest A 1589 im Handel erhältlich. Das Tetrasulfid von Bis(triethoxysilylpropyl) oder TESPT der Formel $[(C_2H_5O)_3Si(CH_2)_3S_2]_2$ ist z.B. von Evonik Degussa unter der Bezeichnung SI 69 (oder X-50S mit 50 Gew.% Russ als Träger) oder von der Firma Witco unter der Bezeichnung Silquest A 1289 (wobei es sich in beiden Fällen um ein kommerzielles Gemisch von Polysulfid mit einem Mittelwert für x in der Nähe von 4 handelt) erhältlich.

Die polysulfidhaltigen Alkoxysilane werden in den erfindungsgemäßen Kautschukmischungen zweckmäßigerweise mit 0,2 bis 12 Gew.-Teilen, bevorzugt 1 bis 10 Gew.-Teilen, bezogen auf 100 Gew. Teile ölfreie Kautschukmatrix eingesetzt.

**V.) Vulkanisationsmittel**

Erfindungsgemäß können ein oder mehrere Vulkanisationsmittel und/oder Vulkanisationshilfsmittel eingesetzt werden. Nachfolgend werden einige Beispiele genannt.

• **Schwefel und Schwefelspender**

Zur Vernetzung der erfindungsgemäßen Kautschukmischungen eignet sich entweder Schwefel in Form elementaren Schwefels oder in der Form eines Schwefelspenders. Elementarer Schwefel wird als löslicher oder unlöslicher Schwefel eingesetzt.

Unter löslichem Schwefel versteht man die bei gewöhnlichen Temperaturen einzige stabile Form, den gelben Cyclooctaschwefel ($S_8$) oder $\alpha$-S, die aus typischen rhombischen Kristallen besteht und in Schwefelkohlenstoff hoch löslich ist. So lösen sich bei 25°C in 100g $CS_2$ 30g $\alpha$-S (Stichwort "Schwefel" des online Römpp Chemie Lexikons, Stand August 2004, Georg Thieme Verlag Stuttgart).

Unter unlöslichem Schwefel versteht man eine Schwefelmodifikation, die nicht zum sogenannten Ausblühen an der Oberfläche von Kautschukmischungen neigt. Diese spezielle Schwefelmodifikation ist zu 60 bis 95 % in Schwefelkohlenstoff unlöslich.

Beispiele für Schwefelspender sind Caprolactamdisulfid (CLD), Dithiomorpholin (DTDM) oder 2-(4-Morpholinodithio)benzothiazol (MBSS) (W. Hoffmann "Kautschuktechnologie", S. 254 ff, Gentner Verlag Stuttgart (1980).

Schwefel und/oder Schwefelspender werden in der erfindungsgemäßen Kautschukmischung in einer Menge im Bereich von 0,1 bis 15 Gew.-Teilen, bevorzugt 0,1-10 Gew.-Teilen, bezogen auf 100 Gew.-Teile ölfreie Kautschukmatrix eingesetzt.

• **Vulkanisationsbeschleuniger**

In der erfindungsgemäßen Kautschukmischung können ferner auch noch einer oder mehrere Vulkanisationsbeschleuniger zum Einsatz kommen, die für die Schwefelvulkanisation geeignet sind.

Entsprechende Vulkanisationsbeschleuniger sind in J. Schnetger "Lexikon der Kautschuktechnik" 3. Auflage, Hüthig Verlag Heidelberg, 2004, Seiten 514-515, 537-539 und 586-589 erwähnt.

Im Rahmen der vorliegenden Erfindung können solche Vulkanisationsbeschleuniger z.B. ausgewählt werden aus der Gruppe der Xanthogenate, Dithiocarbamate, Tetramethylthiuramdisulfide, Thiurame, Thiazole, Thioharnstoff-Derivate, Amin-Derivate wie Tetramine, Sulfenimide, Piperazine, Amincarbamate, Sulfenamide, Bisphenol- und Triazin-Derivate sowie Polythiophosphorverbindungen der allgemeinen Formel (3) oder (4).

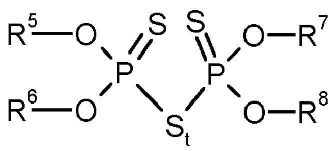

(3)

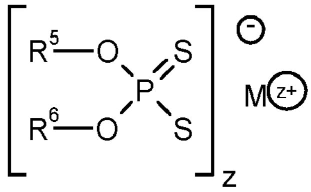

(4)

worin

- $R^5$, $R^6$, $R^7$ und $R^8$ gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
- t für eine ganze Zahl von 1 bis 8, bevorzugt 3 bis 6 steht,
- z für eine ganze Zahl von 1 bis 3, bevorzugt 1 bis 2 steht, und
- $M^{z+}$ ein Metallkation mit der Ladung z+ bedeutet, wobei z+ für 1 bis 3, bevorzugt 1 und 2 steht, oder ein Kation der Formel $N(R^9)_4{}^+$bedeutet, worin $R^9$ gleich oder verschieden sind und Wasserstoff und/oder die Bedeutungen $R^5$ besitzen können.

Bei den Verbindungen gemäß allgemeiner Formel (3) handelt es sich um Phosphorylpolysulfide und bei den Verbindungen gemäß allgemeiner Formel (4) um Dithiophosphate.

Folgende Metallkationen kommen für $M^{z+}$ in Frage: Li, Na, K, Rb, Cs, Be, Mg, Ca, Sr, Ba, Al, Nd, Zn, Cd, Ni und Cu. Bevorzugt sind: Na, K, Zn und Cu. Ebenfalls bevorzugt steht $M^{Z+}$ für $NH_4{}^+$.

Folgende Metalldithiophosphate sind von besonderem Interesse:

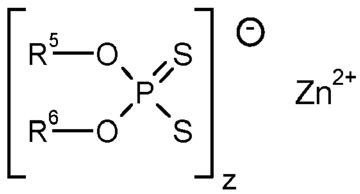

(4a)

worin

z gleich 2 ist

$R^5$ und $R^6$ gleich oder verschieden sind und Wasserstoff oder eine geradekettige oder verzweigte, substituierte oder unsubstituierte Alkylgruppe oder Cycloalkylgruppe mit 1 bis 12 Kohlenstoffatomen, besonders bevorzugt eine $C_2$-$C_{12}$ Alkylgruppe oder eine $C_5$-$C_{12}$ Cycloalkylgruppe und insbesondere Ethyl, Propyl, Isopropyl, Butyl, Isobutyl, Cyclohexyl, Ethylhexyl oder Dodecyl bedeuten.

Derartige Verbindungen der allgemeinen Formel (3) oder (4) können optional auch in geträgerter oder polymergebundener Form eingesetzt werden.

Geeignete Vulkanisationsbeschleuniger sind Benzothiazyl-2-cyclohexyl-sulfenamid (CBS), Benzothiazyl-2-tert.-butylsulfenamid (TBBS), Benzothiazyl-2-dicyclohexylsulfenamid (DCBS), 1,3-Diethylthioharnstoff (DETU), 2-Mercaptobenzothiazol (MBT) und dessen Zinksalze (ZMBT), Kupfer-dimethyldithiocarbamat (CDMC), Benzothiazyl-2-sulfenmorpholid (MBS), Benzothiazyldicyclo-hexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipenta-methylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyl-dithio-carbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylenthioharnstoff (ETU), Diphenylthioharnstoff (DPTU), Triethyltrimethyltriamin (TTT); N-t-Butyl-2-benzothiazol-sulfenimid (TBSI); 1,1'-Dithiobis(4-methyl-piperazin); Hexamethylendiamincarbamat (HMDAC); Benzothiazyl-2-tert.-butylsulfen-amid (TOBS), N,N'-Diethylthiocarbamyl-N'-cyclohexyl-sulfenamid (DETCS), N-Oxidiethylendithio-carbamyl-N'-oxydiethylensulfenamid (OTOS), 4,4'-Dihydroxydiphenylsulfon (Bisphenol S), Zn-isopropyl-xanthogenat (ZIX), Selen-, Tellur-, Blei-, Kupfer- und Erdalkalisalze von Dithiocarbaminsäuren; Pentamethylenammonium-N-pentamethylendithiocarbamat; Cyclohexylethylamin; Dibutylamin; Poly-ethylenpolyamine, Polyethylenpolyimine wie z. B. Triethylentetramin (TETA), Phosphorylpolysulfide wie z. B. :

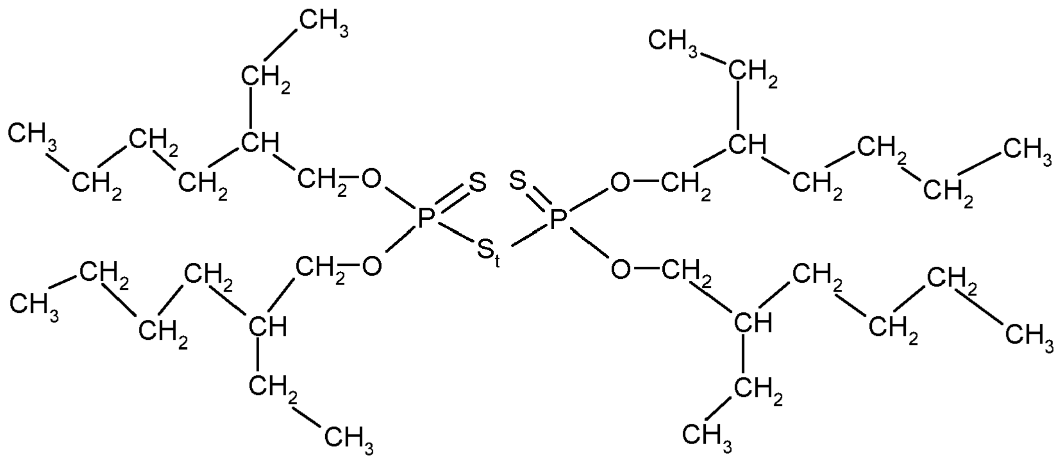

mit t = 2 bis 4, (**Rhenocure® SDT/S** gebunden an 30 Gew.-% hochaktive Kieselsäure der Rhein Chemie Rheinau GmbH) und Zinkdithiophosphate, wie z. B. **Rhenocure© ZDT/G** gebunden an 30 Gew.-% hochaktive Kieselsäure und 20 Gew.-% Polymerbinder der Rhein Chemie Rheinau GmbH mit der Formel

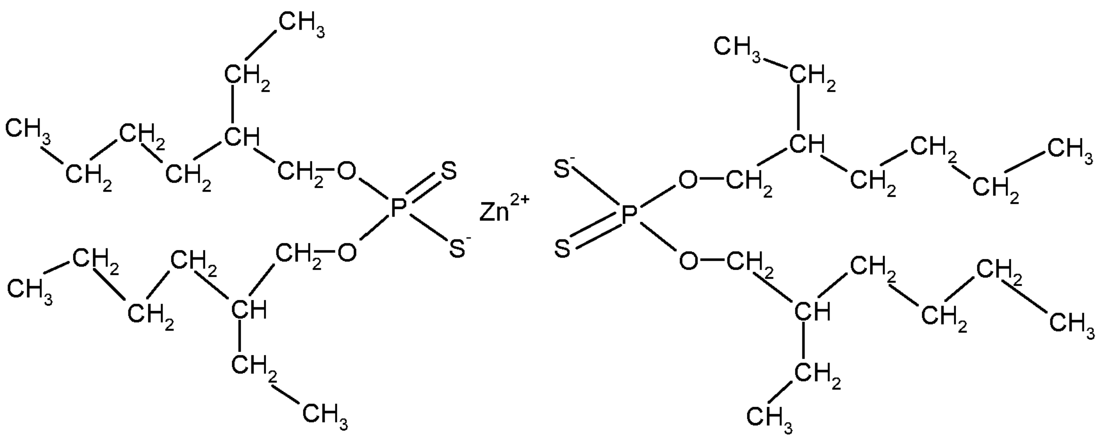

handeln.

Die Vulkanisationsbeschleuniger werden bevorzugt in einer Menge im Bereich von 0,1 bis 15 Gew.-Teilen, bevorzugt 0,1-10 Gew.-Teilen, bezogen auf 100 Gew.-Teile ölfreie Kautschukmatrix eingesetzt.

• **Zinkoxid und Stearinsäure oder Zinkstearat**

In der erfindungsgemäßen Mischung kann ferner Zinkoxid als Aktivator für die Schwefelvulkanisation enthalten sein. Die Auswahl einer geeigneten Menge ist dem Fachmann ohne großen Aufwand möglich. Wird das Zinkoxid in einer etwas höheren Dosierung eingesetzt, so führt dies zu einer vermehrten Ausbildung monosulfidischer Bindungen

und damit zu einer verbesserten Alterungsbeständigkeit Die erfindungsgemäße Kautschukzusammensetzung enthält ferner Stearinsäure (Octadecansäure). Diese ist dem Fachmann dafür bekannt, dass sie in der Kautschuktechnologie ein breites Wirkungsspektrum besitzt. So besteht eine ihrer Wirkungen darin, dass sie zu einer verbesserten Dispersion von Zinkoxid und der Vulkanisationsbeschleuniger führt. Ferner kommt es zu einer Komplexbildung mit Zinkionen im Rahmen der Schwefelvulkanisation.

Zinkoxid wird in der erfindungsgemäßen Zusammensetzung üblicherweise in einer Menge von 0,5 bis 15 Gew.-Teilen, bevorzugt 1 bis 7,5 Gew.-Teilen, besonders bevorzugt 1 bis 5 Gew.%, bezogen auf 100 Gew.-Teile ölfreie Kautschukmatrix eingesetzt.

Stearinsäure wird in der erfindungsgemäßen Zusammensetzung in einer Menge von 0,1 bis 7, bevorzugt 0,25 bis 7 Gew.-Teilen, bevorzugt 0,5 bis 5 Gew.-Teilen, bezogen auf 100 Gew.-Teile ölfreie Kautschukmatrix eingesetzt.

Alternativ oder aber auch zusätzlich zur Kombination aus Zinkoxid und Stearinsäure kann Zinkstearat eingesetzt werden. In diesem Fall wird üblicherweise eine Menge von 0,25 bis 5 Gew.-Teilen, bevorzugt 1 bis 3 Gew.-Teile, jeweils bezogen auf 100 Gew.-Teile d ölfreie Kautschukmatrix verwendet.

**VI.) gegebenenfalls ein oder mehrere Kautschukadditive**

Weitere optional als Komponente(n) VI.) der erfindungsgemäßen Kautschukmischungen zuzusetzende Kautschukadditive umfassen Alterungsschutzmittel, Reversionsschutzmittel, Lichtschutzmittel, Ozonschutzmittel, Wachse, Mineralöl, Verarbeitungshilfsmittel, Weichmacher, Mineralöle, Tackifier, Treibmittel, Farbstoffe, Pigmente, Harze, Streckmittel, organische Säuren, Vulkanisationsverzögerer, Metalloxide sowie weitere Füllstoffaktivatoren, wie beispielsweise Triethanolamin, Trimethylolpropan, Polyethylenglykol, Hexantriol oder andere Additive, wie etwa Ruß, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als Vulkanisationsverzögerer können den erfindungsgemäßen Zusammensetzungen beispielsweise Sulfonamide, Sulfanilide oder Phthalimide zugesetzt werden. Geeignet sind z.B. N-Trichlormethylsulfenylbenzolsulfanilid, N-Cyclohexylthiophthalimid, Phtalsäureanhydrid (PTA), Salicylsäure (SAL), N-Nitrosodiphenylamin (NDPA), Trichlormelamin (TCM), Maleinsäureanhydrid (MSA) und N-Trichlormethylsulfenylbenzolsulfanilid (letzteres kommerziell unter der Bezeichnung Vulkalent® E erhältlich). Entsprechende Vulkanisationsverzögerer sind ebenfalls in J. Schnetger, "Lexikon der Kautschuktechnik", 3. Auflage, Hüthig Verlag, Heidelberg, 2004, Seite 590 erwähnt.

Als Antioxidantien können den erfindungsgemäßen Zusammensetzungen beispielsweise Mercaptobenzimidazol (MBI), 2-Mercaptomethylbenzimidazol (2-MMBI), 3-Mercaptomethylbenzimidazol (3-MMBI), 4-Mercaptomethylbenzimidazol (4-MMBI), 2,2,4-Trimethyl-1,2-dihydrochinlin (TMQ), Nickel-dibutyldithiocarbamat (NDBC), 2,6-Di-tert.-butyl-p-kresol (BHT) und 2,2'-Methylen-bis(4-methyl-6tert.butyl-phenol) (BKF) eingesetzt werden. Diese Antioxidantien können auch in nicht-staubenden, insbesondere auch polymergebundenen Lieferformen eingesetzt werden (als "Microgranulat" (MG) oder "Microgranulat coated" (MGC)).

Darüber hinaus sind auch Alterungsschutzmittel einsetzbar, beispielsweise in Form verfärbender Alterungsschutzmittel mit Ermüdungs- und Ozonschutzwirkung, z.B. N-Isopropyl-N'-phenyl-p-phenylendiamin (IPPD); N-1,3-Dimethylbutyl-N'-phenyl-p-phenylendiamin (6PPD), N-1,4-Dimethylpentyl-N'-phenyl-p-phenylendiamin (7PPD), NN'-bis-(1,4-Dimethylpentyl)-p-phenylendiamin (77PD) etc., verfärbender Alterungsschutzmittel mit Ermüdungsschutz, aber ohne Ozonschutzwirkung, z.B. Phenyl-$\alpha$-naphthylamin (PAN); verfärbender Alterungsschutzmittel mit geringer Ermüdungs- und ohne Ozonschutzwirkung, z.B. octyliertes Diphenylamin (ODPA); nicht verfärbender Alterungsschutzmittel mit Ermüdungsschutz und gutem Hitzeschutz, z.B. styrolisierte Phenole (SPH); nicht verfärbender Ozonschutzmittel ohne Alterungsschutzwirkung, z.B. Wachse (Gemische aus speziellen Kohlenwasserstoffen), cyclische Acetale und Enolether; sowie Hydrolyseschutzmittel wie z.B. Polycarbodiimide.

Ferner können den erfindungsgemäßen Kautschukmischungen auch Mastikationschemikalien zugesetzt werden, welche vorzugsweise ausgewählt werden aus der Gruppe bestehend aus Thiophenolen, Thiophenolzinksalzen, substituierten aromatischen Disulfiden, Derivaten von Thiocarbonsäuren, Hydrazinderivaten, Nitrosoverbindungen und Metallkomplexen, besonders bevorzugt Eisenhemiporphyrazin, Eisenphthalocyanin, Eisenacetonylacetat und dessen Zn-Salz. Die Mastikationschemikalien werden insbesondere zur Mastikation des in der Mischung verwendeten Naturkautschuks verwendet, wobei die Mastikation des Naturkautschuks vorzugsweise in einem separaten Verfahrensschritt vor der eigentlichen Mischungsherstellung durchgeführt wird.

Erfindungsgemäß ist es gleichwohl möglich, zusätzlich zu dem hellen Füllstoff ein gewisse Menge Ruß zu verwenden, insbesondere Ruße vom Typ HAF, ISAF und SAF, die üblicherweise in Luftreifen und insbesondere in den Laufstreifen von Luftreifen eingesetzt werden. Als Beispiele für diese Ruße können N110, N 115, N220, N134, N234, N339, N347 und N375 genannt werden, die dem Fachmann hinreichend bekannt und von diversen Herstellern käuflich erhältlich sind.

Wird Russ zugesetzt, so beträgt der Anteil des hellen verstärkenden Füllstoffs jedoch mehr als 50 Gew.-%, vorzugsweise mehr als 75 Gew.-%, bezogen auf die Gesamtmenge der verwendeten verstärkenden Füllstoffe. Der

Anteil von Ruß ist dann weniger als 50 Gew.-% und bevorzugter weniger als 40 Gew.-%. In einer bevorzugten Ausführungsform wird in der erfindungsgemäßen Kautschukmischung Ruß in Mengen von 0 bis 35 Gew.-Teilen bezogen auf 100 Gew.-Teilen der Summe der ölfreien Kautschuke zugesetzt.

Die als Komponente(n) VI.) verwendbaren Kautschukadditive werden in üblichen Mengen, die sich u. a. nach dem Verwendungszweck richten, eingesetzt. Übliche Mengen für einzelne Kautschukadditive liegen beispielsweise bei 0,1 bis 50 phr, wobei Öl, das als Verstreckungsmittel von Kautschuken in die Kautschukmischungen eingebracht wird, bei dieser Mengenangabe unberücksichtigt bleibt.

Bevorzugt weist eine andere Ausführung der Erfindung eine polythiophosphorverbindungsfreie vulkanisierbare Kautschukmischung auf.

Gegenstand der Erfindung sind die genannten Kautschukmischungen, sowie hieraus durch Schwefelvernetzung erhaltene Vulkanisate, insbesondere verschiedene Bauteile von Luftreifen, insbesondere von Reifenlaufflächen und im Besonderen hieraus hergestellte Laufflächen von Winterreifen.

Nachfolgend werden anhand von Beispielen die erfindungsgemäßen Kautschukmischungen näher erläutert.

**<u>Herstellung der Kautschukmischungen</u>**

Die Herstellung der erfindungsgemäßen Kautschukmischung erfolgt durch Mischen der Komponenten I.) bis VI.) Das Mischen kann in einer oder bis zu 6 Stufen erfolgen. Bewährt hat sich ein dreistufiger Mischprozess mit zwei Mischstufen im Innenmischer und einer abschließenden Mischstufe auf einer Walze (sogenannte "Fertigmischstufe"). Möglich ist auch ein zweistufiger Mischprozess, wobei die 1. Mischstufe im Innenmischer und die 2. Mischstufe auf einer Walze erfolgt. Ferner ist ein 2stufiger Mischprozess möglich, bei dem beide Mischstufen ein einem Innenmischer erfolgen, wobei die Mischung vor der Zugabe der Komponenten, die üblicherweise auf der Walze zugegeben werden, auf Temperaturen < 120°C, vorzugsweise <110°C abgekühlt wird.

Es hat sich bewährt, die Komponente III.) in Form des hellen Füllstoff vollständig im 1. Mischschritt und die Komponente II.) in Form des hydroxylgruppenhaltigen Mikrogels entweder vollständig im ersten Mischschritt oder aber aufgeteilt auf den ersten und zweiten Mischschritt oder aber im 2. oder einem späteren Mischschritt zuzusetzen. Das polysulfidhaltige Alkoxysilan (IV.) kann ebenfalls entweder vollständig im ersten Mischschritt oder aber aufgeteilt im ersten und späteren Mischschritten zugesetzt werden.

Geeignete Aggregate für die Mischungsherstellung sind an sich bekannt und schließen beispielsweise Walzen, Innenmischer oder auch Mischextruder ein.

Bei Anwendung eines 2stufigen Mischverfahrens im Innenmischer oder eines drei- oder mehrstufigen Mischverfahrens wird in der ersten und/oder in der zweiten sowie späteren Mischstufen, vorzugsweise in der ersten und zweiten Mischstufe bei Temperaturen von 110°C bis 180 °C, vorzugsweise 120°C bis 175°C, besonders bevorzugt 125°C bis 170°C gearbeitet, wobei die Mischzeiten bei diesen Temperaturen im Bereich von 1 bis 15 Minuten liegen und so gewählt werden, dass nicht bereits ein Vulkanisationsstart (Anvulkanisation oder Scorch) erfolgt.

Die Temperaturen in der Fertigmischstufe betragen 20 bis 120°C, vorzugsweise 30 bis 110 °C. Üblicherweise erfolgt das Mischen im Innenmischer in einem Temperaturbereich von 20 bis 180°C, bevorzugt im Temperaturbereich 50 bis 170 °C oder auf einer Walze bei weniger als 100 °C. Die Wahl einer geeigneten Temperatur kann der Fachmann gemäß seiner Fachkenntnisse vornehmen, zu beachten ist, dass es beim Mischen einerseits zu einer Silanisierung der Kieselsäure und andrerseits nicht bereits zu einer verfrühten Vulkanisation kommt (Scorching).

**<u>Verfahren zur Herstellung von Vulkanisaten:</u>**

Die Vulkanisation der erfindungsgemäßen Zusammensetzungen erfolgt üblicherweise bei einer Temperatur im Bereich von 100 bis 250°C, bevorzugt von 130 bis 180°C, entweder unter Normal druck (1 bar) oder optional unter einem Druck von bis zu 200 bar.

Die erfindungsgemäß hergestellten Zusammensetzungen eignen sich zur Herstellung von Luftreifen, insbesondere von Reifenlaufflächen und im Besonderen zur Herstellung von Laufflächen für Winterreifen.

**<u>Beispiele:</u>**

In **Tabelle K** sind die in den nachfolgenden Beispielen eingesetzten Kautschuke Ia), Ib) und Ic) (Lösungs-SBR, 1,4-cis-Polybutadien, Naturkautschuk) für die Kautschukmatrix sowie wichtige Eigenschaften dieser Kautschuke zusammengefasst.

**Tabelle K Eingesetzte Kautschuke (Lösungs-SBR, 1,4-cis-Polybutadien, Naturkautschuk) und ihre Eigenschaften**

| Kautschuk | Mischungsbestandteil | Mooney Viskosität ML1+4 (100°C) [ME] | Vinyl-Gehalt [Mol%] | Styrol-Gehalt [Gew.%] | Ölverstreckter Kautschuk | | | Tg des ölfreien Kautschuks [°C] |
|---|---|---|---|---|---|---|---|---|
| | | | | | Ölart | Ölgehalt [phr] | Tg [°C] | |
| Buna® VSL 5025-1 HM (Lösungs-SBR der Lanxess Deutschland GmbH) | Ia) | 65 | 50 | 25 | DAE | 37,5 | -24 | -21 |
| Buna® VSL 5025-2 HM (Lösungs-SBR der Lanxess Deutschland GmbH) | Ia) | 62 | 50 | 25 | TDAE | 37,5 | -29 | -22 |
| Buna® VSL 5228-2 (Lösungs-SBR der Lanxess Deutschland GmbH) | Ia) | 50 | 52 | 28 | TDAE | 37,5 | -20 | -13 |
| Buna® VSL 5025-0 HM (Lösungs-SBR der Lanxess Deutschland GmbH) | Ia) | 65 | 50 | 25 | - | - | - | -22 |
| Buna® VSL 2525-0 M (Lösungs-SBR der Lanxess Deutschland GmbH) | Ia) | 54 | 25 | 25 | - | - | - | -49 |

(fortgesetzt)

| Kautschuk | Mischungsbestandteil | Mooney Viskosität ML1+4 (100°C) [ME] | Vinyl-Gehalt [Mol%] | Styrol-Gehalt [Gew.%] | Ölverstreckter Kautschuk | | | Tg des ölfreien Kautschuks [°C] |
|---|---|---|---|---|---|---|---|---|
| | | | | | Ölart | Ölgehalt [phr] | Tg [°C] | |
| Buna® CB 24 (Neodym-BR der Lanxess Deutschland GmbH) | Ib) | 43,4 | 0,6 | - | - | - | - | -109 |
| Buna® CB 1203 (Co-BR der Lanxess Deutschland GmbH) | Ib) | 43 | 2,0 | - | - | - | - | -107 |
| Naturkautschuk (RSS 3, vormastiziert auf DEFO-Härte 1000) | Ic) | - | - | - | - | - | - | -66 |

Für die Bestimmung der Glasübergangstemperaturen (Tg) wurde das Kalorimeter DSC-7 der Firma Perkin-Elmer eingesetzt. Es wurden jeweils 10 mg des Kautschuks in die vom Hersteller mitgelieferten Aluminiumnormtiegel eingewogen und verkapselt. Für die Auswertung wird das Thermogramm der 2. Aufheizung herangezogen.
Die Glasübergangstemperaturen der ölverstreckten Kautschuke (Buna® VSL 5025-1 HM, Buna® VSL 5025-2 HM und Buna® VSL 5228-2) wurden sowohl im Originalzustand, d. h. mit Öl, als auch nach Entfernung des Öls bestimmt. Zur Entfernung des Öls wurden die ölverstreckten Kautschuke umgefällt. Hiefür wurde der ölverstreckte Kautschuk kleingeschnitten und bei Raumtemperatur unter Rühren in Toluol gelöst (1 g Kautschuk gelöst in 50 g Toluol). Nachdem der Kautschuk vollständig gelöst war, wurde die toluolische Kautschuklösung langsam in 500 g Methanol unter Rühren bei Raumtemperatur eingetropft. Der koagulierte Kautschuk wurde isoliert, das anhaftende Lösungsmittel abgepresst und anschließend im Vakuum bis zur Gewichtskonstanz getrocknet. Wie man in Tabelle K sieht, unterscheiden sich die Glasübergangstemperaturen der ölverstreckten Kautschuke im Originalzustand und nach Ölentfernung. Zur Berechnung der Glasübergangstemperaturen der Kautschukmatrix wurden in allen Fällen die Glasübergangstemperaturen der Kautschuke nach Ölentfernung durch Umfällung verwendet.

**<u>Kautschukgele</u>**

Für die vorliegende Erfindung wurde ein BR-Gel mit einer Tg = -75 °C eingesetzt. Dieses Gel hat in Toluol einen unlöslichen Anteil von 95 Gew. %. Der Quellungsindex in Toluol beträgt: 11,5 Die Hydroxylzahl beträgt 30 mg KOH/g Gel.
Die Herstellung des BR-Gels erfolgte durch Copolymerisation einer Monomermischung, deren Zusammensetzung in nachfolgender Tabelle **M** aufgelistet ist, wobei die in EP 1 298 166 unter der Überschrift "[1] Production of Rubber Gel" im Abschnitt [0077] offen gelegten Polymerisationsbedingungen angewandt wurden.

**Tabelle M: Monomermischung**

| **Monomere** | **Mengenanteile [Gew.-Teile]** |
|---|---|
| Butadien | 88,5 |
| Trimethylolpropantrimethacrylat | 4,0 |
| Hydroxyethylmethacrylat | 7,5 |

Die weitere Behandlung und Aufarbeitung des bei der Polymerisation erhaltenen BR-Gel-Latex erfolgte wie in EP 1245 630 "Production Example 1: Production of Conjugated Diene-Based Rubber Gel 1 unter den Abschnitten [0103] und [0104] beschrieben.

**Tabelle MB: <u>Mischungsbestandteile III.) bis IV.)</u>**

| **Mischungsbestandteile** | | **Produktname (Hersteller)** |
|---|---|---|
| **III.)** | Kieselsäure | Ultrasil® VN3(Evonik GmbH) |
| **III.)** | Kieselsäure | Ultrasil® 7000 GR (Evonik GmbH) |
| **VI.)** | Ruß | Statex® N330 (Columbian Carbon Deutschland) |
| **VI.)** | Alterungsschutzmittel | 2,2,4-Trimethyl-1,2-dihydrochinonlin, polymerisiert (Vulkanox® HS/LG der Lanxess Deutschland GmbH) |
| **VI.)** | Alterungsschutzmittel | N-1,3-Dimethylbutyl-N'-phenyl-p-phenylendiamin Vulkanox® 4020/LG (Lanxess Deutschland GmbH) |
| **VI.)** | Ozonwachs | Antilux® 654 (RheinChemie GmbH) |
| **V.)** | Stearinsäure | Edenor® C 18 98-100 (Cognis Deutschland GmbH) |
| **VI.)** | Mineralöl | Vivatech® 500 (Hansen und Rosenthal) |
| **IV.)** | polysulfidhaltiges Alkoxysilan | Bis(tri-ethoxy-silylpropyl-monosulfan) (Si 75/Degussa Hüls AG) |
| **IV.)** | polysulfidhaltiges Alkoxysilan | Bis(tri-ethoxy-silylpropyl-disulfan) (Si 69/Degussa Hüls AG) |
| **V.)** | Zinkoxid | Zinkweiss Rotsiegel (Grillo Zinkoxid GmbH) |

(fortgesetzt)

| Mischungsbestandteile | | Produktname (Hersteller) |
|---|---|---|
| V.) | Schwefel | Löslicher Schwefel (Mahlschwefel 90/95° Chancel® (Solvay Barium Strontium) |
| V.) | Vulkanisationsbeschleun iger | N-tert.Butyl-2- benzthiazylsulfenamid, Vulkacit® NZ/C (Lanxess Deutschland GmbH) |
| V.) | Vulkanisationsbeschleun iger | Diphenylguanidin, Rhenogran® DPG-80 (RheinChemie GmbH) |

**Herstellung der Kautschukmischungen der Mischungsserien 1)bis 6)**

Die Kautschukmischungen wurden in einem 3stufigen Mischverfahren hergestellt, wobei für die 1. und 2. Mischstufe jeweils ein Innenmischer mit 1,5 1 Innenvolumen (GK 1,5 der Firma Werner & Pfleiderer, Stuttgart mit ineinandergreifenden Knetelementen (PS 5A -Schaufelgeometrie) eingesetzt wurde. Die 3. Mischstufe wurde auf einer thermostatisierbaren Walze bei einer Walzentemperatur von maximal 60°C durchgeführt

Die eingesetzten Mischungsbestandteile wurden jeweils auf 100 Gew.-Teile ölfreie Kautschukmatrix bezogen. Die Zugabereihenfolge der Mischungsbestandteile sowie die Zugabezeitpunkte gehen aus den zu den der einzelnen Mischserien gehörenden Tabellen hervor.

Im 1. Mischschritt wurden die in den Tabellen aufgelisteten Mischungsbestandteile in den auf 70°C aufgeheizten Innenmischer gegeben und bei einem Füllgrad von 72%, bei einem Stempeldruck von 8 bar und einer Kneterdrehzahl von 70 $min^{-1}$. gemischt. Zur Silanisierung wurden die Mischungen durch Erhöhung der Drehzahl auf die in den Mischungsserien genannten Temperaturen aufgeheizt und für die in den Tabellen angegebenen Zeiten bei diesen Temperaturen gehalten. Danach wurden die Mischungen ausgeworfen und auf einer Walze auf <90°C abgekühlt.

Nach 24stündiger Lagerung bei 23°C wurden die Mischungen in einer 2. Mischstufe im Innenmischer gegebenenfalls nach Zugabe weiterer Komponenten (siehe Mischungsserien) redispergiert (Füllgrad: 72%, Stempeldruck: 8 bar, Umdrehungszahl: 70 min.-1) und durch Erhöhung der Umdrehungszahl auf die in den Mischungsserien genannten Temperaturen aufgeheizt und anschließend für die in den Mischungsserien angegebenen Zeiten bei diesen Temperaturen gehalten. Danach wurde die Mischung ausgeworfen und auf einer auf 40°C vorgewärmten Walze auf <60°C abgekühlt.

Die Zugabe der in den nachfolgenden Tabellen genannten Mischungsbestandteile erfolgte in einer 3. Mischstufe auf der Walze bei Temperaturen von maximal 60°C ohne vorhergehende Zwischenlagerung.

**Prüfungen**

An den unvulkanisierten Kautschukmischungen wurden die Mooney-Viskosität nach 1 min. (ML1+1/100°C) und nach 4 min. (ML1+4/100°C) sowie die Mooney Relaxation nach 10 und 30 sec nach ***ASTMD1646*** bestimmt:

Das **Vulkanisationsverhalten** der Mischungen wurde im Rheometer bei 160°C nach ***DIN 53 529*** mit Hilfe des Monsantorheometers MDR 2000E untersucht. Auf diese Weise wurden charakteristische Daten wie $F_{min.}$, $F_{max}$, $F_{max.}$-$F_{min.}$, $t_{10}$, $t_{50}$, $t_{90}$ und $t_{95}$ sowie $F_{15\ min}$, $F_{20\ min.}$ $F_{25\ min.}$ und $F_{25\ min}$ - $F_{max}$ bestimmt.

Nach DIN 53 529, Teil 3 bedeuten:

$F_{min}$: Vulkameteranzeige im Minimum der Vernetzungsisotherme

$F_{max}$: Vulkameteranzeige im Maximum der Vernetzungsisotherme

$F_{max}$ - $F_{min}$: Differenz der Vulkameteranzeigen zwischen Maximum und Minimum

$t_{10}$: Zeit, bei der 10% des Umsatzes erreicht sind

$t_{50}$: Zeit, bei der 50% des Umsatzes erreicht sind

$t_{90}$: Zeit, bei der 90% des Umsatzes erreicht sind

$t_{95}$: Zeit, bei der 95% des Umsatzes erreicht sind

Das Reversionsverhalten wurde durch folgende Messgrößen charakterisiert:

$F_{15\ min}$,: Vulkameteranzeige nach 15 min.

$F_{20\ min.}$ Vulkameteranzeige nach 20 min.

$F_{25\ min.}$ Vulkameteranzeige nach 25 min.

$F_{25\ min}$ - $F_{max}$ Differenz der Vulkameteranzeigen nach 25 min. und dem Maximalwert

Eine Kautschukmischung mit guter Reversionsbeständigkeit zeichnet sich dadurch aus, dass die Vulkameteranzeige bei langen Vulkanisationszeiten möglichst konstant bleibt; d. h. die Änderung gegenüber dem Vulkametermaximum sollte möglichst gering sein. Absolut unerwünscht ist eine Abnahme der Vulkameteranzeige mit steigenden Vulkanisationszeiten ("Reversion"). Dies ist ein Indiz für ein schlechtes Alterungsverhalten des Vulkanisats, bei dem der Vernetzungsgrad bzw. der Modul während der Nutzungsdauer abnimmt. Ebenso unerwünscht ist ein Anstieg der Vulkameteranzeige nach Erreichen des Maximums ("marching modulus"). Als Maß für die Reversionsbeständigkeit der Kautschukmischungen wurde die Differenz der Vulkameteranzeigen zwischen 25 min und dem Maximum ($F_{25\ min}$ - $F_{max}$) herangezogen. Bei den erfindungsgemäßen Mischungen liegt dieser Wert <-0,47 dNm.

Die für die Vulkanisatcharakterisierung notwendigen Prüfkörper wurden durch Pressvulkanisation der Mischungen bei einem Hydraulikdruck von 120 bar hergestellt. Die für die Herstellung der Prüfkörper verwendeten Vulkanisationsbedingungen sind bei den einzelnen Versuchsserien angegeben.

An den Vulkanisaten wurden folgende Eigenschaften nach den genannten Normen bestimmt:

DIN 53505: Shore A-Härte bei 23°C und 70°C

DIN 53512: Rückprallelastizität bei 23°C und 70°C ("R23")

DIN 53504: Spannungswerte bei 10%, 25%, 50%, 100%, 200% und 300 % Dehnung ($\sigma_{10}$, $\sigma_{25}$, $\sigma_{50}$, $\sigma_{100}$, $\sigma_{200}$ und $\sigma_{300}$), Zugfestigkeit sowie Bruchdehnung

DIN 53516: Abrieb

Für die Bestimmung der dynamischen Eigenschaften (Temperaturabhängigkeit des Speichermoduls E' im Temperaturbereich -60°C bis 0°C sowie tan $\delta$ bei 60°C) wurde ein Eplexor-Gerät (Eplexor 500 N) der Firma Gabo-Testanlagen GmbH, Ahlden, Deutschland eingesetzt. Die Messungen wurden nach DIN53513 bei 10 Hz an Zylinderproben im Temperaturbereich -100°C und +100°C bei einer Heizrate von 1K/min. ermittelt. Die Messungen erfolgten im Kompressionsmodus bei einer statischen Kompression von 1% und einer dynamischen Verformung von 0,1%.

Mit der Methode wurden folgende Messgrößen erhalten, die nach ASTM 5992-96 bezeichnet werden:

E' (-60°C): Speichermodul bei -60°C

E' (-50°C): Speichermodul bei -50°C

E' (-40°C): Speichermodul bei -40°C

E' (-30°C): Speichermodul bei -30°C

E' (-20°C): Speichermodul bei -20°C

E' (-10°C): Speichermodul bei -10°C

E' (0°C): Speichermodul bei 0°C

sowie

tan $\delta$ (60°C): Verlustfaktor (E"/E') bei 60°C

E' liefert ein Indiz für den Griff der Winterreifen-Lauffläche auf Eis und Schnee. Je niedriger E' ist, umso besser ist der Griff. Tan $\delta$ (60°C) ist ein Maß für den Hystereseverlust beim Rollen des Reifens. Je niedriger tan $\delta$ (60°C) ist, umso niedriger ist der Rollwiderstand des Reifens.

**Zusammenfassung der Ergebnisse**

Es wurden 6 Mischungs-Serien hergestellt, wobei sowohl die Mischungsverhältnisse von Lösungs-SBR, 1,4-cis-Polybutadien und NR als auch die Mengenanteile an Mikrogel variiert wurden. Die erfindungsgemäßen Beispiele sind jeweils mit "*" gekennzeichnet.

**1) Mischungsserie**

In der ***Mischserie 1)*** wurden durch Variation der Mengenverhältnisses von Lösungs-SBR, cis-1,4-Polybutadien und Naturkautschuk die Glasübergangstemperaturen der Kautschukmatrix zwischen - 58,4°C bis 84,1°C variiert (siehe nachfolgende Tabelle 1.1). Aufgrund der Matrix Tg von -73,0 bis -84,1°C und des NR-Anteiles von 10 bis 30 Gew.-Teile sind ***1.2****, ***1.3****, ***1.4* und 1.7* erfindungsgemäße Beispiele. Die Beispiele 1. 5 und 1. 6 sind nicht erfindungsgemäß***, da der NR-Anteil mit 45 bzw. 80 Gew.-Teilen außerhalb des erfindungsgemäßen Bereichs liegt.

| **Tabelle 1.1: Glasübergangstemperatur der Kautschukmatrix** | | | | | | | |
|---|---|---|---|---|---|---|---|
| ***Compound Nr.*** | ***1.1*** | ***1.2**** | ***1.3**** | ***1.4**** | ***1.5*** | ***1.6*** | ***1.7**** |
| Buna® VSL 2525-0 M | 70 | 50 | 44 | 35 | 30 | 10 | 20 |
| Buna® CB 24 | 10 | 40 | 36 | 30 | 25 | 10 | 50 |
| TSR / RSS 3 DEFO 1000 | 20 | 10 | 20 | 35 | 45 | 80 | 30 |
| Matrix-Tg | -58,4 | -74,7 | -74,0 | -73,0 | -71,7 | -68,6 | -84,1 |

| **Tabelle 1.2: 1. Mischstufe im Innenmischer** | | | | | | | |
|---|---|---|---|---|---|---|---|
| ***Compound Nr.*** | ***1.1*** | ***1.2**** | ***1.3**** | ***1.4**** | ***1.5*** | ***1.6*** | ***1.7**** |
| **Zugabezeitpunkt: 0 sec.** | | | | | | | |
| Buna® VSL 2525-0 HM | 70 | 50 | 44 | 35 | 30 | 10 | 20 |
| Buna® CB 24 | 10 | 40 | 36 | 30 | 25 | 10 | 50 |
| TSR / RSS 3 DEFO 1000 | 20 | 10 | 20 | 35 | 45 | 80 | 30 |
| **Zugabezeitpunkt: 30 sec.** | | | | | | | |
| Ultrasil® VN3 | 53 | 53 | 53 | 53 | 53 | 53 | 53 |
| BR-Mikrogel | 10 | 10 | 10 | 10 | 10 | 10 | 10 |
| Vulkanox® HS/LG | 1,0 | 1,0 | 1,0 | 1,0 | 1,0 | 1,0 | 1,0 |
| Vulkanox® 4020/LG | 1,0 | 1,0 | 1,0 | 1,0 | 1,0 | 1,0 | 1,0 |
| Stearinsäure | 1,0 | 1,0 | 1,0 | 1,0 | 1,0 | 1,0 | 1,0 |
| Ozonwachs | 1,4 | 1,4 | 1,4 | 1,4 | 1,4 | 1,4 | 1,4 |

| **Tabelle 1.2: 1. Mischstufe im Innenmischer** | | | | | | | |
|---|---|---|---|---|---|---|---|
| Si75 | 3,2 | 3,2 | 3,2 | 3,2 | 3,2 | 3,2 | 3,2 |
| **Zugabezeitpunkt: 90 sec.** | | | | | | | |
| Ultrasil® VN3 | 27 | 27 | 27 | 27 | 27 | 27 | 27 |
| Mineralöl | 20 | 20 | 20 | 20 | 20 | 20 | 20 |
| Ruß | 12 | 12 | 12 | 12 | 12 | 12 | 12 |

(fortgesetzt)

| Zugabezeitpunkt: 150 sec. | | | | | | | |
|---|---|---|---|---|---|---|---|
| Zinkoxid | 2,5 | 2,5 | 2,5 | 2,5 | 2,5 | 2,5 | 2,5 |
| **Aufheizung ab 210 sec.** | | | | | | | |
| Maximale Temperatur [°C] | 165 | 165 | 165 | 165 | 165 | 165 | 165 |
| Zeit bei max. Temperatur [min.] | 6 | 6 | 6 | 6 | 6 | 6 | 6 |
| Abkühlung auf Walze [°C] | <90 | <90 | <90 | <90 | <90 | <90 | <90 |
| Lagerung bei 23°C [h] | 24 | 24 | 24 | 24 | 24 | 24 | 24 |

| Tabelle 1.3: 2. Mischstufe im Innenmischer | | | | | | | |
|---|---|---|---|---|---|---|---|
| ***Compound Nr.*** | ***1.1*** | ***1.2**** | ***1.3**** | ***1.4**** | ***1.5*** | ***1.6*** | ***1.7**** |
| Si75 | 3,2 | 3,2 | 3,2 | 3,2 | 3,2 | 3,2 | 3,2 |
| Maximale Temperatur [°C] | 165 | 165 | 165 | 165 | 165 | 165 | 165 |
| Zeit bei max.Temperatur [min.] | 6 | 6 | 6 | 6 | 6 | 6 | 6 |
| Abkühlung auf Walze [°C] | <60 | <60 | <60 | <60 | <60 | <60 | <60 |

| Tabelle 1.4: 3. Mischstufe (Walze) | | | | | | | |
|---|---|---|---|---|---|---|---|
| ***Compound Nr.*** | ***1.1*** | ***1.2**** | ***1.3**** | ***1.4**** | ***1.5*** | ***1.6*** | ***1.7**** |
| Schwefel | 2,0 | 2,0 | 2,0 | 2,0 | 2,0 | 2,0 | 2,0 |
| Rhenogran® DPG-80 | 2,5 | 2,5 | 2,5 | 2,5 | 2,5 | 2,5 | 2,5 |
| Vulkacit® NZ/EGC | 2,0 | 2,0 | 2,0 | 2,0 | 2,0 | 2,0 | 2,0 |
| Maximale Temperatur [°C] | 60 | 60 | 60 | 60 | 60 | 60 | 60 |

An den unvulkanisierten Kautschukmischungen wurden die Mooneyviskosität und die Mooneyrelaxation nach 10 und 30 sec bestimmt.

**Tabelle 1.5:**

| Compound Nr. | 1.1 | 1.2* | 1.3* | 1.4* | 1.5 | 1.6 | 1.7* |
|---|---|---|---|---|---|---|---|
| ML 1+1 (100°C) [ME] | 90,9 | 101,5 | 94,9 | 88,2 | 85,2 | 84,7 | 94,0 |
| ML 1+4 (100°C) [ME] | 77,2 | 84,8 | 79,7 | 73,5 | 70,9 | 69,4 | 78,1 |
| Mooneyrelaxation /10 sec. [%] | 23,8 | 24,5 | 24,2 | 23,7 | 23,5 | 23,8 | 24,1 |
| Mooneyrelaxation /30 sec. [%] | 18,3 | 19,1 | 18,8 | 18,4 | 18,1 | 18,2 | 18,9 |

Das Vulkanisationsverhalten der Mischungen wurde im Rheometer bei 160°C nach DIN 53 529 mit Hilfe des Monsantorheometers MDR 2000E untersucht.

**Tabelle 1.6:**

| Compound Nr. | 1.1 | 1.2* | 1.3* | 1.4* | 1.5 | 1.6 | 1.7* |
|---|---|---|---|---|---|---|---|
| $F_{min.}$ [dNm] | 4,35 | 5,12 | 4,76 | 4,28 | 4,22 | 3,81 | 4,71 |
| $F_{max}$ [dNm] | 21,09 | 22,56 | 21,59 | 19,88 | 19,76 | 19,96 | 20,22 |

(fortgesetzt)

| Compound Nr. | 1.1 | 1.2* | 1.3* | 1.4* | 1.5 | 1.6 | 1.7* |
|---|---|---|---|---|---|---|---|
| $F_{max}$ - $F_{min.}$ [dNm] | 16,74 | 17,44 | 16,83 | 15,60 | 15,54 | 16,15 | 15,51 |
| $t_{10}$ [sec] | 115 | 115 | 105 | 89 | 82 | 60 | 86 |
| $t_{50}$ [sec] | 192 | 179 | 161 | 137 | 129 | 105 | 130 |
| $t_{90}$ [sec] | 715 | 516 | 399 | 264 | 213 | 144 | 206 |
| $t_{95}$ [sec] | 1011 | 728 | 578 | 369 | 271 | 161 | 261 |
| $t_{90}$-$t_{10}$ [sec] | 600 | 401 | 294 | 175 | 131 | 84 | 120 |
| $F_{15\ min.}$ [dNm] | 20,00 | 22,07 | 21,36 | 19,86 | 19,61 | 16,97 | 20,13 |
| $F_{20\ min.}$ [dNm] | 20,56 | 22,40 | 21,54 | 19,85 | 19,44 | 16,29 | 20,01 |
| $F_{25\ min.}$ [dNm] | 20,89 | 22,54 | 21,56 | 19,92 | 19,26 | 15,87 | 19,87 |
| $F_{25\ min}$ - $F_{max}$ [dNm] | -0,2 | -0,02 | -0,03 | 0,04 | -0,5 | -4,09 | -0,35 |

Die für die Vulkanisatcharakterisierung notwendigen Prüfkörper wurden durch Pressenvulkanisation unter folgenden Bedingungen hergestellt:

**Tabelle 1.7:**

| Compound Nr. | 1.1 | 1.2* | 1.3* | 1.4* | 1.5 | 1.6 | 1.7* |
|---|---|---|---|---|---|---|---|
| Temperatur [°C] | 160 | 160 | 160 | 160 | 160 | 160 | 160 |
| Zeit [min.] | 30 | 26 | 23 | 20 | 18 | 16 | 18 |

Die Vulkanisateigenschaften sind in folgender Tabelle zusammengefasst.

**Tabelle 1.8:**

| Compound Nr. | 1.1 | 1.2* | 1.3* | 1.4* | 1.5 | 1.6 | 1.7* |
|---|---|---|---|---|---|---|---|
| Shore A-Härte bei 23°C DIN 53505 | 68,8 | 68,0 | 66,7 | 67,6 | 65,5 | 66,7 | 65,8 |
| Shore A Härte bei 70°C DIN 53505 | 59,5 | 62,2 | 59,8 | 60,2 | 60,3 | 58 | 62 |
| Rückprallelastizität/0°C DIN 53512 [%] [%] | 20,0 | 31,5 | 30,0 | 29,5 | 28,0 | 23,7 | 23,5 |
| Rückprallelastizität/23°C DIN 53512 [%] [%] | 45,6 | 45,2 | 44,4 | 42,5 | 41,9 | 36,7 | 46,1 |
| Rückprallelastizität/70°C DIN 53512 [%] [%] | 56,4 | 57,1 | 56,9 | 54,8 | 53,5 | 48,1 | 54,8 |
| Rückprallelastizität/100°C DIN 53512 [%] [%] | 62,3 | 62,4 | 61,8 | 60,1 | 58,2 | 51,7 | 59,2 |
| $\sigma_{10}$ DIN 53504 [MPa] | 0,6 | 0,6 | 0,6 | 0,6 | 0,6 | 0,7 | 0,6 |
| $\sigma_{25}$ DIN 53504 [MPa] | 1,1 | 1,0 | 1,0 | 1,0 | 1,0 | 1,1 | 1,0 |
| $\sigma_{50}$ DIN 53504 [MPa] | 1,6 | 1,5 | 1,5 | 1,6 | 1,5 | 1,7 | 1,5 |
| $\sigma_{100}$DIN 53504 [MPa] | 3,2 | 2,8 | 2,8 | 2,8 | 2,8 | 3,1 | 2,6 |
| $\sigma_{300}$ DIN 53504 [MPa] | 17,2 | 15,0 | 15,1 | 14,6 | 14,5 | 14,5 | 13,6 |
| Zugfestigkeit DIN 53504 [MPa] | 17,4 | 15,5 | 16,4 | 18,0 | 18,0 | 21,2 | 13,5 |

(fortgesetzt)

| Compound Nr. | 1.1 | 1.2* | 1.3* | 1.4* | 1.5 | 1.6 | 1.7* |
|---|---|---|---|---|---|---|---|
| Bruchdehnung DIN 53504 [MPa] | 301 | 311 | 318 | 365 | 357 | 430 | 298 |
| Abrieb DIN 53516 [mm3] | 80 | 52 | 50 | 56 | 54 | 83 | 38 |
| E' (-60°C) / 10 Hz [MPa] | 3019 | 990 | 1252 | 1318 | 1735 | 2833 | 521 |
| E' (-50°C) / 10 Hz [MPa] | 1776 | 308 | 342 | 328 | 439 | 677 | 147 |
| E' (-40°C) / 10 Hz [MPa] | 663 | 110 | 113 | 98 | 120 | 176 | 62,0 |
| E' (-30°C) / 10 Hz [MPa] | 140 | 52,3 | 54,6 | 47,8 | 55,1 | 83,7 | 37,5 |
| E' (-20°C) / 10 Hz [MPa] | 53,1 | 32,2 | 33,3 | 29,9 | 33,9 | 54,4 | 25,9 |
| E' (-10°C) / 10 Hz [MPa] | 30,0 | 23,1 | 23,8 | 21,5 | 24,2 | 40,5 | 20,1 |
| E' (0°C) / 10 Hz [MPa] | 20,79 | 18,04 | 18,52 | 16,94 | 18,65 | 32,29 | 16,43 |
| E' (60°C) / 10 Hz [MPa] | 8,14 | 8,26 | 8,49 | 7,35 | 7,95 | 13,46 | 8,03 |
| E" (60°C) / 10 Hz [MPa] | 0,85 | 0,84 | 0,87 | 0,79 | 0,92 | 1,71 | 0,86 |
| tan $\delta$ (60°C) / 10 Hz | 0,104 | 0,102 | 0,102 | 0,107 | 0,115 | 0,127 | 0,107 |

In der ***1. Mischungsserie*** wird gezeigt, dass bei Variation des Mengenverhältnisses von Lösungs-SBR, 1,4-cis-Polybutadien und NR unter Einsatz des L-SBR Typs VSL 2525-0 M mit Tg =-49°C nur bei den ***erfindungsgemäßen Beispielen 1.2****, ***1.3****, ***1.4* und 1.7**** positive Eigenschaften bezüglich Reversionsbeständigkeit, Speichermodul (E'), tan $\delta$(60°C) und Abriebwiderstand erhalten werden. Bei den erfindungsgemäßen Beispielen liegt der Naturkautschukanteil unter 45 Gew.-Teile (10 bis 35 Gew.-Teile) und die Matrix-Tg liegt im Bereich -73,0°C bis -84,1°C. Bei einer nicht erfindungsgemäßen Glasübergangstemperatur der Kautschukmatrix von -58,4°C (nicht erfindungsgemäßes ***Beispiel 1.1***) sind der DIN-Abrieb sowie die Speichermoduln (E') bei -60°C, - 50°C und -40°C nicht zufriedenstellend. Bei den ***nicht erfindungsgemäßen Beispielen 1.5 und 1.6*** mit NR-Anteilen von 45 und 80 Gew.-Teilen nimmt der Vulkanisationsgrad nach Erreichen des Maximums wieder ab (Reversion). Dies ist ein Hinweis auf ein schlechtes Alterungsverhalten (Modulabfall während der Gebrauchszeit). Des Weiteren ist bei den ***nicht erfindungsgemäßen Beispielen 1.5 und 1.6*** tan $\delta$ (60°C) nicht zufriedenstellend. Bei den erfindungsgemäßen Beispielen mit NR-Anteilen von 10 bis 35 Gew.-Teilen sind die Reversionsbeständigkeiten ausreichend.

**2) Mischungsserie**

In der ***Mischserie 2)*** wurden durch Variation der Mengenverhältnisse von Lösungs-SBR, cis-1,4-Polybutadien und Naturkautschuk die Glasübergangstemperaturen der Kautschukmatrix zwischen - 43,8°C und 87,3°C variiert (siehe nachfolgende Tabelle 2.1). Bei den ***nicht erfindungsgemäßen Beispiele 2.1***, ***2.2***, ***2.3***, ***2.4 und*** 2.7 beträgt die berechnete Glasübergangstemperatur der Kautschukmatrix von -43,8°C, -61,2°C, -61,3°C, -61,5 und -63,6°C. Die ***nicht erfindungsgemäßen Beispiele 2.7 und 2.8*** enthalten NR in Mengen von 70 und 80 Gew.-Teilen. Nur bei den ***erfindungsgemäßen Beispielen 2.5* und 2.6**** liegt sowohl die Glasübergangstemperatur der Kautschukmatrix als auch der NR-Anteil im erfindungsgemäßen Bereich.

**Tabelle 2.1: Glasübergangstemperatur der Kautschukmatrix**

| *Compound Nr.* | *2.1* | *2.2* | *2.3* | *2.4* | *2.5** | *2.6** | *2.7* | *2.8* |
|---|---|---|---|---|---|---|---|---|
| Buna® VSL 5025-0 HM | 70 | 50 | 45 | 30 | 30 | 20 | 20 | 10 |
| Buna® CB 24 | 20 | 40 | 35 | 25 | 50 | 70 | 10 | 40 |
| TSR / RSS 3 DEFO 1000 | 10 | 10 | 20 | 45 | 20 | 10 | 70 | 50 |
| Matrix-Tg | -43,8 | -61,2 | -61,3 | -63,6 | -74,3 | -87,3 | -61,5 | -78,8 |

| Tabelle 2.2: 1. Mischstufe im Innenmischer | | | | | | | | |
|---|---|---|---|---|---|---|---|---|
| ***Compound Nr.*** | ***2.1*** | ***2.2*** | ***2.3*** | ***2.4*** | ***2.5**** | ***2.6**** | ***2.7*** | ***2.8.*** |
| **Zugabezeitpunkt: 0 sec.** | | | | | | | | |
| Buna® VSL 5025-0 HM | 70 | 50 | 45 | 30 | 30 | 20 | 20 | 10 |
| Buna® CB 24 | 20 | 40 | 35 | 25 | 50 | 70 | 10 | 40 |
| TSR / RSS 3 DEFIO 1000 | 10 | 10 | 20 | 45 | 20 | 10 | 70 | 50 |
| **Zugabezeitpunkt: 30 sec.** | | | | | | | | |
| Ultrasil(R)VN3 | 53 | 53 | 53 | 53 | 53 | 53 | 53 | 53 |
| BR-Mikrogel | 10 | 10 | 10 | 10 | 10 | 10 | 10 | 10 |
| Vulkanox® HS/LG | 1,0 | 1,0 | 1,0 | 1,0 | 1,0 | 1,0 | 1,0 | 1,0 |
| Vulkanox® 4020/LG | 1,0 | 1,0 | 1,0 | 1,0 | 1,0 | 1,0 | 1,0 | 1,0 |
| Stearinsäure | 1,0 | 1,0 | 1,0 | 1,0 | 1,0 | 1,0 | 1,0 | 1,0 |
| Ozonwachs | 1,4 | 1,4 | 1,4 | 1,4 | 1,4 | 1,4 | 1,4 | 1,4 |

| Tabelle 2.2: 1. Mischstufe im Innenmischer | | | | | | | | |
|---|---|---|---|---|---|---|---|---|
| Si75 | 3,2 | 3,2 | 3,2 | 3,2 | 3,2 | 3,2 | 3,2 | 3,2 |
| **Zugabezeitpunkt: 90 sec.** | | | | | | | | |
| Ultrasil® VN3 | 27 | 27 | 27 | 27 | 27 | 27 | 27 | 27 |
| Mineralöl | 20 | 20 | 20 | 20 | 20 | 20 | 20 | 20 |
| Ruß | 12 | 12 | 12 | 12 | 12 | 12 | 12 | 12 |
| **Zugabezeitpunkt: 150 sec.** | | | | | | | | |
| Zinkoxid | 2,5 | 2,5 | 2,5 | 2,5 | 2,5 | 2,5 | 2,5 | 2,5 |
| **Aufheizung ab 210 sec.** | | | | | | | | |
| Maximale Temperatur [°C] | 165 | 165 | 165 | 165 | 165 | 165 | 165 | 165 |
| Zeit bei max.Temperatur [min.] | 6 | 6 | 6 | 6 | 6 | 6 | 6 | 6 |
| Abkühlung auf Walze [°C] | <90 | <90 | <90 | <90 | <90 | <90 | <90 | <90 |
| Lagerung bei 23°C [h] | 24 | 24 | 24 | 24 | 24 | 24 | 24 | 24 |

| Tabelle 2.3: 2. Mischstufe im Innenmischer | | | | | | | | |
|---|---|---|---|---|---|---|---|---|
| **Compound Nr.** | **2.1** | **2.2** | **2.3** | **2.4** | **2.5*** | **2.6*** | **2.7** | **2.8** |
| Si75 | 3,2 | 3,2 | 3,2 | 3,2 | 3,2 | 3,2 | 3,2 | 3,2 |
| Maximale Temperatur [°C] | 150 | 150 | 150 | 150 | 150 | 150 | 150 | 150 |
| Zeit bei max.Temperatur [min.] | 6 | 6 | 6 | 6 | 6 | 6 | 6 | 6 |
| Abkühlung auf Walze [°C] | <60 | <60 | <60 | <60 | <60 | <60 | <60 | <60 |

| Tabelle 2.4: 3. Mischstufe (Walze) | | | | | | | | |
|---|---|---|---|---|---|---|---|---|
| **Compound Nr.** | **2.1** | **2.2** | **2.3** | **2.4** | **2.5*** | **2.6*** | **2.7** | **2.8** |
| Schwefel [17)] | 2,0 | 2,0 | 2,0 | 2,0 | 2,0 | 2,0 | 2,0 | 2,0 |

(fortgesetzt)

| Tabelle 2.4: 3. Mischstufe (Walze) | | | | | | | | |
|---|---|---|---|---|---|---|---|---|
| **Compound Nr.** | **2.1** | **2.2** | **2.3** | **2.4** | **2.5*** | **2.6*** | **2.7** | **2.8** |
| Rhenogran DPG-80 | 2,5 | 2,5 | 2,5 | 2,5 | 2,5 | 2,5 | 2,5 | 2,5 |
| Vulkacit® NZ/EGC | 2,0 | 2,0 | 2,0 | 2,0 | 2,0 | 2,0 | 2,0 | 2,0 |
| Maximale Temperatur [°C] | 60 | 60 | 60 | 60 | 60 | 60 | 60 | 60 |

An den unvulkanisierten Kautschukmischungen wurden die Mooneyviskosität und die Mooneyrelaxation nach 10 und 30 sec bestimmt.

**Tabelle 2.5:**

| Compound Nr. | 2.1 | 2.2 | 2.3 | 2.4 | 2.5* | 2.6* | 2.7 | 2.8 |
|---|---|---|---|---|---|---|---|---|
| ML 1+1 (100°C) [ME] | 114,0 | 117,5 | 109,1 | 94,7 | 115,1 | 123 | 96,4 | 102,9 |
| ML 1+4 (100°C) [ME] | 91,4 | 94,1 | 88,5 | 75,3 | 91,7 | 98,0 | 76,02 | 81,5 |
| Mooneyrelaxation /10 sec. [%] | 25,4 | 26,0 | 25,5 | 23,8 | 26,3 | 26,5 | 25,1 | 25,9 |
| Mooneyrelaxation /30 sec. [%] | 19,7 | 20,4 | 20,0 | 18,2 | 20,9 | 21,1 | 19,3 | 20,5 |

Das Vulkanisationsverhalten der Mischungen wurde im Rheometer bei 160°C nach DIN 53 529 mit Hilfe des Monsantorheometers MDR 2000E untersucht.

**Tabelle 2.6:**

| Vulkanisationsverhalten | | | | | | | | |
|---|---|---|---|---|---|---|---|---|
| **Compound Nr.** | **2.1** | **2.2** | **2.3** | **2.4** | **2.5*** | **2.6*** | **2.7** | **2.8** |
| $F_{min.}$ [dNm] | 4,43 | 4,88 | 4,60 | 3,57 | 5,0 | 5,3 | 3,6 | 4,2 |
| $F_{max}$ [dNm] | 23,05 | 23,2 | 21,88 | 18,68 | 21,64 | 22,35 | 18,94 | 19,2 |
| $F_{max}$ - $F_{min.}$ [dNm] | 18,62 | 18,32 | 17,28 | 15,11 | 16,64 | 17,05 | 15,34 | 15,0 |
| $t_{10}$ [sec] | 137 | 121 | 114 | 94 | 100 | 108 | 72 | 78 |
| $t_{50}$ [sec] | 234 | 193 | 174 | 140 | 151 | 159 | 114 | 119 |
| $t_{90}$ [sec] | 744 | 528 | 385 | 220 | 302 | 271 | 165 | 166 |
| $t_{95}$ [sec] | 1012 | 745 | 545 | 266 | 432 | 366 | 188 | 188 |
| $t_{90}$-$t_{10}$ [sec] | 607 | 407 | 271 | 146 | 202 | 163 | 93 | 88 |
| $F_{15min.}$ [dNm] | 21,82 | 22,63 | 21,67 | 18,50 | 21,56 | 22,34 | 17,40 | 18,13 |
| $F_{20\ min.}$ [dNm] | 22,49 | 23,01 | 21,81 | 18,31 | 21,62 | 22,27 | 16,94 | 17,73 |
| $F_{25min}$. [dNm] | 22,86 | 23,13 | 21,86 | 18,15 | 21,60 | 22,17 | 16,61 | 17,47 |
| $F_{25\ min}$ - $F_{max}$ [dNm] | -0,19 | -0,07 | -0,02 | -0,53 | -0,04 | -0,18 | -2,33 | -1,73 |

Die für die Vulkanisatcharakterisierung notwendigen Prüfkörper wurden durch Pressenvulkanisation unter folgenden Bedingungen hergestellt.

**Tabelle 2.7 Vulkanisationszeit**

| Compound Nr | 2.1 | 2.2 | 2.3 | 2.4 | 2.5* | 2.6* | 2.7 | 2.8 |
|---|---|---|---|---|---|---|---|---|
| Temperatur [°C] | 160 | 160 | 160 | 160 | 160 | 160 | 160 | 160 |
| Zeit [min.] | 30 | 26 | 23 | 18 | 21 | 20 | 17 | 17 |

Die Vulkanisateigenschaften sind in folgender Tabelle zusammengefasst.

**Tabelle 2.8: Vulkanisateigenschaften**

| Compound Nr. | 2.1 | 2.2 | 2.3 | 2.4 | 2.5* | 2.6* | 2.7 | 2.8 |
|---|---|---|---|---|---|---|---|---|
| Shore A-Härte bei 23°C DIN 53505 | 68,5 | 68,9 | 68,8 | 65,6 | 66,6 | 67,2 | 66,3 | 64,9 |
| Shore A Härte bei 70°C DIN 53505 | 62,0 | 60,7 | 61,0 | 56,2 | 58,0 | 59,0 | 56,0 | 54,2 |
| Rückprallelastizität/0°C DIN 53512 [%] [%] | 9,0 | 18,0 | 18,8 | 21,0 | 27,0 | 35,0 | 19,0 | 30,5 |
| Rückprallelastizität/23°C DIN 53512 [%] [%] | 28,6 | 37,5 | 38,2 | 37,6 | 42,8 | 47,3 | 34,3 | 42,8 |
| Rückprallelastizität/70°C DIN 53512 [%] [%] | 59,5 | 59,6 | 60,4 | 57,3 | 58,9 | 60,3 | 52,1 | 54,5 |
| Rückprallelastizität/100°C DIN 53512 [%] [%] | 66,3 | 65,2 | 64,3 | 61,7 | 63,2 | 63,5 | 57,3 | 59,2 |
| $\sigma_{10}$ DIN 53504 [MPa] | 0,6 | 0,6 | 0,6 | 0,6 | 0,6 | 0,6 | 0,7 | 0,6 |
| $\sigma_{25}$ DIN 53504 [MPa] | 1,1 | 1,1 | 1,0 | 1,0 | 1,1 | 1,1 | 1,1 | 1,0 |
| $\sigma_{50}$ DIN 53504 [MPa] | 1,7 | 1,6 | 1,6 | 1,6 | 1,6 | 1,6 | 1,7 | 1,5 |
| $\sigma_{100}$ DIN 53504 [MPa] | 3,5 | 3,1 | 3,1 | 2,9 | 3,0 | 2,7 | 3,2 | 2,7 |
| $\sigma_{300}$ DIN 53504 [MPa] | - | 17,4 | 17,2 | 15,8 | 16,3 | 15,0 | 16,1 | 14,6 |
| Zugfestigkeit DIN 53504 [MPa] | 17,8 | 18,1 | 17,7 | 19,4 | 16,9 | 17,9 | 21,2 | 14,6 |
| Bruchdehnung DIN 53504 | 271 | 310 | 311 | 359 | 306 | 336 | 390 | 301 |
| [MPa] | | | | | | | | |
| Abrieb DIN 53516 [mm3] | 92 | 62 | 61 | 67 | 43 | 31 | 73 | 43 |
| E' (-60°C) / 10 Hz [MPa] | 2042 | 1781 | 1930 | 2383 | 1016 | 315 | 3280 | 1181 |
| E' (-50°C) / 10 Hz [MPa] | 1708 | 993 | 1061 | 950 | 405 | 153 | 1270 | 319 |
| E' (-40°C) / 10 Hz [MPa] | 1272 | 447 | 416 | 301 | 162 | 83,7 | 346 | 108 |
| E' (-30°C) / 10 Hz [MPa] | 823 | 178 | 155 | 112 | 74,9 | 47,3 | 135 | 53,7 |
| E' (-20°C) / 10 Hz [MPa] | 281 | 78,6 | 69,9 | 53,7 | 42,8 | 29,1 | 71,1 | 34,1 |
| E' (-10°C) / 10 Hz [MPa] | 85,1 | 40,4 | 36,2 | 31,7 | 28,2 | 21,5 | 44,8 | 24,8 |
| E' (0°C) / 10 Hz [MPa] | 35,3 | 25,3 | 22,9 | 21,7 | 20,7 | 17,1 | 31,5 | 19,6 |
| tan $\delta$ (60°C) /10 Hz | 0,096 | 0,095 | 0,093 | 0,104 | 0,101 | 0,097 | 0,118 | 0,115 |

In der ***2. Mischungsserie*** wird gezeigt, dass bei Variation der Mengenverhältnisse von Lösungs-SBR, 1,4-cis-Polybutadien und NR unter Einsatz des L-SBR Typs Buna® VSL 5025-0 HM mit Tg=--22°C nur dann eine zufriedenstellende Eigenschaftskombination erhalten wird, wenn sowohl die Glasübergangstemperatur der Kautschukmatrix als auch der Naturkautschukanteil im erfindungsgemäßen Bereich liegen. Bei Glastemperaturen der Kautschuk-Matrix von -43,8°C (***nicht erfindungsgemäßes Beispiel 2.1***), -61,2°C (***nicht erfindungsgemäßes Beispiel 2.2***), und - 61,3°C (***nicht erfindungsgemäßes Beispiel 2.3***) werden keine zufriedenstellenden Eigenschaften erhalten, obwohl in diesen Beispielen der NR-Anteil im erfindungsgemäßen Bereich liegt. Bei diesen Beispielen ist der DIN-Abrieb zu hoch. Außerdem ist bei diesen Beispielen der Speichermodul E' nicht bei allen Temperaturen ausreichend. Bei den ***nicht erfindungsgemäßen Beispielen 2.4***, ***2.7 und 2.8*** mit NR-Anteilen von 45, 70 und 50 Gew.-Teilen ist die Reversionsbeständigkeit der Kautschukmischungen nicht ausreichend. Auch ist bei den nicht erfindungsgemäßen Beispielen 2.7 und 2.8 tan 8 bei 60°C (Rollwiderstand) der Vulkanisate nicht zufriedenstellend. Des Weiteren sind bei dem ***nicht erfindungsgemäßen Beispiel 2.7*** der Speichermodul E'(-60°C), E'(-50°C), E'(-20°C), E'(0°C) und der Abriebwiderstand nicht

ausreichend Bei den ***erfindungsgemäßen Beispielen 2.5* und 2.6**** sind die Reversionsbeständigkeit, die Speichermoduln im Temperaturbereich -60°C bis 0°C, der Rollwiderstand und das Abriebverhalten zufriedenstellend.

## 3. Mischungsserie

In der ***3. Mischungsserie*** wird bei konstantem Mischungsverhältnis von L-SBR, Nd-BR und NR der L-SBR-Typ variiert. Durch diese Maßnahme wird die berechnete Glasübergangstemperatur der Kautschukmatrix zwischen -57,2°C und -73,4°C variiert. Außerdem werden bei gleicher Zusammensetzung der Kautschukmatrix die Eigenschaften mikrogelhaltiger und mikrogelfreier Kautschukmischungen (10 phr Mikrogel) verglichen. Nur bei der mikrogelhaltigen Kautschukmischung des ***erfindungsgemäßen Beispiels 3.6**** mit einer Matrix-Tg =-73,4°C wird die Kombination der erforderlichen vorteilhaften Eigenschaften gefunden.

| **Tabelle 3.1: Glasübergangstemperatur der Kautschukmatrix** | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| Buna® VSL5025-2 HM | 61,88 | 61,88 | - | - | - | - | - | - |
| Buna® VSL 5228-2 | - | - | 61,88 | 61,88 | - | - | - | - |
| Buna® VSL 2525 -0 M | - | - | - | - | 45,0 | 45,0 | - | - |
| Buna® VSL 5025-0 HM | - | - | - | - | - | - | 45,0 | 45,0 |
| Buna® CB 24 | 35 | 35 | 35 | 35 | 35 | 35 | 35 | 35 |
| TSR / RSS 3 DEFO 1000 | 20 | 20 | 20 | 20 | 20 | 20 | 20 | 20 |
| Matrix-Tg [°C] | -61,25 | | -57,20 | | -73,4 | | -61,25 | |

| **Tabelle 3.2: 1. Mischstufe (Innenmischer)** | | | | | | | | |
|---|---|---|---|---|---|---|---|---|
| **Compound Nr.** | **3.1** | **3.2** | **3.3** | **3.4** | **3.3** | **3.6*** | **3.7** | **3.8** |
| **Zugabezeitpunkt: 0 sec.** | | | | | | | | |
| Buna® VSL5025-2 HM | 61,88 | 61,88 | - | - | - | - | - | - |
| Buna® VSL 5228-2 | - | - | 61,88 | 61,88 | - | - | - | - |
| Buna® VSL 2525 -0 HM | - | - | - | - | 45,0 | 45,0 | - | - |
| Buna@VSL 5025-0 HM | - | - | - | - | - | - | 45,0 | 45,0 |
| Buna® CB 24 | 35 | 35 | 35 | 35 | 35 | 35 | 35 | 35 |
| TSR / RSS 3 DEFO 1000 | 20 | 20 | 20 | 20 | 20 | 20 | 20 | 20 |
| **Zugabezeitpunkt: 60 sec.** | | | | | | | | |
| Ultrasil® 7000 GR | 80 | 80 | 80 | 80 | 80 | 80 | 80 | 80 |
| Si 75 | 6,5 | 6,5 | 6,5 | 6,5 | 6,5 | 6,5 | 6,5 | 6,5 |
| Ruß | 12 | 12 | 12 | 12 | 12 | 12 | 12 | 12 |
| BR-Mikrogel | - | 10 | - | 10 | - | 10 | - | 10 |
| **Aufheizung: 65 -90 sec.** | | | | | | | | |

| **Tabelle 3.2: 1. Mischstufe (Innenmischer)** | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| Maximale Temperatur [°C] | 140 | 140 | 140 | 140 | 140 | 140 | 140 | 140 |
| Zeit bei max.Temperatur [sec.] | 120 | 120 | 120 | 120 | 120 | 120 | 120 | 120 |

(fortgesetzt)

| Zugabe: 210 sec. | | | | | | | | |
|---|---|---|---|---|---|---|---|---|
| Mineralöl | 20 | 20 | 20 | 20 | 30 | 30 | 30 | 30 |
| Vulkanox® HS/LG | 2,0 | 2,0 | 2,0 | 2,0 | 2,0 | 2,0 | 2,0 | 2,0 |
| Vulkanox® 4020/LG | 1,0 | 1,0 | 1,0 | 1,0 | 1,0 | 1,0 | 1,0 | 1,0 |
| Ozonwachs | 2,0 | 2,0 | 2,0 | 2,0 | 2,0 | 2,0 | 2,0 | 2,0 |
| Stearinsäure | 1,0 | 1,0 | 1,0 | 1,0 | 1,0 | 1,0 | 1,0 | 1,0 |
| Zinkoxid | 2,5 | 2,5 | 2,5 | 2,5 | 2,5 | 2,5 | 2,5 | 2,5 |
| Rhenogran® DPG-80 | 2,5 | 2,5 | 2,5 | 2,5 | 2,5 | 2,5 | 2,5 | 2,5 |
| **Auswurf: 300 sec.** | | | | | | | | |
| Abkühlung und Lagerung bei 23°C [h] | 24 | 24 | 24 | 24 | 24 | 24 | 24 | 24 |

| **Tabelle 3.3: 2. Mischstufe (Innenmischer)** | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| Maximale Temperatur [°C] | 140 | 140 | 140 | 140 | 140 | 140 | 140 | 140 |
| Zeit bei max. Temperatur [sec.] | 120 | 120 | 120 | 120 | 120 | 120 | 120 | 120 |
| Abkühlung auf Walze | <60 | <60 | <60 | <60 | <60 | <60 | <60 | <60 |

| **Tabelle 3.4: 3. Mischstufe (Walze)** | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| Schwefel | 2,0 | 2,0 | 2,0 | 2,0 | 2,0 | 2,0 | 2,0 | 2,0 |
| Vulkacit® NZ/EGC | 2,0 | 2,0 | 2,0 | 2,0 | 2,0 | 2,0 | 2,0 | 2,0 |
| Maximale Temperatur [°C] | 60 | 60 | 60 | 60 | 60 | 60 | 60 | 60 |

An der unvulkanisierten Kautschukmischung wurden die Mooneyviskosität und die Mooneyrelaxation nach 10 und 30 sec bestimmt.

| **Tabelle 3.5** | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| ML 1+1 (100°C) [ME] | 60,7 | 69,4 | 61,2 | 67,8 | 59,7 | 64,7 | 57,3 | 64,3 |
| ML 1+4 (100°C) [ME] | 53,8 | 62,1 | 54,1 | 60,7 | 51,8 | 56,8 | 49,5 | 56,8 |
| Mooneyrelaxation /10 sec. [%] | 17,1 | 18,1 | 17,9 | 18,6 | 18,4 | 18,5 | 16,0 | 16,2 |
| Mooneyrelaxation /30 sec. [%] | 11,6 | 12,4 | 12,3 | 13,1 | 13,4 | 13,5 | 11,1 | 11,3 |

Das Vulkanisationsverhalten der Mischungen wurde im Rheometer bei 160°C nach DIN 53 529 mit Hilfe des Monsantorheometers MDR 2000E untersucht.

| **Tabelle 3.6** | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| $F_{min.}$ [dNm] | 2,36 | 2,93 | 2,21 | 2,77 | 2,28 | 2,89 | 1,99 | 2,67 |

(fortgesetzt)

| Tabelle 3.6 | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| $F_{max}$ [dNm] | 21,62 | 18,11 | 19,5 | 17,9 | 22,03 | 20,71 | 21,86 | 20,26 |
| $F_{max}$ - $F_{min.}$ [dNm] | 19,27 | 15,18 | 17,29 | 15,13 | 19,75 | 17,82 | 19,87 | 17,59 |
| $t_{10}$ [sec] | 125 | 164 | 148 | 172 | 125 | 133 | 142 | 152 |
| $t_{50}$ [sec] | 265 | 347 | 320 | 363 | 294 | 311 | 309 | 326 |
| $t_{90}$ [sec] | 463 | 554 | 535 | 584 | 455 | 495 | 540 | 580 |
| $t_{95}$ [sec] | 618 | 711 | 698 | 755 | 576 | 634 | 714 | 769 |
| $t_{90}$-$t_{10}$ [sec] | 338 | 390 | 387 | 312 | 330 | 362 | 298 | 328 |
| $F_{15\ min.}$ [dNm] | 21,36 | 17,75 | 19,10 | 14,47 | 21,87 | 20,47 | 21,37 | 19,70 |
| $F_{20\ min.}$ [dNm] | 21,58 | 18,02 | 19,45 | 17,80 | 22, | 20,68 | 21,76 | 20,12 |
| $F_{25\ min.}$ [dNm] | 21,59 | 18,09 | 19,47 | 17,89 | 21,96 | 20,68 | 21,85 | 20,22 |
| $F_{25\ min}$ - $F_{max}$ [dNm] | -0,03 | -0,02 | -0,03 | -0,01 | -0,07 | -0,03 | -0,01 | -0,04 |

Die für die Vulkanisatcharakterisierung notwendigen Prüfkörper wurden durch Pressenvulkanisation unter folgenden Bedingungen hergestellt.

**Tabelle 3.7:**

| Vulkanisationszeit | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| Temperatur [°C] | 160 | 160 | 160 | 160 | 160 | 160 | 160 | 160 |
| Zeit [min.] | 30 | 30 | 30 | 30 | 30 | 30 | 30 | 30 |

Die Vulkanisateigenschaften sind in folgender Tabelle zusammengefasst.

**Tabelle 3.8:**

| Vulkanisateigenschaften | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| Shore A-Härte bei 23°C DIN 53505 | 63,6 | 60,4 | 61,9 | 61,2 | 65,5 | 62,9 | 64,7 | 64,3 |
| Shore A Härte bei 70°C DIN 53505 | 63,3 | 58 | 57,3 | 57,5 | 59,7 | 58,0 | 59 | 58 |
| Rückprallelastizität/23°C DIN 53512 [%] [%] | 33,9 | 38,4 | 30,1 | 35,2 | 38,1 | 42,7 | 31,9 | 36,3 |
| Rückprallelastizität/70°C DIN 53512 [%] [%] | 57,2 | 58,0 | 55,2 | 58,0 | 50,9 | 56,5 | 52,2 | 57,9 |
| Weiterreißfestigkeit/23°C [N/mm] | 53,4 | 60,7 | 60,9 | 65,8 | 46,7 | 50,5 | 46,8 | 41,6 |
| Weiterreißfestigkeit/70°C [N/mm] | 29,8 | 39,1 | 25,5 | 31,3 | 36,9 | 35,0 | 33,6 | 29,8 |
| $\sigma_{10}$ DIN 53504 [MPa] | 0,6 | 0,5 | 0,6 | 0,5 | 0,6 | 0,6 | 0,7 | 0,6 |
| $\sigma_{25}$ DIN 53504 [MPa] | 1,0 | 0,8 | 0,9 | 0,9 | 1,0 | 0,9 | 1,0 | 1,0 |
| $\sigma_{50}$ DIN 53504 [MPa] | 1,4 | 1,3 | 1,3 | 1,3 | 1,3 | 1,4 | 1,4 | 1,5 |
| $\sigma_{100}$ DIN 53504 [MPa] | 2,5 | 2,3 | 2,3 | 2,5 | 2,1 | 2,3 | 2,4 | 2,6 |

(fortgesetzt)

| Vulkanisateigenschaften | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| $\sigma_{300}$ DIN 53504 [MPa] | 12,1 | 11,5 | 11,3 | 11,9 | 9,7 | 11,0 | 11,4 | 12,5 |
| $\sigma_{300}/\sigma_{25}$ | 12,1 | 14,4 | 12,6 | 13,2 | 9,7 | 12,2 | 11,4 | 12,5 |
| Zugfestigkeit DIN 53504 [MPa] | 18,0 | 18,6 | 18,6 | 17,2 | 19,5 | 19,2 | 20,1 | 17,6 |
| Bruchdehnung DIN 53504 [MPa] | 397 | 448 | 438 | 404 | 484 | 459 | 449 | 396 |
| Abrieb DIN 53516 [mm3] | 65 | 58 | 63 | 64 | 48 | 36 | 63 | 59 |

**Tabelle 3.9**

| Temperaturabhängikgkeit von E' / Eplexor-Test* (Heizrate: 1 K/min) | | | | | | | | |
|---|---|---|---|---|---|---|---|---|
| **Compound Nr.** | **3.1** | **3.2** | **3.3** | **3.4** | **3.5** | **3.6*** | **3.7** | **3.8** |
| E' (-60°C) / 10 Hz [MPa] | 2277 | 2171 | 2397 | 2269 | 1513 | 1434 | 2256 | 1974 |
| E' (-50°C) / 10 Hz [MPa] | 1352 | 1156 | 1463 | 1316 | 571,6 | 496,2 | 1373 | 1155 |
| E' (-40°C) / 10 Hz [MPa] | 595,5 | 436,2 | 679,5 | 580,5 | 212,7 | 166,9 | 609,4 | 486,3 |
| E' (-30°C) / 10 Hz [MPa] | 242,9 | 153,7 | 291,4 | 226,7 | 110,9 | 80,4 | 273,4 | 196,4 |
| E' (-20°C) / 10 Hz [MPa] | 114,9 | 66,5 | 135,5 | 94,1 | 72,6 | 49,9 | 137,2 | 89,4 |
| E' (-10°C) / 10 Hz [MPa] | 67,8 | 35,5 | 75,3 | 48,8 | 52,8 | 36,1 | 83,6 | 50,1 |
| E' (0°C) / 10 Hz [MPa] | 45,4 | 24,2 | 47,8 | 29,8 | 40,1 | 26,4 | 56,5 | 33,7 |
| E" (60°C) 10 Hz [MPa] | 1,88 | 0,8 | 1,74 | 0,92 | 2,2 | 1,21 | 2,59 | 1,21 |
| E' (60°C) 10 Hz [MPa] | 15,6 | 8,56 | 14,14 | 9,28 | 17,62 | 12,22 | 20,08 | 11,7 |
| tan $\delta$ (60°C) | 0,121 | 0,094 | 0,123 | 0,099 | 0,125 | 0,099 | 0,129 | 0,103 |

In der ***3. Mischungsserie*** werden verschiedene Lösungs-SBR-Typen, die sich in ihrer Glasübergangstemperatur unterscheiden, eingesetzt. Das Mengenverhältnis von Lösungs-SBR, 1,4-cis-Polybutadien und Naturkautschuk wird konstant gehalten, wobei der Naturkautschukanteil jeweils 20 phr beträgt. Die berechneten Glasübergangstemperaturen der Kautschukmatrices werden von -57,2 bis -73,4°C variiert. In der ***3. Mischungsserie*** wird gezeigt, dass nur beim ***erfindungsgemäßen Beispiel*** *3.6** bei der die berechnete Glasübergangstemperatur der Kautschukmatrix-73,4°C beträgt, vorteilhafte Eigenschaften, bei E' im Temperaturbereich von -60 bis 0°C, beim Abrieb- und beim Rollwiderstand gefunden werden. Die Reversionsbeständigkeiten aller Beispiele der ***3. Mischungsserie*** sind ausreichend.

<u>**4. Mischungsserie**</u>

In der *4.* ***Mischungsserie*** wird die berechnete Glasübergangstemperatur der Kautschukmatrix im erfindungsgemäßen Bereich von -70,5°C bis -75,9°C variiert, indem die Mengenverhältnisse von L-SBR, Hoch-cis-1,4-BR und NR variiert werden. Als Hoch-cis-BR-Typen werden sowohl der Nd-BR-Typ Buna® CB 24 als auch der Co-BR-Typ Buna® CB 1203 eingesetzt. Als L-SBR werden sowohl Buna® VSL 2525-0 M als auch Buna® VSL 5025-0 HM eingesetzt. Bei allen Kautschukmischungen wird die Mikrogelmenge konstant gehalten (10 phr). Die erfindungsgemäße Kombination positiver Eigenschaften wird bei den ***erfindungsgemäßen Beispielen*** *4.1*, 4.2*, 4.3* 4.4*, 4.5, und 4.6** gefunden. Wegen nicht ausreichender Reversionsbeständigkeit sind ***Beispiele*** *4.7 und 4.8 mit NR-Anteilen von 38 und 40 phr* ***nicht erfindungsgemäß.***

| <u>**Tabelle 4.1: Glasübergangstemperatur der Kautschukmatrix**</u> | | | | | | | | |
|---|---|---|---|---|---|---|---|---|
| ***Compound Nr.*** | ***4.1**** | ***4.2**** | ***4.3**** | ***4.4**** | ***4.5**** | ***4.6**** | ***4.7*** | ***4.8*** |
| Buna® VSL 2525 -0 M | 30 | 30 | 10 | 20 | 35 | 22 | 20 | 15 |

(fortgesetzt)

| Tabelle 4.1: Glasübergangstemperatur der Kautschukmatrix | | | | | | | | |
|---|---|---|---|---|---|---|---|---|
| ***Compound Nr.*** | ***4.1**** | ***4.2**** | ***4.3**** | ***4.4**** | ***4.5**** | ***4.6**** | ***4.7*** | ***4.8*** |
| Buna® VSL 5025-0 HM | 10 | 10 | 25 | 15 | - | 10 | 10 | 10 |
| Buna® CB 24 | 45 | - | 40 | 35 | - | 33 | 32 | 35 |
| Buna® CB 1203 | - | 45 | - | - | 35 | - | - | - |
| TSR / RSS 3 DEFO 1000 | 15 | 15 | 25 | 30 | 30 | 35 | 38 | 40 |
| Matrix-Tg [°C] | -75,9 | -75,0 | -70,5 | -71,1 | -74,4 | -72,1 | -72,0 | -74,1 |

| Tabelle 4.2: 1. Mischstufe (Innenmischer) | | | | | | | | |
|---|---|---|---|---|---|---|---|---|
| ***Compound Nr.*** | ***4.1**** | ***4.2**** | ***4.3**** | ***4.4**** | ***4.5**** | ***4.6**** | ***4.7*** | ***4.8*** |
| **Zugabezeitpunkt: 0 sec.** | | | | | | | | |
| Buna® VSL 2525 -0 HM | 30 | 30 | 10 | 20 | 35 | 22 | 20 | 15 |
| Buna® VSL 5025-0 HM | 10 | 10 | 25 | 15 | | 10 | 10 | 10 |
| Buna® CB 24 | 45 | | 40 | 35 | | 33 | 32 | 35 |
| Buna® CB 1203 | | 45 | | | 35 | | | |
| TSR / RSS 3 DEFO 1000 | 15 | 15 | 25 | 30 | 30 | 35 | 38 | 40 |
| **Zugabezeitpunkt: 30 sec.** | | | | | | | | |

| Tabelle 4.2: 1. Mischstufe (Innenmischer) | | | | | | | | |
|---|---|---|---|---|---|---|---|---|
| Ultrasil® VN3 | 53 | 53 | 53 | 53 | 53 | 53 | 53 | 53 |
| BR-Mikrogel | 10 | 10 | 10 | 10 | 10 | 10 | 10 | 10 |
| Vulkanox® HS/LG | 2,0 | 2,0 | 2,0 | 2,0 | 2,0 | 2,0 | 2,0 | 2,0 |
| Vulkanox® 4020/LG | 1,0 | 1,0 | 1,0 | 1,0 | 1,0 | 1,0 | 1,0 | 1,0 |
| Stearinsäure | 1,0 | 1,0 | 1,0 | 1,0 | 1,0 | 1,0 | 1,0 | 1,0 |
| Ozonwachs | 2,0 | 2,0 | 2,0 | 2,0 | 2,0 | 2,0 | 2,0 | 2,0 |
| Si75 | 6,5 | 6,5 | 6,5 | 6,5 | 6,5 | 6,5 | 6,5 | 6,5 |
| **Zugabezeitpunkt: 90 sec.** | | | | | | | | |
| Ultrasil® 7000 GR | 27 | 27 | 27 | 27 | 27 | 27 | 27 | 27 |
| Mineralöl | 20 | 20 | 20 | 20 | 30 | 30 | 30 | 30 |
| Ruß | 12 | 12 | 12 | 12 | 12 | 12 | 12 | 12 |
| **Zugabezeitpunkt: 150 sec.** | | | | | | | | |
| Zinkoxid | 2,5 | 2,5 | 2,5 | 2,5 | 2,5 | 2,5 | 2,5 | 2,5 |
| **Aufheizung ab 210 sec.** | | | | | | | | |
| Maximale Temperatur [°C] | 150 | 150 | 150 | 150 | 150 | 150 | 150 | 150 |
| Zeit bei max.Temperatur [min.] | 6 | 6 | 6 | 6 | 6 | 6 | 6 | 6 |

(fortgesetzt)

| Aufheizung ab 210 sec. | | | | | | | | |
|---|---|---|---|---|---|---|---|---|
| Abkühlung und Lagerung bei 23°C [h] | 24 | 24 | 24 | 24 | 24 | 24 | 24 | 24 |

| Tabelle 4.3: 2. Mischstufe (Innenmischer) | | | | | | | | |
|---|---|---|---|---|---|---|---|---|
| ***Compound Nr.*** | ***4.1**** | ***4.2**** | ***4.3**** | ***4.4**** | ***4.5**** | ***4.6**** | ***4.7*** | ***4.8*** |
| Maximale Temperatur [°C] | 150 | 150 | 150 | 150 | 150 | 150 | 150 | 150 |
| Zeit bei max. Temperatur [min.] | 6 | 6 | 6 | 6 | 6 | 6 | 6 | 6 |
| Abkühlung auf Walze | <60 | <60 | <60 | <60 | <60 | <60 | <60 | <60 |

| Tabelle 4.4: 3. Mischstufe (Walze) | | | | | | | | |
|---|---|---|---|---|---|---|---|---|
| ***Compound Nr.*** | ***4.1*** | ***4.2**** | ***4.3**** | ***4.4**** | ***4.5**** | ***4.6**** | ***4.7*** | ***4.8*** |
| Schwefel | 2,0 | 2,0 | 2,0 | 2,0 | 2,0 | 2,0 | 2,0 | 2,0 |
| Vulkacit® NZ/EGC | 2,0 | 2,0 | 2,0 | 2,0 | 2,0 | 2,0 | 2,0 | 2,0 |
| Rhenogran® DPG-80 | 2,5 | 2,5 | 2,5 | 2,5 | 2,5 | 2,5 | 2,5 | 2,5 |
| Maximale Temperatur [°C] | 60 | 60 | 60 | 60 | 60 | 60 | 60 | 60 |

An der unvulkanisierten Kautschukmischung wurden die Mooneyviskosität und die Mooneyrelaxation nach 10 und 30 sec bestimmt.

| Tabelle 4.5: | | | | | | | | |
|---|---|---|---|---|---|---|---|---|
| ***Compound Nr.*** | ***4.1**** | ***4.2**** | ***4.3**** | ***4.4**** | ***4.5**** | ***4.6**** | ***4.7*** | ***4.8*** |
| ML 1+1 (100°C) [ME] | 113,8 | 109,4 | 119,8 | 111,0 | 97,2 | 104,5 | 106,0 | 102,5 |
| ML 1+4 (100°C) [ME] | 89,1 | 87,7 | 93,9 | 87,7 | 78,2 | 83,1 | 84,8 | 82,2 |
| Mooneyrelaxation /10 sec. [%] | 24,8 | 26,1 | 26,4 | 25,5 | 24,9 | 24,9 | 25,4 | 24,6 |
| Mooneyrelaxation /30 sec [%] | 15,6 | 17,1 | 17,1 | 16,2 | 16,0 | 15,5 | 16,2 | 15,2 |

Das Vulkanisationsverhalten der Mischungen wurde im Rheometer bei 160°C nach DIN 53 529 mit Hilfe des Monsantorheometers MDR 2000E untersucht.

| Tabelle 4.6: | | | | | | | | |
|---|---|---|---|---|---|---|---|---|
| ***Compound Nr.*** | ***4.1**** | ***4.2*** | ***4.3**** | ***4.4**** | ***4.5**** | ***4.6**** | ***4.7*** | ***4.8*** |
| $F_{min.}$ [dNm] | 5,74 | 6,11 | 6,17 | 5,52 | 5,38 | 5,14 | 5,29 | 4,99 |
| $F_{max}$ [dNm] | 23,99 | 24,24 | 24,29 | 23,44 | 22,64 | 22,57 | 23,07 | 22,50 |
| $F_{max}$ - $F_{min.}$ [dNm] | 18,25 | 18,13 | 18,12 | 17,92 | 17,26 | 17,43 | 17,78 | 17,51 |
| $t_{10}$ [sec] | 138 | 128 | 117 | 115 | 109 | 108 | 107 | 108 |
| $t_{50}$ [sec] | 188 | 179 | 166 | 164 | 155 | 153 | 153 | 152 |
| $t_{90}$ [sec] | 321 | 321 | 280 | 269 | 250 | 242 | 251 | 222 |

| Tabelle 4.6: | | | | | | | | |
|---|---|---|---|---|---|---|---|---|
| $t_{95}$ [sec] | 408 | 414 | 354 | 338 | 310 | 297 | 314 | 264 |
| $t_{90}$-$t_{10}$ [sec] | 183 | 193 | 163 | 154 | 141 | 134 | 144 | 114 |
| $F_{15\ min.}$ [dNm] | 23,96 | 24,22 | 24,21 | 23,29 | 22,46 | 22,29 | 22,86 | 21,94 |
| $F_{20\ min.}$ [dNm] | 23,76 | 24,17 | 24,07 | 23,08 | 22,26 | 22,25 | 22,54 | 21,62 |
| $F_{25\ min.}$ [dNm] | 23,59 | 23,89 | 23,99 | 22,97 | 22,21 | 22,15 | 22,37 | 21,43 |
| $F_{25\ min}$ - $F_{max}$ [dNm] | -0,40 | -0,35 | -0,30 | -0,47 | -0,43 | -0,42 | -0,70 | -1,07 |

Die für die Vulkanisatcharakterisierung notwendigen Prüfkörper wurden durch Pressenvulkanisation unter folgenden Bedingungen hergestellt.

**Tabelle 4.7:**

| **Vulkanisationszeit** | | | | | | | | |
|---|---|---|---|---|---|---|---|---|
| ***Compound Nr.*** | ***4.1**** | ***4.2**** | ***4.3**** | ***4.4**** | ***4.5**** | ***4.6**** | ***4.7*** | ***4.8*** |
| Temperatur [°C] | 160 | 160 | 160 | 160 | 160 | 160 | 160 | 160 |
| Zeit [min.] | 12 | 12 | 12 | 12 | 12 | 12 | 12 | 12 |

Die Vulkanisateigenschaften sind in folgender Tabelle zusammengefasst.

**Tabelle 4.8:**

| **Vulkanisateigenschaften** | | | | | | | | |
|---|---|---|---|---|---|---|---|---|
| ***Compound Nr.*** | ***4.1**** | ***4.2**** | ***4.3**** | ***4.4**** | ***4.5**** | ***4.6**** | ***4.7*** | ***4.8*** |
| Shore A-Härte bei 23°C DIN 53505 | 68,6 | 68 | 69,4 | 68,9 | 67,2 | 68 | 67,6 | 67,5 |
| Shore A Härte bei 70°C DIN 53505 | 61,5 | 64,3 | 63,7 | 60,7 | 62,7 | 62 | 62,5 | 61,7 |
| Rückprallelastizität/23°C DIN 53512 [%] [%] | 45,6 | 43,2 | 40,5 | 42,6 | 46,1 | 43,1 | 42,7 | 44,2 |
| Rückprallelastizität/70°C v | 59,4 | 59,3 | 59,9 | 59,7 | 56,8 | 58,9 | 56,9 | 58,9 |
| Weiterreißfestigkeit/23°C [N/mm] | 19,7 | 15,2 | 20,6 | 36,6 | 28,9 | 35,4 | 38,5 | 43,3 |
| Weiterreißfestigkeit/70°C [N/mm] | 22,1 | 16,6 | 20,1 | 33,9 | 32,6 | 39,8 | 21,1 | 27,8 |
| $\sigma_{10}$ DIN 53504 [MPa] | 0,6 | 0,6 | 0,7 | 0,6 | 0,6 | 0,6 | 0,6 | 0,6 |
| $\sigma_{25}$ DIN 53504 [MPa] | 1,1 | 1,1 | 1,1 | 1,1 | 1,1 | 1,1 | 1,1 | 1,1 |
| $\sigma_{50}$ DIN 53504 [MPa] | 1,7 | 1,7 | 1,8 | 1,7 | 1,7 | 1,7 | 1,7 | 1,7 |
| $\sigma_{100}$ DIN 53504 [MPa] | 3,2 | 3,5 | 3,5 | 3,3 | 3,3 | 3,1 | 3,4 | 3,2 |
| $\sigma_{300}$ DIN 53504 [MPa] | 17,5 | - | - | 17,4 | 16,3 | 16,2 | 16,9 | 16,3 |
| Zugfestigkeit DIN 53504 [MPa] | 19,8 | 16,5 | 17,7 | 19,7 | 18,8 | 18,6 | 17,4 | 20,7 |
| Bruchdehnung DIN 53504 [MPa] | 325 | 275 | 297 | 330 | 336 | 334 | 308 | 366 |
| Abrieb DIN 53516 [mm3] | 45 | 46 | 48 | 52 | 49 | 52 | 53 | 49 |

**Tabelle 4.9:**

| Temperaturabhängigkeit von E' / Eplexor-Test* (Heizrate: 1 K/min) | | | | | | | | |
|---|---|---|---|---|---|---|---|---|
| ***Compound Nr.*** | ***4.1**** | ***4.2**** | ***4.3**** | ***4.4**** | ***4.5**** | ***4.6**** | ***4.7*** | ***4.8*** |
| E' (-60°C) / 10 Hz [MPa] | 797,5 | 831,8 | 1419 | 1442 | 1070 | 1380 | 1542 | 1317 |
| E' (-50°C) / 10 Hz [MPa] | 261,0 | 283,4 | 554,2 | 505,6 | 304,6 | 403,3 | 458,7 | 377,6 |
| E' (-40°C) / 10 Hz [MPa] | 97,56 | 114,3 | 188,7 | 165,6 | 104,2 | 137,1 | 144,1 | 115,6 |
| E' (-30°C) / 10 Hz [MPa] | 50,70 | 57,11 | 86,87 | 73,83 | 53,97 | 65,19 | 67,23 | 59,07 |
| E' (-20°C) / 10 Hz [MPa] | 31,81 | 36,16 | 48,78 | 43,65 | 35,08 | 38,42 | 41,01 | 37,08 |
| E' (-10°C) / 10 Hz [MPa] | 22,60 | 25,78 | 31,71 | 29,51 | 25,7 | 27,19 | 28,84 | 25,25 |
| E' (0°C) / 10 Hz [MPa] | 17,65 | 19,51 | 22,99 | 22,16 | 20,32 | 20,88 | 22,17 | 19,97 |
| E" (60°C) 10 Hz [MPa] | 0,77 | 0,89 | 0,95 | 0,92 | 0,97 | 0,91 | 0,94 | 0,88 |
| E' (60°C) 10 Hz [MPa] | 8,23 | 8,77 | 9,12 | 9,38 | 9,44 | 9,35 | 9,61 | 9,82 |
| tan δ (60°C) | 0,093 | 0,102 | 0,104 | 0,098 | 0,103 | 0,097 | 0,098 | 0,09 |

In der *4. **Mischungsserie*** wird die Glasübergangstemperatur der Kautschukmatrix im erfindungsgemäßen Bereich von -70,5°C bis -75,9°C variiert, indem die Mengenverhältnisse von L-SBR, Hoch-cis-1,4-BR und NR variiert werden. Die Naturkautschukmenge wird von 15 bis 40 phr variiert. Als Hoch-cis-BR-Typen wird sowohl Nd-BR-Typ (Buna® CB 24) als auch Co-BR (Buna® CB 1203) eingesetzt. Als L-SBR werden Buna® VSL 2525-0 M und Buna® VSL 5025-0 HM eingesetzt. Bei allen Kautschukmischungen wird die Mikrogelmenge konstant gehalten (10 phr). Bei den ***erfindungsgemäßen Beispielen 4.1**** ***bis 4.6**** wird eine vorteilhafte Eigenschaftskombination bezüglich Reversionsbeständigkeit, E', tan δ und Abriebbeständigkeit gefunden. Bei den ***nicht erfindungsgemäßen Beispielen 4.7 und 4.8*** mit Naturkautschukanteilen von 38 und 40 phr ist die Reversionsbeständigkeit ($F_{25\ min.}$ -$F_{max.}$) nicht ausreichend.

## 5. Mischungsserie

In der *5. **Mischungsserie*** wird die Menge des BR-Gels von 0 bis 25 phr erhöht, wobei das Mischungsverhältnis der Kautschuke L-SBR, Hoch-cis-BR und NR konstant gehalten wird. Die berechnete Glasübergangstemperatur der Kautschukmatrix beträgt in jedem Beispiel -73,4°C und liegt im erfindungsgemäßen Bereich. Beispiel 5.1 enthält kein Mikrogel und ist nicht erfindungsgemäß. **Beispiele 5.2* bis 5.8*** mit Mikrogelzusätzen von 5 bis 25 phr sind erfindungsgemäß.

| Tabelle 5.1: Glasübergangstemperatur der Kautschukmatrix | | | | | | | | |
|---|---|---|---|---|---|---|---|---|
| ***Compound Nr.*** | ***5.1*** | ***5.2**** | ***5.3**** | ***5.4**** | ***5.5**** | ***5.6**** | ***5.7**** | ***5.8**** |
| Buna®VSL 2525 -0 M | 45 | 45 | 45 | 45 | 45 | 45 | 45 | 45 |
| Buna® CB 24 | 35 | 35 | 35 | 35 | 35 | 35 | 35 | 35 |
| TSR / RSS 3 DEFO 1000 | 20 | 20 | 20 | 20 | 20 | 20 | 20 | 20 |
| Matrix-Tg [°C] | -73,4 | -73,4 | -73,4 | -73,4 | -73,4 | -73,4 | -73,4 | -73,4 |

| Tabelle 5.2: 1. Mischstufe (Innenmischer) | | | | | | | | |
|---|---|---|---|---|---|---|---|---|
| ***Compound Nr.*** | ***5.1*** | ***5.2**** | ***5.3**** | ***5.4**** | ***5.5**** | ***5.6**** | ***5.7**** | ***5.8**** |
| **Zugabezeitpunkt: 0 sec.** | | | | | | | | |
| Buna®VSL 2525 -0 M | 45 | 45 | 45 | 45 | 45 | 45 | 45 | 45 |
| Buna® CB 24 | 35 | 35 | 35 | 35 | 35 | 35 | 35 | 35 |
| TSR / RSS 3 DEFO 1000 | 20 | 20 | 20 | 20 | 20 | 20 | 20 | 20 |

(fortgesetzt)

| Zugabezeitpunkt: 30 sec. | | | | | | | | |
|---|---|---|---|---|---|---|---|---|
| Ultrasil® VN3 | 53 | 53 | 53 | 53 | 53 | 53 | 53 | 53 |
| BR-Mikrogel | 0 | 5 | 10 | 12,5 | 15,0 | 17,5 | 20,0 | 25,0 |
| Vulkanox® HS/LG | 2,0 | 2,0 | 2,0 | 2,0 | 2,0 | 2,0 | 2,0 | 2,0 |
| Vulkanox® 4020/LG | 1,0 | 1,0 | 1,0 | 1,0 | 1,0 | 1,0 | 1,0 | 1,0 |
| Stearinsäure | 1,0 | 1,0 | 1,0 | 1,0 | 1,0 | 1,0 | 1,0 | 1,0 |
| Ozonwachs | 2,0 | 2,0 | 2,0 | 2,0 | 2,0 | 2,0 | 2,0 | 2,0 |

| **Tabelle 5.2: 1. Mischstufe (Innenmischer)** | | | | | | | | |
|---|---|---|---|---|---|---|---|---|
| Si75 | 6,5 | 6,5 | 6,5 | 6,5 | 6,5 | 6,5 | 6,5 | 6,5 |
| **Zugabezeitpunkt: 90 sec.** | | | | | | | | |
| Ultrasil® 7000 GR | 27 | 27 | 27 | 27 | 27 | 27 | 27 | 27 |
| Mineralöl | 20 | 20 | 20 | 20 | 30 | 30 | 30 | 30 |
| Ruß | 12 | 12 | 12 | 12 | 12 | 12 | 12 | 12 |
| **Zugabezeitpunkt: 150 sec.** | | | | | | | | |
| Zinkoxid | 2,5 | 2,5 | 2,5 | 2,5 | 2,5 | 2,5 | 2,5 | 2,5 |
| **Aufheizung ab 210 sec.** | | | | | | | | |
| Maximale Temperatur [°C] | 150 | 150 | 150 | 150 | 150 | 150 | 150 | 150 |
| Zeit bei max.Temperatur [min.] | 6 | 6 | 6 | 6 | 6 | 6 | 6 | 6 |
| Abkühlung und Lagerung bei 23°C [h] | 24 | 24 | 24 | 24 | 24 | 24 | 24 | 24 |

| **Tabelle 5.3: 2. Mischstufe (Innenmischer)** | | | | | | | | |
|---|---|---|---|---|---|---|---|---|
| ***Compound Nr.*** | ***5.1*** | ***5.2**** | ***5.3**** | ***5.4**** | ***5.5**** | ***5.6**** | ***5.7**** | ***5.8**** |
| Maximale Temperatur [°C] | 150 | 150 | 150 | 150 | 150 | 150 | 150 | 150 |
| Zeit bei max. Temperatur [min.] | 6 | 6 | 6 | 6 | 6 | 6 | 6 | 6 |
| Abkühlung auf Walze | <60 | <60 | <60 | <60 | <60 | <60 | <60 | <60 |

| **Tabelle 5.4: 3. Mischstufe (Walze)** | | | | | | | | |
|---|---|---|---|---|---|---|---|---|
| ***Compound Nr.*** | ***5.1*** | ***5.2**** | ***5.3**** | ***5.4*** | ***5.5**** | ***5.6**** | ***5.7**** | ***5.8**** |
| Schwefel | 2,0 | 2,0 | 2,0 | 2,0 | 2,0 | 2,0 | 2,0 | 2,0 |
| Vulkacit® NZ/EGC | 2,0 | 2,0 | 2,0 | 2,0 | 2,0 | 2,0 | 2,0 | 2,0 |
| Rhenogran® DPG-80 | 2,5 | 2,5 | 2,5 | 2,5 | 2,5 | 2,5 | 2,5 | 2,5 |
| Maximale Temperatur [°C] | 60 | 60 | 60 | 60 | 60 | 60 | 60 | 60 |

An der unvulkanisierten Kautschukmischung wurden die Mooneyviskosität und die Mooneyrelaxation nach 10 und 30 sec bestimmt.

| Tabelle 5.5: | | | | | | | | |
|---|---|---|---|---|---|---|---|---|
| ***Compound Nr*.** | ***5.1*** | ***5.2**** | ***5.3**** | ***5.4**** | ***5.5**** | ***5.6**** | ***5.7**** | ***5.8**** |
| ML 1+1 (100°C) [ME] | 91,6 | 94,2 | 95,4 | 100,9 | 102,1 | 103,8 | 110,9 | 117,6 |
| ML 1+4 (100°C) [ME] | 78,0 | 81,7 | 83,2 | 88,4 | 90,5 | 92,6 | 99,1 | 107,1 |
| Mooneyrelaxation /10 sec. [%] | 23,9 | 24,6 | 24,6 | 26,0 | 26,2 | 26,3 | 28,4 | 30,0 |
| Mooneyrelaxation /30 sec. [%] | 18,5 | 19,2 | 19,0 | 20,5 | 20,6 | 20,6 | 22,8 | 24,6 |

Das Vulkanisationsverhalten der Mischungen wurde im Rheometer bei 160°C nach DIN 53 529 mit Hilfe des Monsantorheometers MDR 2000E untersucht.

| Tabelle 5.6: | | | | | | | | |
|---|---|---|---|---|---|---|---|---|
| ***Compound Nr*.** | ***5.1*** | ***5.2**** | ***5.3**** | ***5.4**** | ***5.5**** | ***5.6**** | ***5.7**** | ***5.8**** |
| $F_{min.}$ [dNm] | 4,57 | 5,08 | 5,13 | 5,65 | 5,65 | 5,63 | 6,34 | 7,19 |
| $F_{max}$ [dNm] | 24,09 | 23,32 | 24,09 | 24,38 | 24,17 | 24,06 | 24,57 | 24,85 |
| $F_{max}$ - $F_{min.}$ [dNm] | 19,52 | 18,24 | 18,96 | 18,73 | 18,52 | 18,43 | 18,23 | 17,66 |
| $t_{10}$ [sec] | 100 | 105 | 117 | 111 | 115 | 122 | 119 | 113 |
| $t_{50}$ [sec] | 160 | 162 | 181 | 173 | 178 | 190 | 185 | 194 |
| $t_{90}$ [sec] | 342 | 335 | 327 | 335 | 329 | 323 | 317 | 316 |
| $t_{95}$ [sec] | 453 | 450 | 420 | 441 | 430 | 408 | 410 | 392 |
| $t_{90}$-$t_{10}$ [sec] | 242 | 230 | 210 | 224 | 214 | 286 | 198 | 203 |
| $F_{15\ min.}$ [dNm] | 24,03 | 23,26 | 24,06 | 24,34 | 24,15 | 24,03 | 24,55 | 24,78 |
| $F_{20\ min.}$ [dNm] | 24,00 | 23,26 | 23,99 | 24,33 | 24,09 | 23,90 | 24,40 | 24,72 |
| $F_{25\ min.}$ [dNm] | 23,86 | 23,27 | 23,93 | 24,29 | 24,05 | 23,85 | 24,36 | 24,66 |
| $F_{25\ min}$ - $F_{max}$ [dNm] | -0,23 | -0,05 | -0,16 | -0,09 | -0,12 | -0,21 | -0,21 | -0,19 |

Die für die Vulkanisatcharakterisierung notwendigen Prüfkörper wurden durch Pressenvulkanisation unter folgenden Bedingungen hergestellt.

**Tabelle 5.7:**

| Vulkanisationszeit | | | | | | | | |
|---|---|---|---|---|---|---|---|---|
| ***Compound Nr*.** | ***5.1*** | ***5.2**** | ***5.3**** | ***5.4**** | ***5.5**** | ***5.6**** | ***5.7**** | ***5.8**** |
| Temperatur [°C] | 160 | 160 | 160 | 160 | 160 | 160 | 160 | 160 |
| Zeit [min.] | 13 | 13 | 13 | 13 | 13 | 13 | 13 | 13 |

Die Vulkanisateigenschaften sind in folgender Tabelle zusammengefasst.

**Tabelle 5.8:**

| Vulkanisateigenschaften | | | | | | | | |
|---|---|---|---|---|---|---|---|---|
| ***Compound Nr.*** | ***5.1*** | ***5.2**** | ***5.3**** | ***5.4**** | ***5.5**** | ***5.6**** | ***5.7**** | ***5.8**** |
| Shore A-Härte bei 23°C DIN 53505 | 68,7 | 71,1 | 70,7 | 70,9 | 70,4 | 70,7 | 71,2 | 71,2 |
| Shore A Härte bei 70°C DIN 53505 | 66,2 | 66,8 | 66,0 | 66,5 | 66,0 | 64,5 | 65,7 | 65,5 |

(fortgesetzt)

| Vulkanisateigenschaften | | | | | | | | |
|---|---|---|---|---|---|---|---|---|
| ***Compound Nr.*** | ***5.1*** | ***5.2**** | ***5.3**** | ***5.4**** | ***5.5**** | ***5.6**** | ***5.7**** | ***5.8**** |
| Rückprallelastizität/ 23°C DIN 53512 [%] [%] | 40,1 | 42,7 | 45,3 | 45,5 | 46,6 | 47,5 | 47,4 | 49,0 |
| Rückprallelastizität/ 70°C DIN 53512 [%] [%] | 55,0 | 56,3 | 58,9 | 58,6 | 59,2 | 60,4 | 60,7 | 61,1 |
| Compression Set/ 70°C [%] | 21,91 | 21,72 | 21,29 | 20,31 | 20,07 | 19,34 | 19,83 | 21,38 |
| $\sigma_{10}$ DIN 53504 [MPa] | 0,6 | 0,6 | 0,6 | 0,7 | 0,6 | 0,6 | 0,7 | 0,7 |
| $\sigma_{25}$ DIN 53504 [MPa] | 1,1 | 1,1 | 1,1 | 1,2 | 1,2 | 1,2 | 1,2 | 1,3 |
| $\sigma_{50}$ DIN 53504 [MPa] | 1,7 | 1,7 | 1,7 | 1,9 | 1,9 | 1,8 | 2,0 | 2,1 |
| $\sigma_{100}$ DIN 53504 [MPa] | 3,2 | 3,2 | 3,2 | 3,8 | 3,9 | 3,7 | 4,3 | 4,4 |
| $\sigma_{300}$ DIN 53504 [MPa] | 17,2 | 17,0 | 17,2 | - | - | - | - | - |
| $\sigma_{300}$ /$\sigma_{25}$ | 16,6 | 15,5 | 15,6 | - | - | - | - | - |
| Zugfestigkeit DIN 53504 [MPa] | 18,4 | 17,7 | 19,2 | 18,8 | 15,8 | 17,7 | 17,8 | 17,1 |
| Bruchdehnung DIN 53504 [MPa] | 313 | 307 | 324 | 297 | 254 | 284 | 269 | 271 |
| Abrieb DIN 53516 [mm3] | 51 | 48 | 49 | 46 | 49 | 45 | 46 | 44 |

**Tabelle 5.9:**

| Temperaturabhängikgkeit von E' / Eplexor-Test* (Heizrate: 1 K/min) | | | | | | | | |
|---|---|---|---|---|---|---|---|---|
| ***Compound Nr.*** | ***5.1*** | ***5.2**** | ***5.3**** | ***5.4**** | ***5.5**** | ***5.6**** | ***5.7**** | ***5.8**** |
| E' (-60°C) / 10 Hz [MPa] | 1209 | 1202 | 1163 | 1184 | 1111 | 1142 | 1112 | 989 |
| E' (-50°C) / 10 Hz [MPa] | 435,4 | 423,2 | 370,8 | 387,5 | 320,8 | 350,8 | 319,4 | 291,1 |
| E' (-40°C) / 10 Hz [MPa] | 149,1 | 146,4 | 130,5 | 121,3 | 112,4 | 113,9 | 100,1 | 94,0 |
| E' (-30°C) / 10 Hz [MPa] | 75,24 | 71,15 | 63,26 | 57,09 | 55,91 | 55,81 | 47,17 | 47,52 |
| E' (-20°C) / 10 Hz [MPa] | 47,59 | 44,59 | 39,95 | 36,53 | 35,26 | 35,64 | 29,94 | 31,09 |
| E' (-10°C) / 10 Hz [MPa] | 32,67 | 30,86 | 28,58 | 24,17 | 25,30 | 25,43 | 21,28 | 22,67 |
| E' (0°C) / 10 Hz [MPa] | 26,03 | 23,98 | 22,51 | 18,91 | 19,37 | 18,88 | 16,84 | 18,22 |
| E" (60°C) 10 Hz [MPa] | 1,18 | 1,16 | 1,04 | 0,96 | 0,93 | 0,93 | 0,78 | 0,84 |
| E' (60°C) 10 Hz [MPa] | 10,74 | 10,37 | 10,32 | 9,62 | 9,67 | 10,28 | 9,11 | 9,88 |
| tan $\delta$ (60°C) | 0,110 | 0,109 | 0,101 | 0,10 | 0,096 | 0,091 | 0,086 | 0,085 |

In der **5. *Mischungsserie*** wird die Menge an BR-Gel in der Kautschukmischung von 0 bis 25 Gew.-Teilen variiert, wobei das Mischungsverhältnis von Lösungs-SBR, 1,4-cis-Polybutadien und NR konstant gehalten wird. Die Glasübergangstemperatur der Kautschukmatrix beträgt bei allen Beispielen -73,4°C. In der *5.* ***Mischungsserie*** wird gezeigt, dass bei zufriedenstellender Reversionsbeständigkeit durch die Zusätze an BR-Gel die Temperaturabhängigkeit des Speichermoduls E' im Temperaturbereich von -60°C bis -10°C, tan $\delta$ (60°C) und der DIN-Abrieb verbessert werden. Aus diesem Grund sind die **Beispiele 5.2* bis 5.8*** erfindungsgemäß.

## 6. Mischungsserie

In der nicht erfindungsgemäßen *6.* ***Mischungsserie*** wird die Menge des BR-Gels von 0 bis 30 phr erhöht, wobei das Mischungsverhältnis der Kautschuke L-SBR, Hoch-cis-BR und NR konstant gehalten wird. Die berechnete Glasübergangstemperatur der Kautschukmatrix beträgt bei allen Beispielen -60,8°C und liegt im nicht erfindungsgemäßen Bereich. Die ***Beispiele 6.1 bis 6.7*** sind ***nicht erfindungsgemäße Beispiele.***

**Tabelle 6.1: Glasübergangstemperatur der Kautschukmatrix**

| ***Compound Nr.*** | ***6.1*** | ***6.2*** | ***6.3*** | ***6.4*** | ***6.5*** | ***6.6*** | ***6.7*** |
|---|---|---|---|---|---|---|---|
| Buna®VSL 5025 -1 HM | 61,88 | 61,88 | 61,88 | 61,88 | 61,88 | 61,88 | 61,88 |
| Buna® CB 24 | 35 | 35 | 35 | 35 | 35 | 35 | 35 |
| TSR / RSS 3 DEFO 1000 | 20 | 20 | 20 | 20 | 20 | 20 | 20 |
| Matrix-Tg [°C] | -60,8 | -60,8 | -60,8 | -60,8 | -60,8 | -60,8 | -60,8 |

**Tabelle 6.2: 1. Mischstufe**

| ***Compound Nr.*** | ***6.1*** | ***6.2*** | ***6.3*** | ***6.4**** | ***6.5**** | ***6.6*** | ***6.7*** |
|---|---|---|---|---|---|---|---|
| **Zugabezeitpunkt: 0 sec.** | | | | | | | |
| Buna® VSL 5025-1 HM | 61,88 | 61,88 | 61,88 | 61,88 | 61,88 | 61,88 | 61,88 |
| Buna® CB 24 | 35 | 35 | 35 | 35 | 35 | 35 | 35 |
| TSR / RSS 3 DEFO 1000 | 20 | 20 | 20 | 20 | 20 | 20 | 20 |
| **Zugabezeitpunkt: 60 sec.** | | | | | | | |
| Ultrasil® 7000 GR | 80 | 80 | 80 | 80 | 80 | 80 | 80 |
| Si69 | 6,5 | 6,5 | 6,5 | 6,5 | 6,5 | 6,5 | 6,5 |
| Ruß | 5 | 5 | 5 | 5 | 5 | 5 | 5 |
| BR-Mikrogel | 0 | 5 | 10 | 15 | 20 | 25 | 30 |
| **Aufheizung: 65 -90 sec.** | | | | | | | |
| Maximale Temperatur [°C] | 140 | 140 | 140 | 140 | 140 | 140 | 140 |
| Zeit bei max.Temperatur [sec.] | 120 | 120 | 120 | 120 | 120 | 120 | 120 |
| **Zugabezeitpunkt: 210 sec.** | | | | | | | |
| Mineralöl | 20 | 20 | 20 | 20 | 20 | 20 | 20 |
| Vulkanox® HS/LG | 2,0 | 2,0 | 2,0 | 2,0 | 2,0 | 2,0 | 2,0 |
| Vulkanox® 4020/LG | 1,0 | 1,0 | 1,0 | 1,0 | 1,0 | 1,0 | 1,0 |
| Ozonwachs | 2,0 | 2,0 | 2,0 | 2,0 | 2,0 | 2,0 | 2,0 |
| Stearinsäure | 1,0 | 1,0 | 1,0 | 1,0 | 1,0 | 1,0 | 1,0 |

**Tabelle 6.2: 1. Mischstufe**

| ***Compound Nr.*** | ***6.1*** | ***6.2*** | ***6.3*** | ***6.4**** | ***6.5**** | ***6.6*** | ***6.7*** |
|---|---|---|---|---|---|---|---|
| Zinkoxid | 2,5 | 2,5 | 2,5 | 2,5 | 2,5 | 2,5 | 2,5 |
| Rhenogran® DPG-80 | 2,5 | 2,5 | 2,5 | 2,5 | 2,5 | 2,5 | 2,5 |

(fortgesetzt)

| Auswurf: 300 sec. | | | | | | | |
|---|---|---|---|---|---|---|---|
| Abkühlung und Lagerung bei 23°C [h] | 24 | 24 | 24 | 24 | 24 | 24 | 24 |

| **Tabelle 6.3: 2. Mischstufe** | | | | | | | |
|---|---|---|---|---|---|---|---|
| ***Compound Nr.*** | ***6.1*** | ***6.2*** | ***6.3*** | ***6.4**** | ***6.5**** | ***6.6*** | ***6.7*** |
| Maximale Temperatur [°C] | 140 | 140 | 140 | 140 | 140 | 140 | 140 |
| Zeit bei max. Temperatur [min.] | 120 | 120 | 120 | 120 | 120 | 120 | 120 |
| Abkühlung auf Walze [°C] | <60 | <60 | <60 | <60 | <60 | <60 | <60 |

| Tabelle 6.4: 3. Mischstufe (Walze) | | | | | | | |
|---|---|---|---|---|---|---|---|
| ***Compound Nr.*** | **6.1** | ***6.2*** | ***6.3*** | ***6.4*** | ***6.5**** | ***6.6**** | ***6.7*** |
| Schwefel | 2,0 | 2,0 | 2,0 | 2,0 | 2,0 | 2,0 | 2,0 |
| Vulkacit® NZ/EGC | 2,0 | 2,0 | 2,0 | 2,0 | 2,0 | 2,0 | 2,0 |
| DPG [15)] | 2,0 | 2,0 | 2,0 | 2,0 | 2,0 | 2,0 | 2,0 |
| Maximale Temperatur [°C] | 60 | 60 | 60 | 60 | 60 | 60 | 60 |

An der unvulkanisierten Kautschukmischung wurden die Mooneyviskosität und die Mooneyrelaxation nach 10 und 30 sec bestimmt.

| **Tabelle 6.5: Eigenschaften unvulkanisierter Mischungen** | | | | | | | |
|---|---|---|---|---|---|---|---|
| ***Compound Nr.*** | ***6.1*** | ***6.2*** | ***6.3*** | ***6.4**** | ***6.5**** | ***6.6*** | ***6.7*** |
| ML 1+1 (100°C) [ME] | 70,2 | 76,6 | 75,1 | 84,1 | 89,4 | 91,8 | 99,2 |
| ML 1+4 (100°C) [ME] | 67,1 | 65,9 | 65,8 | 74,8 | 80,4 | 83,1 | 90,0 |
| Mooneyrelaxation /10 sec. [%] | 21,5 | 19,7 | 18,9 | 20,1 | 21,7 | 22,2 | 24,1 |
| Mooneyrelaxation /30 sec. [%] | 15,7 | 14,1 | 13,3 | 14,6 | 16,1 | 16,8 | 18,7 |

Das Vulkanisationsverhalten der Mischungen wird im Rheometer bei 160°C nach DIN 53 529 mit Hilfe des Monsantorheometers MDR 2000E untersucht.

**Tabelle 6.6:**

| **Vulkanisationsverhalten** | | | | | | | |
|---|---|---|---|---|---|---|---|
| ***Compound Nr.*** | ***6.1*** | ***6.2*** | ***6.3*** | ***6.4**** | ***6.5**** | ***6.6*** | ***6.7*** |
| $F_{min.}$ [dNm] | 2,53 | 3,00 | 3,23 | 4,47 | 4,81 | 5,60 | 5,18 |
| $F_{max}$ [dNm] | 22,94 | 22,84 | 21,65 | 22,48 | 21,68 | 21,36 | 20,71 |
| $F_{max}$ - $F_{min.}$ [dNm] | 20,41 | 19,84 | 18,42 | 18,01 | 16,87 | 15,76 | 15,53 |
| $t_{10}$ [sec] | 95 | 103 | 112 | 135 | 131 | 161 | 76 |
| $t_{50}$ [sec] | 211 | 226 | 238 | 270 | 274 | 300 | 300 |
| $t_{90}$ [sec] | 402 | 409 | 434 | 493 | 471 | 516 | 519 |
| $t_{95}$ [sec] | 526 | 538 | 568 | 642 | 609 | 666 | 668 |
| $t_{90}$-$t_{10}$ [sec] | 307 | 306 | 322 | 358 | 340 | 355 | 443 |

(fortgesetzt)

| Vulkanisationsverhalten | | | | | | | |
|---|---|---|---|---|---|---|---|
| ***Compound Nr*.** | ***6.1*** | ***6.2*** | ***6.3*** | ***6.4**** | ***6.5**** | ***6.6*** | ***6.7*** |
| $F_{15\ min.}$ [dNm] | 22,87 | 22,75 | 21,54 | 22,24 | 21,51 | 21,12 | 20,47 |
| $F_{20\ min.}$ [dNm] | 22,91 | 22,82 | 21,64 | 22,46 | 21,66 | 21,33 | 20,67 |
| $F_{25\ min.}$ [dNm] | 22,75 | 22,71 | 21,56 | 22,44 | 21,64 | 21,33 | 20,69 |
| $F_{25\ min}$ - $F_{max}$ [dNm] | -0,19 | -0,13 | -0,09 | -0,04 | -0,04 | -0,03 | -0,02 |

Die für die Vulkanisatcharakterisierung notwendigen Prüfkörper wurden durch Pressenvulkanisation unter folgenden Bedingungen hergestellt.

**Tabelle 6.7:**

| Vulkanisationszeit | | | | | | | |
|---|---|---|---|---|---|---|---|
| ***Compound Nr*.** | ***6.1*** | ***6.2*** | ***6.3*** | ***6.4**** | ***6.5**** | ***6.6*** | ***6.7*** |
| Temperatur [°C] | 160 | 160 | 160 | 160 | 160 | 160 | 160 |
| Zeit [min.] | 30 | 30 | 30 | 30 | 30 | 30 | 30 |

Die Vulkanisateigenschaften sind in folgender Tabelle zusammengefasst.

**Tabelle 6.8:**

| Vulkanisateigenschaften | | | | | | | |
|---|---|---|---|---|---|---|---|
| ***Compound Nr*.** | ***6.1*** | ***6.2*** | ***6.3*** | ***6.4**** | ***6.5**** | ***6.6*** | ***6.7*** |
| Shore A-Härte bei 23°C DIN 53505 | 66,4 | 65,9 | 64,3 | 64,7 | 64,5 | 64 | 63,3 |
| Shore A Härte bei 70°C DIN 53505 | 65,3 | 65,1 | 63,6 | 64,6 | 64,2 | 63,4 | 62,9 |
| Rückprallelastizität/0°C DIN 53512 [%] [%] | | | | | | | |
| Rückprallelastizität/23°C DIN 53512 [%] [%] | 39 | 42 | 44 | 46 | 47 | 49 | 51 |
| Rückprallelastizität/70°C DIN 53512 [%] [%] | 60 | 62 | 63 | 63 | 64 | 65 | 65 |
| $\sigma_{10}$ DIN 53504 [MPa] | 0,6 | 0,6 | 0,5 | 0,5 | 0,5 | 0,5 | 0,5 |
| $\sigma_{25}$ DIN 53504 [MPa] | 1,0 | 1,0 | 0,9 | 0,9 | 0,9 | 0,9 | 0,9 |
| $\sigma_{50}$ DIN 53504 [MPa] | 1,4 | 1,4 | 1,4 | 1,4 | 1,4 | 1,4 | 1,4 |
| $\sigma_{100}$ DIN 53504 [MPa] | 2,6 | 2,6 | 2,5 | 2,7 | 2,7 | 2,7 | 2,8 |
| $\sigma_{300}$ DIN 53504 [MPa] | 12,1 | 12,7 | 12,4 | 11,9 | 12,3 | 11,8 | 11,5 |
| $\sigma_{300}$ / $\sigma_{25}$ | 12,1 | 12,7 | 13,7 | 13,2 | 13,6 | 13,1 | 12,7 |
| Zugfestigkeit DIN 53504 [MPa] | 18,1 | 18,4 | 20,3 | 18,6 | 19,6 | 17,7 | 18,4 |
| Bruchdehnung DIN 53504 [MPa] | 407 | 395 | 441 | 432 | 437 | 427 | 458 |
| Abrieb DIN 53516 [mm3] | 85 | 80 | 77 | 73 | 73 | 75 | 78 |

**Tabelle 6.9:**

| Temperaturabhängikgkeit von E' / Eplexor-Test* (Heizrate: 1 K/min) | | | | | | | |
|---|---|---|---|---|---|---|---|
| ***Compound Nr.*** | ***5.1*** | ***6.1*** | ***6.2*** | ***6.3*** | ***6.4**** | ***6.5**** | ***6.6*** |
| E' (-60°C) / 10 Hz [MPa] | 1833 | 1693 | 1632 | 1509 | 1757 | 1426 | 1329 |
| E' (-50°C) / 10 Hz [MPa] | 1066 | 923 | 898 | 869 | 867 | 713 | 702 |
| E' (-40°C) / 10 Hz [MPa] | 457 | 381 | 366 | 349 | 322 | 264 | 237 |
| E' (-30°C) / 10 Hz [MPa] | 175 | 144 | 133 | 128 | 109 | 92 | 77 |
| E' (-20°C) / 10 Hz [MPa] | 83 | 67 | 62 | 58 | 48 | 41 | 33 |
| E' (-10°C) / 10 Hz [MPa] | 50 | 41 | 37 | 35 | 29 | 25 | 20 |
| E' (0°C) / 10 Hz [MPa] | 35,2 | 28,7 | 26,2 | 25,3 | 20,4 | 17,5 | 14,5 |
| tan $\delta$ (60°C) | 0,093 | 0,086 | 0,082 | 0,078 | 0,073 | 0,069 | 0,069 |

In der nicht erfindungsgemäßen *6.* ***Mischungsserie*** wird die Menge des BR-Gels von 0 bis 30 phr erhöht, wobei das Mischungsverhältnis der Kautschuke L-SBR, Hoch-cis-BR und NR konstant gehalten wird. Die Glasübergangstemperatur der Kautschukmatrix beträgt bei allen Beispielen - 60,8°C und liegt im nicht erfindungsgemäßen Bereich. Insbesondere die DIN-Abriebwerte sind bei allen Beispielen der *6.* ***Mischungsserie*** nicht zufriedenstellend.

## Patentansprüche

**1.** Vulkanisierbare Kautschukmischungen enthaltend mindestens folgende Komponenten

I.) 100 Gew.-Teile einer ölfreien Kautschukmatrix bestehend aus

a) 15 bis 79 Gew.-Teile, vorzugsweise 20 bis 70 Gew.-Teile von mindestens einem Lösungs-SBR (L-SBR) (ölfrei) mit einer Glasübergangstemperatur ($Tg_{(L\text{-}SBR)}$) zwischen -70°C bis -10°C,
b) 20 bis 75 Gew.-Teile, vorzugsweise 25 bis 70 Gew.-Teile von mindestens einem 1,4-cis-Polybutadien (BR) (ölfrei) mit einer Glasübergangstemperatur ($Tg_{(BR)}$) zwischen -95°C bis -115°C,
c) 1 bis 37,5 Gew.-Teile, vorzugsweise 5 bis 35 Gew.-Teile Naturkautschuk (NR) (ölfrei) und/oder mindestens ein synthetisch hergestelltes Polyisopren (IR) (ölfrei) mit einer Glasübergangstemperatur ($Tg_{(NR)}$) zwischen -50°C bis -75°C,

II.) mindestens ein hydroxylgruppenhaltiges Mikrogel auf Polybutadienbasis,
III.) mindestens einen hydroxylgruppenhaltigen, oxidischen Füllstoff,
IV.) mindestens ein polysulfidhaltiges Alkoxysilan,
V.) mindestens ein Vulkanisationsmittel,
VI.) ggf. mindestens ein Kautschukadditiv.

**2.** Vulkanisierbare Kautschukmischungen nach Anspruch 1, **dadurch gekennzeichnet, dass** die ölfreie Kautschukmatrix I.) eine Glasübergangstemperatur ($Tg_{(Matrix)}$) zwischen -70°C bis - 90°C aufweist, wobei die $Tg_{(Matrix)}$ gemäß der allgemeinen Gleichung

$$Tg_{(Matrix)} = X_{(BR)} \times Tg_{(BR)} + X_{(L\text{-}SBR)} \times Tg_{(L\text{-}SBR)} + X_{(NR)} \times Tg_{(NR)}$$

berechnet wird, mit

| | |
|---|---|
| Glasübergangstemperatur der Kautschukmatrix (ölfrei) | $Tg_{(Matrix)}$ |
| Gew.-Teile von 1,4-cis-Polybutadien (ölfrei) | $X_{(BR)}$ |
| Gew.-Teile von L-SBR (ölfrei) | $X_{(L\text{-}SBR)}$ |
| Gew.-Teile von NR bzw. IR (ölfrei) | $X_{(NR)}$ |

| | |
|---|---|
| Glasübergangstemperatur von 1,4-cis-Polybutadien (ölfrei) | $Tg_{(BR)}$ |
| Glasübergangstemperatur von L-SBR (ölfrei) | $Tg_{(L-SBR)}$ |
| Glasübergangstemperatur von NR bzw. IR (ölfrei) | $Tg_{(NR)}$ |

3. Vulkanisierbare Kautschukmischungen nach Anspruch 2, **dadurch gekennzeichnet, dass** das Lösungs-SBR eine Mooneyviskosität (ML 1+4 bei 100°C) von 20 bis 150 Mooneyeinheiten, vorzugsweise von 30 bis 100 Mooneyeinheiten aufweist.

4. Vulkanisierbare Kautschukmischungen nach Anspruch 2, **dadurch gekennzeichnet, dass** das 1,4-cis-Polybutadien einen 1,4-cis-Gehalt von mindestens 90 Mol-% aufweist.

5. Vulkanisierbare Kautschukmischungen nach Anspruch 4, **dadurch gekennzeichnet, dass** es sich bei dem 1,4-cis-Polybutadien um Ti-BR, Co-BR, Ni-BR oder Nd-BR handelt.

6. Vulkanisierbare Kautschukmischungen nach Anspruch 2, **dadurch gekennzeichnet, dass** das Polyisopren einen 1,4-cis-Gehalt von mindestens 70 Mol-% aufweist.

7. Vulkanisierbare Kautschukmischungen nach Anspruch 2, **dadurch gekennzeichnet, dass** das hydroxylgruppenhaltige Mikrogel II.) eine Glasübergangstemperatur ($Tg_{(MIKROGEL)}$) zwischen -82°C bis -60°C, bevorzugt - 65°C bis -82°C, besonders bevorzugt -70°C bis - 80°C aufweist.

8. Vulkanisierbare Kautschukmischungen nach Anspruch 2, **dadurch gekennzeichnet, dass** 1 bis 50 Gew.-Teile, vorzugsweise 2,5 bis 30 Gew.-Teile, bevorzugt 5 bis 20 Gew.-Teile, bezogen auf 100 Gew.-Teile ölfreie Kautschukmatrix, des hydroxylgruppenhaltigen Mikrogels II.), eingesetzt wird.

9. Vulkanisierbare Kautschukmischungen nach Anspruch 8, **dadurch gekennzeichnet, dass** das hydroxylgruppenhaltige Mikrogel einen Gelgehalt von mehr als 70 Gew.-%, vorzugsweise mehr als 75 Gew.-%, besonders bevorzugt mehr als 80 Gew.-%, aufweist.

10. Vulkanisierbare Kautschukmischungen nach Anspruch 9, **dadurch gekennzeichnet, dass** das hydroxylgruppenhaltige Mikrogel einen Quellungsindex (Qi) in Toluol von weniger als 30, vorzugsweise weniger als 25, besonders bevorzugt weniger als 20, aufweist.

11. Vulkanisierbare Kautschukmischungen nach Anspruch 10, **dadurch gekennzeichnet, dass** das hydroxylgruppenhaltige Mikrogel eine Teilchengröße von 10 bis 100 nm aufweist.

12. Vulkanisierbare Kautschukmischungen nach Anspruch 2, **dadurch gekennzeichnet, dass** es sich bei dem hydroxylgruppenhaltigen, oxidischen Füllstoff III.) um Kieselsäure handelt, wobei dessen Gehalt im Bereich von 10 bis zu 150 Gew.-Teilen, vorzugsweise im Bereich von 20 bis 120 Gew.-Teilen, und besonders bevorzugt 25 bis 100 Gew.-Teilen bezogen auf 100 Gew.-Teile ölfreie Kautschukmatrix beträgt.

13. Vulkanisierbare Kautschukmischungen nach Anspruch 2, **dadurch gekennzeichnet, dass** das polysulfidhaltige Alkoxysilan der allgemeinen Formel (1) oder (2)

$$Z\text{-}A\text{-}S_x\text{-}A\text{-}Z \qquad (1)$$

$$Z\text{-}A\text{-}S_y\text{-}R^3 \qquad (2)$$

worin

x eine ganze Zahl von 2 bis 8 darstellt,
y eine ganze Zahl von 1 bis 8 darstellt,
A gleich oder verschieden sind und eine zweiwertige Kohlenwasserstoffgruppe ("Spacer") darstellen
Z gleich oder verschieden sind und eine der nachfolgend angegebenen Formeln besitzen

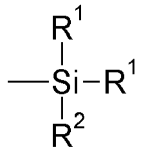 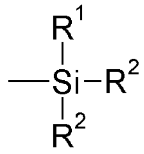 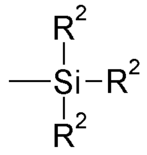

worin

$R^1$ gleich oder verschieden, substituiert oder unsubstituiert sein können und eine $C_1$-$C_{18}$ Alkylgruppe, eine $C_5$-$C_{18}$ Cycloalkylgruppe oder $C_6$-$C_{18}$ Arylgruppe darstellen und
$R^2$ gleich oder verschieden, substituiert oder unsubstituiert sein können und eine $C_1$-$C_{18}$ Alkoxygruppe, eine $C_5$-$C_{18}$ Cycloalkoxygruppe oder $C_6$-$C_{18}$ Aryloxygruppe darstellen,

und
$R^3$ Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt $C_6$-$C_{20}$-Aryl und/oder einen Rest mit nachfolgenden Strukturen bedeutet

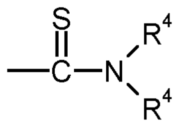 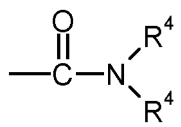 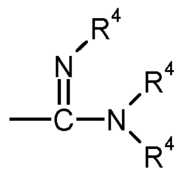

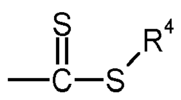 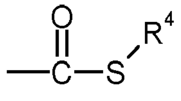 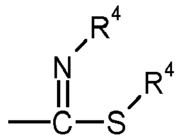

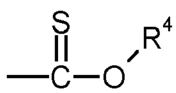 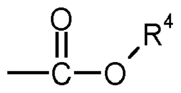 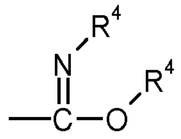

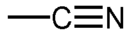 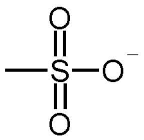 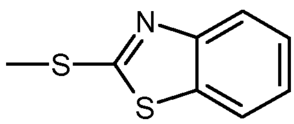

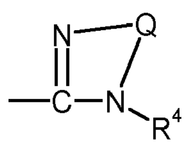 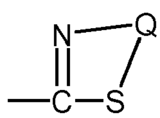 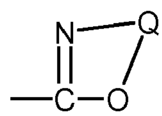

worin $R^4$ für einen aliphatischen, heteroaliphatischen, cycloaliphatischen, aromatischen oder heteroaromatischen Rest mit 1 bis 20, bevorzugt 1 bis 10, Kohlenstoffatomen und mit optional 1 bis 3 Heteroatomen, vorzugsweise Sauerstoff, Stickstoff oder Schwefel steht.

**14.** Vulkanisierbare Kautschukmischungen nach Anspruch 13, **dadurch gekennzeichnet, dass** 0,2 bis 12 Gew.-Teilen, bevorzugt 1 bis 10 Gew.-Teilen, bezogen auf 100 Gew. Teile ölfreie Kautschukmatrix, an polysulfidhaltigem Alkoxysilan eingesetzt wird.

15. Vulkanisierbare Kautschukmischungen nach einem der vorgenannten Ansprüche, **dadurch gekennzeichnet, dass** sie keine Polythiophosphorverbindungen aufweisen.

16. Verfahren zur Herstellung von vulkanisierbaren Kautschukmischungen nach einem der Ansprüche 1 bis 15, **dadurch gekennzeichnet, dass** man die Komponenten I.) bis VI.) in einer oder mehreren Stufen miteinander mischt, bevorzugt entweder durch einen dreistufigen Mischprozess mit zwei Mischstufen in einem Innenmischer und einer abschließenden Mischstufe auf einer Walze, oder durch einen zweistufigen Mischprozess, bei dem die 1. Mischstufe in einem Innenmischer und die 2. Mischstufe auf einer Walze erfolgt, oder durch einen zweistufigen Mischprozess, bei dem beide Mischstufen in einem Innenmischer erfolgen, wobei die Mischung vor Zugabe derjenigen Komponenten, die bei dreistufigem Mischprozess auf der Walze zugegeben werden, auf Temperaturen < 120°C, vorzugsweise < 110°C abgekühlt wird.

17. Verfahren zur Herstellung von Vulkanisaten, **dadurch gekennzeichnet, dass** man vulkanisierbare Kautschukmischungen nach einem der Ansprüche 1 bis 15 einer Vernetzungsreaktion unterwirft, bevorzugt bei einer Temperatur im Bereich von 100 bis 250°C, insbesondere von 130 bis 180°C, unter einem Druck im Bereich von 1 bis 200 bar.

18. Verfahren nach Anspruch 17, **dadurch gekennzeichnet, dass** die Vernetzung im Rahmen eines Formgebungsprozesses stattfindet.

19. Vulkanisate erhältlich durch das Verfahren nach Anspruch 17 oder 18.

20. Verwendung von vulkanisierbaren Kautschukmischungen nach einem der Ansprüche 1 bis 15 zur Herstellung von Luftreifen, insbesondere Winterreifen, Reifenbauteilen, insbesondere Reifenlaufflächen, insbesondere Laufflächen von Winterreifen, Subtreads, Karkassen, Seitenwänden, verstärkten Seitenwänden für Notlaufreifen und Apexmischungen sowie für die Herstellung von technischen Gummiartikeln, bevorzugt Dämpfungselementen, Walzenbelägen, Belägen von Förderbändern, Riemen, Spinnkopsen, Dichtungen, Golfballkernen und Schuhsohlen.

Europäisches Patentamt
European Patent Office
Office européen des brevets

# EUROPÄISCHER RECHERCHENBERICHT

Nummer der Anmeldung
EP 12 15 4896

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 1 600 472 A1 (RHEIN CHEMIE RHEINAU GMBH [DE]) 30. November 2005 (2005-11-30)<br>* Beispiele 3-5 *<br>----- | 1-20 | INV.<br>C08K5/00<br>C08K5/548<br>C08L7/00<br>C08L9/00<br>B60C1/00<br>C08L19/00<br>C08L9/06 |
| Y | EP 2 236 314 A1 (CONTINENTAL REIFEN DEUTSCHLAND [DE])<br>6. Oktober 2010 (2010-10-06)<br>* Absätze [0016] - [0020] *<br>----- | 1-20 | |
| A,D | DE 101 29 058 A1 (BAYER AG [DE])<br>19. Dezember 2002 (2002-12-19)<br>* das ganze Dokument *<br>----- | 1-20 | |
| A | DATABASE WPI<br>Week 201068<br>Thomson Scientific, London, GB;<br>AN 2010-L05839<br>XP002673944,<br>& CN 101 792 545 A (HANZHOU ZHONGCE RUBBER CO LTD) 4. August 2010 (2010-08-04)<br>* Zusammenfassung *<br>----- | 1-20 | RECHERCHIERTE SACHGEBIETE (IPC)<br>C08K<br>C08L<br>B60C |

Der vorliegende Recherchenbericht wurde für alle Patentansprüche erstellt

1

| Recherchenort | Abschlußdatum der Recherche | Prüfer |
|---|---|---|
| Den Haag | 22. Mai 2012 | Scheunemann, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 12 15 4896

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2012

| Im Recherchenbericht angeführtes Patentdokument | Datum der Veröffentlichung | Mitglied(er) der Patentfamilie | Datum der Veröffentlichung |
|---|---|---|---|
| EP 1600472 A1 | 30-11-2005 | AT 427977 T | 15-04-2009 |
| | | BR PI0501781 A | 24-01-2006 |
| | | CN 1702106 A | 30-11-2005 |
| | | DE 102004026317 A1 | 15-12-2005 |
| | | EP 1600472 A1 | 30-11-2005 |
| | | JP 2005336483 A | 08-12-2005 |
| | | KR 20060048104 A | 18-05-2006 |
| | | US 2005267247 A1 | 01-12-2005 |
| EP 2236314 A1 | 06-10-2010 | AT 538948 T | 15-01-2012 |
| | | EP 2236314 A1 | 06-10-2010 |
| DE 10129058 A1 | 19-12-2002 | BR 0210916 A | 08-06-2004 |
| | | CA 2450694 A1 | 27-12-2002 |
| | | DE 10129058 A1 | 19-12-2002 |
| | | EP 1401951 A1 | 31-03-2004 |
| | | JP 4173092 B2 | 29-10-2008 |
| | | JP 2004530760 A | 07-10-2004 |
| | | MX PA03011457 A | 01-07-2004 |
| | | TW 575622 B | 11-02-2004 |
| | | US 2003092827 A1 | 15-05-2003 |
| | | WO 02102890 A1 | 27-12-2002 |
| CN 101792545 A | 04-08-2010 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009077231 A1
- WO 2009059849 A1
- WO 20110365440 A
- WO 2010136989 A1
- EP 1088685 A1
- DE 2447614
- DE 102009033611 A1
- EP 0575851 A1
- EP 1063259 A1
- US 6809146 B
- EP 2311907 A1
- EP 1935668 A1
- EP 1241219 A1
- DE 2034989 C2
- JP 56104906 A
- WO 0238635 A1
- WO 0248218 A1
- EP 2186651 A
- EP 0735088 A
- EP 0810258 A
- US 5684171 A
- US 5684172 A
- EP 1298166 A
- EP 1245630 A


### In der Beschreibung aufgeführte Nicht-Patentliteratur


- **HOUBEN-WEYL.** Methoden der Organischen Chemie. Thieme Verlag, 1987, vol. E 20, 114-134
- Ullmann's Encyclopedia of Industrial Chemistry. Rubber 3. Synthetic. VCH Verlagsgesellschaft mbH, 1993, vol. A 23, 240-364
- **HOUBEN-WEYL.** Methoden der Organischen Chemie. Thieme Verlag, 1987, vol. E 20, 798-812
- Ullmann's Encyclopedia of Industrial Chemistry. Rubber 3. Synthetic. VCH Verlagsgesellschaft mbH, 1993, vol. A 23, 239-364
- Ullmann's Encyclopedia of Industrial Chemistry. vol. 31, 345-355
- **W. BARDENDRECHT ; L.T. LEES.** Ullmanns Encyclopädie der Technischen Chemie. Verlag Chemie, 1976, vol. 12, 525-538
- Ullmann's Encyclopedia of Industrial Chemistry. vol. 13, 75-108
- Ullmann's Encyclopedia of Industrial Chemistry. VCH Verlagsgesellschaft mbH, 1993, vol. D-69451, 635-647
- ULLMANN'S ENCYCLOPEDIA OF INDUSTRIAL CHEMISTRY. 635-647
- ULLMANN'S ENCYCLOPEDIA OF INDUSTRIAL CHEMISTRY. 642-647
- Römpp Chemie Lexikons. Georg Thieme Verlag, August 2004
- **W. HOFFMANN.** Kautschuktechnologie. Gentner Verlag, 1980, 254 ff
- **J. SCHNETGER.** Lexikon der Kautschuktechnik. Hüthig Verlag, 2004, 514-515537-539586-589
- Chemicals and Additives. Ullmann's Encyclopedia of Industrial Chemistry. VCH Verlagsgesellschaft mbH, 1993, vol. A 23, 366-417
- **J. SCHNETGER.** Lexikon der Kautschuktechnik. Hüthig Verlag, 2004, 590